(19) **Europäisches Patentamt / European Patent Office / Office européen des brevets**

(11) **EP 4 175 386 A1**

(12) # EUROPEAN PATENT APPLICATION
published in accordance with Art. 153(4) EPC

(43) Date of publication:
**03.05.2023 Bulletin 2023/18**

(21) Application number: **22806516.5**

(22) Date of filing: **27.04.2022**

(51) International Patent Classification (IPC):
***H04W 72/04*** (2023.01)

(52) Cooperative Patent Classification (CPC):
**H04W 72/04; H04W 72/12**

(86) International application number:
**PCT/CN2022/089614**

(87) International publication number:
**WO 2022/237547 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.05.2021 CN 202110507949**

(71) Applicant: **Huawei Technologies Co., Ltd.**
**Longgang**
**Shenzhen, Guangdong 518129 (CN)**

(72) Inventors:
• **LIU, Zhe**
**Shenzhen, Guangdong 518129 (CN)**
• **YU, Zheng**
**Shenzhen, Guangdong 518129 (CN)**

(74) Representative: **Roth, Sebastian**
**Mitscherlich PartmbB**
**Patent- und Rechtsanwälte**
**Sonnenstraße 33**
**80331 München (DE)**

(54) **INFORMATION TRANSMISSION METHOD AND APPARATUS**

(57)    This application provides an information transmission method and apparatus. The information transmission method includes: A terminal device determines a target offset parameter, an uplink control channel resource index, a physical resource block offset parameter, and a number of initial cyclic shift indexes included in an initial cyclic shift index set. The terminal device determines, based on the target offset parameter, the uplink control channel resource index, the physical resource block offset parameter, and the number of initial cyclic shift indexes included in the initial cyclic shift index set, a resource block index for uplink control channel transmission. The terminal device sends uplink control information on a resource associated with the resource block index. According to the information transmission method and apparatus provided in this application, resource fragmentation can be avoided, a limitation on resource scheduling of a network device can be reduced, and flexibility of resource allocation can be improved.

200

A terminal device determines a target offset parameter, an uplink control channel resource index, a physical resource block offset parameter, and a number of initial cyclic shift indexes included in an initial cyclic shift index set — S201

The terminal device determines, based on the target offset parameter, the uplink control channel resource index, the physical resource block offset parameter, and the number of initial cyclic shift indexes included in the initial cyclic shift index set, a resource block index for uplink control channel transmission — S202

The terminal device sends uplink control information on a resource associated with the resource block index — S203

FIG. 5

**Description**

This application claims priority to Chinese Patent Application No. 202110507949.0, filed with the China National Intellectual Property Administration on May 10, 2021 and entitled "INFORMATION TRANSMISSION METHOD AND APPARATUS", which is incorporated herein by reference in its entirety.

**TECHNICAL FIELD**

This application relates to the communication field, and more specifically, to an information transmission method and an apparatus.

**BACKGROUND**

Terminal devices with different capabilities have different requirements for a mobile communication system. To meet requirements such as low costs and long standby time, a reduced-capability terminal device usually supports a channel bandwidth smaller than that of a normal terminal device. For example, in a frequency range 1 of a new radio (new radio, NR) system, an enhanced mobile broadband (enhanced mobile broadband, eMBB) terminal device generally supports a maximum channel bandwidth of 100 MHz. However, the reduced-capability terminal device may support a maximum channel bandwidth of 5 MHz, 20 MHz, or 40 MHz. Complexity and costs of the terminal device can be reduced by reducing the channel bandwidth.

The terminal devices with different capabilities coexist in a same communication system. Therefore, how to better support coexistence of these terminal devices becomes an urgent technical problem to be resolved.

**SUMMARY**

This application provides an information transmission method and apparatus, to avoid resource fragmentation, reduce a limitation on resource scheduling, and improve flexibility of resource allocation.

According to a first aspect, an information transmission method is provided. The method includes: A terminal device determines a target offset parameter, an uplink control channel resource index, a physical resource block offset parameter, and a number of initial cyclic shift indexes included in an initial cyclic shift index set. The terminal device determines, based on the target offset parameter, the uplink control channel resource index, the physical resource block offset parameter, and the number of initial cyclic shift indexes included in the initial cyclic shift index set, a resource block index for uplink control channel transmission. The terminal device sends, on a resource associated with the resource block index, uplink control information to a network device.

According to the information transmission method in this embodiment of this application, the terminal device determines, based on the target offset parameter, the uplink control channel resource index, the physical resource block offset parameter, and the number of initial cyclic shift indexes included in the initial cyclic shift index set, the resource block index for uplink control channel transmission. The resource associated with the resource block index does not cause resource fragmentation of another terminal device, and does not cause an available resource of the another terminal device to be split into several fragmented frequency domain resources. This does not limit resource scheduling of the another terminal device. According to the information transmission method in this application, terminal devices with different capabilities can better coexist in a same communication system.

With reference to the first aspect, in some implementations of the first aspect, the uplink control information is transmitted with frequency hopping. That the terminal device determines the resource block index includes: The terminal device determines, based on the target offset parameter, the uplink control channel resource index, the physical resource block offset parameter, and the number of initial cyclic shift indexes included in the initial cyclic shift index set, a first resource block index corresponding to a $p^{th}$ hop of transmission with frequency hopping of the uplink control information, where p is a positive integer; and/or the terminal device determines, based on the target offset parameter, the uplink control channel resource index, the physical resource block offset parameter, the number of initial cyclic shift indexes included in the initial cyclic shift index set, and a first frequency range, a second resource block index corresponding to a $q^{th}$ hop of transmission with frequency hopping of the uplink control channel data, where q is a positive integer. The resource associated with the resource block index falls within the first frequency range.

It should be noted that the information transmission method in this embodiment of this application may be applied to uplink control information transmission in a scenario with frequency hopping, or may be applied to uplink control information transmission in a scenario without frequency hopping. For example, the scenario with frequency hopping includes the $p^{th}$ hop and the $q^{th}$ hop. The target offset parameter may include a first sub-offset parameter and a second sub-offset parameter. The first sub-offset parameter and the second sub-offset parameter may be respectively used to determine locations of physical uplink control channel resources corresponding to the $p^{th}$ hop and the $q^{th}$ hop, and may be referred to as a first sub-frequency domain resource and a second sub-frequency domain resource. A first terminal device then sends the uplink control information by using the first sub-frequency domain resource and the second sub-frequency domain resource. The first sub-frequency domain resource and the second sub-frequency domain resource do not limit resource scheduling in an available frequency range of another terminal device. This reduces a limitation on resource scheduling of the another terminal device, and improves flexibility of resource allocation.

It should be noted that the first frequency range is greater than a maximum channel bandwidth supported by the first terminal device.

With reference to the first aspect, in some implementations of the first aspect, the target offset parameter includes a first sub-offset parameter and a second sub-offset parameter. The first sub-offset parameter is used to determine the first resource block index. The second sub-offset parameter is used to determine the second resource block index.

It should be noted that, in this implementation, the terminal device may further adjust the target offset parameter based on a number of uplink control channel resources multiplexed by each resource block in uplink transmission of another terminal device that has a resource conflict with the terminal device, and a number of cyclic shifts corresponding to an uplink control channel resource set. This avoids a case in which the resource associated with the resource block index conflicts with a resource used by the another terminal device to transmit the uplink control information. For example, the target offset parameter may be adjusted, so that the resource associated with the resource block index is allocated to a frequency location adjacent to the resource used by the another terminal device to transmit the uplink control information.

It should be noted that the first sub-offset parameter and the second sub-offset parameter may be the same or may be different.

In a possible implementation, the first sub-offset parameter and the second sub-offset parameter are determined by the first terminal device based on first configuration information sent by the network device.

In another possible implementation, the first sub-offset parameter is determined by the first terminal device based on the first configuration information. The second sub-offset parameter (that is, $D_2$) is determined by the first terminal device based on first sub-offset parameter (that is, $D_1$) and a number of resource blocks (that is, $N_{size}$) included in the first frequency range.

By way of example and not limitation, the second sub-offset parameter $D_2$ may be determined in a manner:

$$D_2 = N_{size} + D_1 - N_{BWP}^{size}.$$ $N_{BWP}^{size}$ is a number of resource blocks included in a second frequency range.

With reference to the first aspect, in some implementations of the first aspect, p = 1 and q = 2; or p = 2 and q = 1.

With reference to the first aspect, in some implementations of the first aspect, the first resource block index, the target offset parameter, the uplink control channel resource index, the physical resource block offset parameter, and the number of initial cyclic shift indexes included in the initial cyclic shift index set satisfy the following correspondence:

$$X_1 = RB_{BWP}^{offset} + \left\lfloor r_{PUCCH} / N_{CS} \right\rfloor + D,$$

or

$$X_1 = RB_{BWP}^{offset} + \left\lfloor r_{PUCCH} / N_{CS} \right\rfloor + D_1.$$

X, is the first resource block index, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, $D$ is the target offset parameter, $D_1$ is the first sub-offset parameter used to determine the first resource block index, floor($r_{PUCCH}$/8) indicates rounding down a result of $r_{PUCCH}$/8, and $\left\lfloor r_{PUCCH} / N_{CS} \right\rfloor$ indicates rounding down a result of $r_{PUCCH} / N_{CS}$.

With reference to the first aspect, in some implementations of the first aspect, the second resource block index, the target offset parameter, the uplink control channel resource index, the physical resource block offset parameter, and the number of initial cyclic shift indexes included in the initial cyclic shift index set satisfy the following correspondence:

$$X_2 = N_{size} - 1 - RB_{BWP}^{offset} - \left\lfloor r_{PUCCH} / N_{CS} \right\rfloor + D,$$

or

$$X_2 = N_{BWP}^{size} - 1 - RB_{BWP}^{offset} - \lfloor r_{PUCCH} / N_{CS} \rfloor + D,$$

or

$$X_2 = N_{BWP}^{size} - 1 - RB_{BWP}^{offset} - \lfloor r_{PUCCH} / N_{CS} \rfloor + D_2.$$

$X_2$ is the second resource block index, $N_{size}$ is a number of resource blocks included in the first frequency range, $N_{BWP}^{size}$ is a number of resource blocks included in a second frequency range, the second frequency range is less than or equal to a maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, $D$ is the target offset parameter, $D_2$ is the second sub-offset parameter used to determine the second resource block index, and $\lfloor r_{PUCCH} / N_{CS} \rfloor$ indicates rounding down a result of $r_{PUCCH} / N_{CS}$.

In this implementation, if the first sub-offset parameter is the same as the second sub-offset parameter, both the first sub-offset parameter and the second sub-offset parameter may be represented by the target offset parameter D. If the first sub-offset parameter is different from the second sub-offset parameter, the first sub-offset parameter and the second sub-offset parameter may be respectively represented by $D_1$ and $D_2$. Alternatively, if the first sub-offset parameter $D_1$ is represented by the target offset parameter D, the second sub-offset parameter may be correspondingly represented as $D_2 = N_{size} + D_1 - N_{BWP}^{size}$. $N_{BWP}^{size}$ is the number of resource blocks included in the second frequency range. The second frequency range is less than or equal to the channel bandwidth supported by the terminal device.

It should be noted that manners of determining the target offset parameter include but are not limited to the following several manners: (1) The terminal device determines the target offset parameter based on a first location and a second location, where the first location is a location of a $y^{th}$ resource block index in the first frequency range, the second location is a location of a resource block whose resource block index is z and that falls within the second frequency range, y and z are non-negative integers, the first frequency range is greater than the maximum channel bandwidth supported by the terminal device, and the second frequency range is less than or equal to the maximum channel bandwidth supported by the terminal device. Optionally, y and z may be the same, for example, y = z = 0. (2) The terminal device determines the target offset parameter based on first information, where the first information is received by the terminal device from the network device. For example, the first information is a master information block (master information block, MIB), a system information block 1 (system information block 1, SIB 1), a field in the SIB 1, downlink control information for scheduling a PDSCH carrying the SIB 1, or a field in the downlink control information for scheduling the PDSCH carrying the SIB 1. (3) The target offset parameter is a predefined parameter. For example, the terminal device determines the target offset parameter in a predefined manner. The target offset parameter may be a predefined value. (4) The terminal device (which may be referred to as a terminal device #1) determines the target offset parameter according to a predefined rule, for example, determines the target offset parameter based on a frequency location (an example of the predefined rule) occupied by a PUCCH resource set configured by another terminal device (which may be referred to as a terminal device #2) that has a resource conflict, so that a frequency domain resource of a PUCCH of the terminal device #1 is at a frequency location adjacent to a frequency domain resource of a PUCCH of the terminal device #2.

With reference to the first aspect, in some implementations of the first aspect, a value of the target offset parameter is an integer less than 0. Alternatively, a value of the target offset parameter is an integer multiple of K, where K = 2, 3, or 4.

With reference to the first aspect, in some implementations of the first aspect, the terminal device sends the uplink control information without frequency hopping on the resource associated with the resource block index.

With reference to the first aspect, in some implementations of the first aspect, before the terminal device determines the target offset parameter, the method further includes: The terminal device determines that a subcarrier spacing S corresponding to the terminal device and a number L of symbols of an uplink control channel resource meet a first preset condition.

By way of example and not limitation, the first preset condition may be one or more of the following conditions: (1) A minimum value of L is greater than or equal to 4. (2) A minimum value of L is determined based on S. (3) A value of L falls within a first value range, when the value of L falls within the first value range, an uplink control channel is transmitted without frequency hopping, or the uplink control channel is transmitted with frequency hopping, and frequency tuning is not needed between two adjacent hops of transmission with frequency hopping. By way of example and not limitation, the first value range may include {2, 4,10} . (4) A value of L falls within a second value range, when the value of L falls within the second value range, an uplink control channel is transmitted with frequency hopping, and frequency tuning is needed between two adjacent hops of transmission with frequency hopping. By way of example and not limitation, the second value range may include {14} . (5) A value of S falls within a third value range, when the value of S falls within the third value range, an uplink control channel is transmitted without frequency hopping, or the uplink control channel is transmitted with frequency hopping, and frequency tuning is not needed between two adjacent hops of transmission with frequency hopping. By way of example and not limitation, the third value range may include 15 kHz, 30 kHz, 60 kHz, or greater than 60 kHz. (6) A value of S falls within a fourth value range, when the value of S falls within the fourth value range, an uplink control channel can be transmitted with frequency hopping, and frequency tuning is needed between two adjacent hops of transmission with frequency hopping. By way of example and not limitation, the fourth value range may include 15 kHz, 30 kHz, or 60 kHz.

In this implementation, the terminal device performs frequency hopping outside the second frequency range only when the subcarrier spacing S and/or the number L of symbols used for uplink control channel transmission meet/meets the first preset condition, or the terminal device does not perform frequency hopping outside the second frequency range when S and L do not meet the first preset condition. In other words, the terminal device performs only frequency hopping within the second frequency range. This reduces impact of frequency tuning (or referred to as readjustment) time on performance of a frequency domain resource that has a small number L of symbols and corresponds to the terminal device.

According to a second aspect, an information transmission method is provided. The method includes: A first terminal device (corresponding to the foregoing terminal device) receives first configuration information. The first configuration information indicates the first terminal device to send uplink control information by using at least one first frequency domain resource. The first frequency domain resource falls within a first frequency range. The first terminal device sends the uplink control information based on the first configuration information.

It should be noted that before the first terminal device receives the first configuration information, the method further includes: The first terminal device receives second configuration information. The second configuration information indicates a second frequency range allocated by a network device to the first terminal device. The second frequency range includes at least one second frequency domain resource. The second frequency domain resource is used by the first terminal device to send the uplink control information. The second frequency domain resource further falls within a third frequency domain range allocated by the network device to a second terminal device (which corresponds to another terminal device that has a resource conflict with the foregoing terminal device). It should be noted that the first frequency domain resource falls outside the third frequency domain range. Alternatively, the first frequency domain resource is located at an edge part of the third frequency domain range.

In a possible implementation, the first frequency domain resource may be located at two ends of a carrier, or may be adjacent to a resource (which may be referred to as a third frequency domain resource) used by the second terminal device to transmit the uplink control information.

In a possible implementation, the uplink control information is used by the terminal device to access the network device. For example, the uplink control information may be a hybrid automatic repeat request message fed back by the terminal device for a contention resolution message sent by the network device in a random access process.

According to the information transmission method in this embodiment of this application, the second frequency domain resource that is determined by the first terminal device based on the second configuration information and that is used to send the uplink control information belongs to the third frequency domain range allocated by the network device to the second terminal device. The second frequency domain resource causes frequency domain fragmentation in the third frequency domain range, and the frequency domain resource is split into several fragmented frequency domain resources. This limits resource scheduling of the second terminal device. On this basis, the first terminal device may determine, based on the first configuration information, the first frequency domain resource used to send the uplink control information. The first frequency domain resource falls outside the third frequency domain range. Alternatively, the first frequency domain resource is located at the edge part of the third frequency domain range. The first frequency domain resource does not limit use of a resource in the third frequency domain range of the second terminal. This improves flexibility of resource scheduling.

It should be noted that the first frequency range is greater than a maximum channel bandwidth supported by the first terminal. The second frequency range is less than or equal to the maximum channel bandwidth supported by the first terminal. The third frequency range is less than or equal to a maximum channel bandwidth supported by the second terminal.

With reference to the second aspect, in some implementations of the second aspect, the first configuration information specifically indicates a target offset parameter. The target offset parameter is an offset parameter between the first frequency domain resource and the second frequency domain resource.

According to the information transmission method in this embodiment of this application, the first terminal device may determine the offset parameter between the first frequency domain resource and the second frequency domain resource based on the first configuration information, determine a location of the first frequency domain resource based on the target offset parameter and the second frequency domain resource, and then send the uplink control information by using the first frequency domain resource. This reduces a limitation on resource scheduling of the second terminal device, and improves flexibility of resource allocation.

With reference to the second aspect, in some implementations of the second aspect, in a scenario in which the uplink control information is transmitted with frequency hopping, the target offset parameter includes a first sub-offset parameter and a second sub-offset parameter. The first frequency domain resource includes a first sub-frequency domain resource and a second sub-frequency domain resource. The method includes: The first terminal device determines the first sub-offset parameter and the second sub-offset parameter. The first terminal device respectively determines the first sub-frequency domain resource and the second sub-frequency domain resource based on the first sub-offset parameter and the second sub-offset parameter. The first sub-frequency domain resource and the second sub-frequency domain resource fall outside the third frequency domain range. Alternatively, the first sub-frequency domain resource and the second sub-frequency domain resource are located at the edge part of the third frequency domain range.

It should be noted that the information transmission method in this embodiment of this application may be applied to uplink control information transmission in a scenario with frequency hopping, or may be applied to uplink control information transmission in a scenario without frequency hopping. For example, the scenario with frequency hopping includes a first hop and a second hop. The target offset parameter may include the first sub-offset parameter and the second sub-offset parameter. The first sub-offset parameter and the second sub-offset parameter may be respectively used to determine locations of physical uplink control channel resources corresponding to the first hop and the second hop, that is, the first sub-frequency domain resource and the second sub-frequency domain resource. The first terminal device then sends the uplink control information by using the first sub-frequency domain resource and the second sub-frequency domain resource. The first sub-frequency domain resource and the second sub-frequency domain resource no longer limit resource scheduling in the third frequency range. This reduces a limitation on resource scheduling of the second terminal device, and improves flexibility of resource allocation.

With reference to the second aspect, in some implementations of the second aspect, the first configuration information includes a number of RBs included in the first frequency range and indication information of the first sub-offset parameter. The first sub-frequency domain resource and the second sub-frequency domain resource fall within the first frequency range. The method includes: The first terminal device determines the first sub-offset parameter based on the first configuration information. The first terminal device determines the second sub-offset parameter based on the first sub-offset parameter and the number of RBs included in the first frequency domain range. The first terminal device respectively determines the first sub-frequency domain resource and the second sub-frequency domain resource based on the first sub-offset parameter and the second sub-offset parameter. The first terminal device sends the uplink control information by using the first sub-frequency domain resource and the second sub-frequency domain resource.

It should be noted that the first sub-offset parameter and the second sub-offset parameter may be the same or may be different.

Optionally, if the first sub-offset parameter is the same as the second sub-offset parameter, only one offset parameter may be used for indication, to save resources.

In a possible implementation, the first sub-offset parameter and the second sub-offset parameter are determined by the first terminal device based on the first configuration information.

In another possible implementation, the first sub-offset parameter is determined by the first terminal device based on the first configuration information. The second sub-offset parameter (that is, $D_2$) is determined by the first terminal device based on first sub-offset parameter (that is, $D_1$) and the number of resource blocks (that is, $N_{size}$) included in the first frequency range.

By way of example and not limitation, the second sub-offset parameter $D_2$ may be determined in a manner:

$$D_2 = N_{size} + D_1 - N_{BWP}^{size}$$

. $N_{BWP}^{size}$ is a number of resource blocks included in the second frequency range.

In a possible implementation, the first terminal device may determine, according to the following formula and based on the target offset parameter, a resource block index (corresponding to a first resource block index) (denoted as $X_1$) corresponding to the first sub-frequency domain resource:

$$X_1 = RB_{BWP}^{offset} + \lfloor r_{PUCCH} / N_{CS} \rfloor + D,$$

or

$$X_1 = RB_{BWP}^{offset} + \left\lfloor r_{PUCCH} / N_{CS} \right\rfloor + D_1.$$

$X_1$ is the first resource block index, $RB_{BWP}^{offset}$ is a physical resource block offset parameter, $r_{PUCCH}$ is an uplink control channel resource index, $N_{CS}$ is a number of initial cyclic shift indexes included in an initial cyclic shift index set, $D$ is the target offset parameter, $D_1$ is the first sub-offset parameter, floor($r_{PUCCH}$/8) indicates rounding down a result of $r_{PUCCH}$/8, and $\left\lfloor r_{PUCCH} / N_{CS} \right\rfloor$ indicates rounding down a result of $r_{PUCCH} / N_{CS}$.

In a possible implementation, the first terminal device may determine, according to the following formula and based on the target offset parameter, a resource block index (corresponding to a second resource block index) (denoted as $X_2$) corresponding to the second sub-frequency domain resource:

$$X_2 = N_{size} - 1 - RB_{BWP}^{offset} - \left\lfloor r_{PUCCH} / N_{CS} \right\rfloor + D,$$

or

$$X_2 = N_{BWP}^{size} - 1 - RB_{BWP}^{offset} - \left\lfloor r_{PUCCH} / N_{CS} \right\rfloor + D,$$

or

$$X_2 = N_{BWP}^{size} - 1 - RB_{BWP}^{offset} - \left\lfloor r_{PUCCH} / N_{CS} \right\rfloor + D_2.$$

$X_2$ is the second resource block index, $N_{size}$ is the number of resource blocks included in the first frequency range, $N_{BWP}^{size}$ is the number of resource blocks included in the second frequency range, the second frequency range is less than or equal to a maximum channel bandwidth supported by the terminal device, $RB_{BWP}^{offset}$ is a physical resource block offset parameter, $r_{PUCCH}$ is an uplink control channel resource index, $N_{CS}$ is a number of initial cyclic shift indexes included in an initial cyclic shift index set, $D$ is the target offset parameter, $D_2$ is the second sub-offset parameter used to determine the second resource block index, and $\left\lfloor r_{PUCCH} / N_{CS} \right\rfloor$ indicates rounding down a result of $r_{PUCCH} / N_{CS}$.

With reference to the second aspect, in some implementations of the second aspect, the first configuration information includes the indication information of the first sub-offset parameter and indication information of the second sub-offset parameter. That the first terminal device respectively determines the first sub-frequency domain resource and the second sub-frequency domain resource based on the first sub-offset parameter and the second sub-offset parameter includes: The first terminal device determines the first sub-offset parameter and the second sub-offset parameter based on the first configuration information. The first terminal device respectively determines the first sub-frequency domain resource and the second sub-frequency domain resource based on the first sub-offset parameter and the second sub-offset parameter. The first terminal device sends the uplink control information by using the first sub-frequency domain resource and the second sub-frequency domain resource.

In this implementation, the first sub-offset parameter and the second sub-offset parameter may be the same or may be different. If the first sub-offset parameter is different from the second sub-offset parameter, the first configuration information includes the indication information of the first sub-offset parameter and the indication information of the second sub-offset parameter. The first terminal device respectively determines the first sub-offset parameter and the second sub-offset parameter based on the indication information of the first sub-offset parameter and the indication information of the second sub-offset parameter, and then determines the first sub-frequency domain resource and the second sub-frequency domain resource based on the first sub-offset parameter and the second sub-offset parameter. The first terminal device then sends the uplink control information by using the first sub-frequency domain resource and the second sub-frequency domain resource. The first sub-frequency domain resource and the second sub-frequency domain resource no longer limit resource scheduling in the third frequency range. This reduces a limitation on resource scheduling of the second terminal device, and improves flexibility of resource allocation.

Optionally, if the first sub-offset parameter is the same as the second sub-offset parameter, only one piece of indication information may be used for indication, to reduce resource overheads.

With reference to the second aspect, in some implementations of the second aspect, before the first terminal device determines the target offset parameter, the method further includes: The first terminal device determines a first parameter. The first parameter is used to determine the target offset parameter. The first parameter is related to a number of uplink control channel resources multiplexed by each resource block in uplink transmission or a number of cyclic shifts corresponding to an uplink control channel resource set. That the first terminal device determines the target offset parameter includes: The first terminal device determines the target offset parameter based on the first parameter.

In this implementation, the first terminal device may further adjust the target offset parameter based on the number of uplink control channel resources multiplexed by each resource block in uplink transmission or the number of cyclic shifts corresponding to the uplink control channel resource set, and then determine the first frequency domain resource based on the target offset parameter. This avoids a conflict between the first frequency domain resource and the resource (which may be referred to as the third frequency domain resource) that is used by the second terminal device to transmit the uplink control information and that falls within the third frequency range. For example, the first frequency domain resource may be allocated to a frequency location adjacent to the third frequency domain resource based on the first parameter.

With reference to the second aspect, in some implementations of the second aspect, before the first terminal device determines the target offset parameter, the method further includes: The first terminal device determines that a subcarrier spacing S corresponding to the first terminal device and a number L of symbols used for uplink control channel transmission meet a first preset condition.

By way of example and not limitation, the first preset condition may be one or more of the following conditions: (1) A minimum value of L is greater than or equal to 4. (2) A minimum value of L is determined based on S. (3) A value of L falls within a first value range, when the value of L falls within the first value range, an uplink control channel is transmitted without frequency hopping, or the uplink control channel is transmitted with frequency hopping, and frequency tuning is not needed between two adjacent hops of transmission with frequency hopping. By way of example and not limitation, the first value range may include {2, 4,10} . (4) A value of L falls within a second value range, when the value of L falls within the second value range, an uplink control channel is transmitted with frequency hopping, and frequency tuning is needed between two adjacent hops of transmission with frequency hopping. By way of example and not limitation, the second value range may include {14} . (5) A value of S falls within a third value range, when the value of S falls within the third value range, an uplink control channel is transmitted without frequency hopping, or the uplink control channel is transmitted with frequency hopping, and frequency tuning is not needed between two adjacent hops of transmission with frequency hopping. By way of example and not limitation, the third value range may include 15 kHz, 30 kHz, 60 kHz, or greater than 60 kHz. (6) A value of S falls within a fourth value range, when the value of S falls within the fourth value range, an uplink control channel can be transmitted with frequency hopping, and frequency tuning is needed between two adjacent hops of transmission with frequency hopping. By way of example and not limitation, the fourth value range may include 15 kHz, 30 kHz, or 60 kHz.

In this implementation, the first terminal device performs frequency hopping outside the second frequency range only when the subcarrier spacing S and/or the number L of symbols used for uplink control channel transmission meet/meets the first preset condition. The first terminal device does not perform frequency hopping outside the second frequency range when S and L do not meet the first preset condition. In other words, the first terminal device performs only frequency hopping within the second frequency range. This reduces impact of re-adjustment time on performance of the first frequency domain resource that has a small number L of symbols and corresponds to the first terminal device.

According to a third aspect, an information transmission method is provided. The method includes: A terminal device determines a subcarrier spacing S and/or a number L of symbols used for uplink control channel transmission. If L and/or S meet/meets at least one of the following conditions: (1) a minimum value of L is greater than or equal to 4; (2) a minimum value of L is determined based on S; (3) a value of L falls within a first value range, an uplink control channel is transmitted without frequency hopping within the first value range, or the uplink control channel is transmitted with frequency hopping within the first value range, and frequency tuning is not needed between two adjacent hops of transmission with frequency hopping; (4) a value of L falls within a second value range, an uplink control channel is transmitted with frequency hopping within the second value range, and frequency tuning is needed between two adjacent hops of transmission with frequency hopping; (5) a value of S falls within a third value range, an uplink control channel is transmitted without frequency hopping within the third value range, or the uplink control channel is transmitted with frequency hopping within the third value range, and frequency tuning is not needed between two adjacent hops of transmission with frequency hopping; or (6) a value of S falls within a fourth value range, an uplink control channel can be transmitted with frequency hopping within the fourth value range, and frequency tuning is needed between two adjacent hops of transmission with frequency hopping, the terminal device transmits the uplink control channel.

In a possible implementation, if the condition (1) is met, two hops of PUCCH transmission sent by the terminal device fall outside the second frequency range. For example, when L = 10, the two hops of PUCCH transmission sent by the terminal device fall outside the second frequency range. If the condition (2) is met, two hops of PUCCH transmission sent by the terminal device fall outside the second frequency range or within the second frequency range. For example, when S = 15 kHz, the minimum value of L is 10, to be specific, the two hops of PUCCH transmission sent by the terminal device fall outside the second frequency range. For example, when S = 30 kHz, the minimum value of L is 14, to be specific, the two hops of PUCCH transmission sent by the terminal device fall outside the second frequency range. For example, when S = 60 kHz, a PUCCH sent by the terminal device is transmitted without frequency hopping, or the PUCCH is transmitted with frequency hopping, and two adjacent hops of transmission with frequency hopping fall within the second frequency range. If the condition (3) is met, a PUCCH sent by the terminal device is transmitted without frequency hopping, or is transmitted with frequency hopping, and two hops fall within the second frequency range. The first value range may be that L is less than or equal to 4. If the condition (4) is met, two hops of PUCCH transmission sent by the terminal device fall outside the second frequency range. The second value range may be that L is greater than 4, or L is greater than or equal to 10. If the condition (5) is met, a PUCCH sent by the terminal device is transmitted without frequency hopping, or is transmitted with frequency hopping, and two hops fall within the second frequency range. The third value range may be that S is greater than or equal to 60 kHz, or S is greater than 30 kHz. If the condition (6) is met, two hops of PUCCH transmission sent by the terminal device fall outside the second frequency range. The fourth value range may be that S is less than or equal to 30 kHz.

It should be noted that the conditions (1) to (6) may be combined with each other. For example, the condition (3) may be used together with the condition (5), to be specific, when the value of L falls within the first value range and S falls within the third value range, the PUCCH is transmitted without frequency hopping, or the PUCCH is transmitted with frequency hopping, frequency tuning is not needed between two adjacent hops of transmission with frequency hopping. For example, the condition (4) may be used together with the condition (6), to be specific, when the value of L falls within the second value range and S falls within the fourth value range, the PUCCH can be transmitted with frequency hopping, and frequency tuning is needed between two adjacent hops of transmission with frequency hopping.

In a possible implementation, the terminal device receives second information sent by a network device. The second information may indicate whether uplink control information of the terminal device is transmitted with frequency hopping. Optionally, if the second information indicates that the uplink control information of the terminal device is transmitted with frequency hopping, the second information may further indicate whether frequency tuning needs to be performed for transmission with frequency hopping of the uplink control information. In other words, the second information may further indicate that the uplink control information is transmitted with frequency hopping within the second frequency range, or the uplink control information is transmitted with frequency hopping outside the second frequency range.

In a possible implementation, the terminal device receives fourth information sent by the network device, where the fourth information indicates whether the terminal device performs frequency hopping; and/or the terminal device receives fifth information sent by the network device, where the fifth information indicates that the terminal device performs frequency hopping within or outside the second frequency range. For example, the fourth information and the fifth information each may be an MIB, an SIB 1, DCI for scheduling a PDSCH carrying the SIB 1, RRC signaling, or DCI.

In a possible implementation, a frequency range in which the uplink control channel is transmitted without frequency hopping, or the uplink control channel is transmitted with frequency hopping and frequency tuning is not needed between two adjacent hops of transmission with frequency hopping may be referred to as a first-type value range. For example, the first-type value range may be: S = 15 kHz and L = 2 or 4, or S = 30 kHz or 60 kHz and L = 2, 4, or 10, or S is greater than 60 kHz. A frequency range in which the uplink control channel is transmitted with frequency hopping and frequency tuning is needed between two adjacent hops of transmission with frequency hopping may be referred to as a second-type value range. For example, the second-type value range may be: S is less than 15 kHz, or S = 15 kHz and L = 10 or 14, or S is greater than 15 kHz and less than 30 kHz, or S = 30 kHz and L = 14, or S is greater than 30 kHz and less than 60 kHz, or S = 60 kHz and L = 14.

By way of example and not limitation, the first value range may include {2,4,10}. The second value range may include {14}. The third value range may include 15 kHz, 30 kHz, 60 kHz, or greater than 60 kHz. The fourth value range may include 15 kHz, 30 kHz, or 60 kHz.

According to a fourth aspect, an information transmission method is provided. The method includes: A network device sends first information to a terminal device. The first information is used by the terminal device to determine a resource block index. The first information further indicates a target offset parameter, an uplink control channel resource index, a physical resource block offset parameter, and a number of initial cyclic shift indexes included in an initial cyclic shift index set. The network device receives, on a resource associated with the resource block index, uplink control information sent by the terminal device.

With reference to the fourth aspect, in some implementations of the fourth aspect, the uplink control information is transmitted with frequency hopping. That the first information is used by the terminal device to determine the resource block index includes: The first information is used by the terminal device to determine a first resource block index corresponding to a $p^{th}$ hop of transmission with frequency hopping of the uplink control information, where p is a positive integer; and/or the first information is used by the terminal device to determine a second resource block index corresponding to a qth hop of transmission with frequency hopping of the uplink control information, where q is a positive integer.

With reference to the fourth aspect, in some implementations of the fourth aspect, the target offset parameter includes a first sub-offset parameter and a second sub-offset parameter. The first sub-offset parameter is used to determine the first resource block index. The second sub-offset parameter is used to determine the second resource block index.

With reference to the fourth aspect, in some implementations of the fourth aspect, p = 1 and q = 2; or p = 2 and q = 1.

With reference to the fourth aspect, in some implementations of the fourth aspect, the first resource block index, the target offset parameter, the uplink control channel resource index, the physical resource block offset parameter, and the number of initial cyclic shift indexes included in the initial cyclic shift index set satisfy the following correspondence:

$$X_1 = RB_{BWP}^{offset} + \left\lfloor r_{PUCCH} / N_{CS} \right\rfloor + D,$$

or

$$X_1 = RB_{BWP}^{offset} + \left\lfloor r_{PUCCH} / N_{CS} \right\rfloor + D_1.$$

$X_1$ is the first resource block index, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, $D$ is the target offset parameter, $D_1$ is the first sub-offset parameter used to determine the first resource block index, and $\left\lfloor r_{PUCCH} / N_{CS} \right\rfloor$ indicates rounding down a result of $r_{PUCCH} / N_{CS}$.

In this implementation, if the first sub-offset parameter is the same as the second sub-offset parameter, both the first sub-offset parameter and the second sub-offset parameter may be represented by the target offset parameter D. If the first sub-offset parameter is different from the second sub-offset parameter, the first sub-offset parameter and the second sub-offset parameter may be respectively represented by $D_1$ and $D_2$. Alternatively, if the first sub-offset parameter is represented by the target offset parameter D, the second sub-offset parameter may be correspondingly represented as $D_2 = N_{size} + D_1 - N_{BWP}^{size}$. $N_{BWP}^{size}$ is a number of resource blocks included in a second frequency range. The second frequency range is less than or equal to a channel bandwidth supported by the terminal device.

With reference to the fourth aspect, in some implementations of the fourth aspect, the second resource block index, the target offset parameter, the uplink control channel resource index, the physical resource block offset parameter, and the number of initial cyclic shift indexes included in the initial cyclic shift index set satisfy the following correspondence:

$$X_2 = N_{size} - 1 - RB_{BWP}^{offset} - \left\lfloor r_{PUCCH} / N_{CS} \right\rfloor + D,$$

or

$$X_2 = N_{BWP}^{size} - 1 - RB_{BWP}^{offset} - \left\lfloor r_{PUCCH} / N_{CS} \right\rfloor + D,$$

or

$$X_2 = N_{BWP}^{size} - 1 - RB_{BWP}^{offset} - \left\lfloor r_{PUCCH} / N_{CS} \right\rfloor + D_2.$$

$X_2$ is the second resource block index, $N_{size}$ is a number of resource blocks included in a first frequency range, the resource associated with the resource block index falls within the first frequency range, $N_{BWP}^{size}$ is a number of resource blocks included in a second frequency range, the second frequency range is less than or equal to a maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, $D$ is the target offset parameter, $D_2$ is the second sub-offset parameter used to determine the second resource block index, and $\lfloor r_{PUCCH} / N_{CS} \rfloor$ indicates rounding down a result of $r_{PUCCH} / N_{CS}$.

With reference to the fourth aspect, in some implementations of the fourth aspect, that the first information indicates the target offset parameter includes: The first information indicates a first location and a second location. The first location and the second location are used to determine the target offset parameter. The first location is a location of a $y^{th}$ resource block index in the first frequency range. The second location is a location of a resource block whose resource block index is z and that falls within the second frequency range. y and z are non-negative integers. The first frequency range is greater than the maximum channel bandwidth supported by the terminal device. The second frequency range is less than or equal to the maximum channel bandwidth supported by the terminal device. Alternatively, the first information includes the target offset parameter. Alternatively, the first information includes a predefined parameter, and the predefined parameter is used to determine the target offset parameter. Alternatively, the first information includes a predefined rule, and the predefined rule is used to determine the target offset parameter.

With reference to the fourth aspect, in some implementations of the fourth aspect, a value of the target offset parameter is an integer less than 0. Alternatively, a value of the target offset parameter is an integer multiple of K, where K = 2, 3, or 4.

With reference to the fourth aspect, in some implementations of the fourth aspect, before the network device sends the first information to the terminal device, the method further includes: The network device determines that a subcarrier spacing S corresponding to the terminal device and a number L of symbols of an uplink control channel resource meet a first preset condition.

By way of example and not limitation, the first preset condition may be one or more of the following conditions: (1) A minimum value of L is greater than or equal to 4. (2) A minimum value of L is determined based on S. (3) A value of L falls within a first value range, when the value of L falls within the first value range, an uplink control channel is transmitted without frequency hopping, or the uplink control channel is transmitted with frequency hopping, and frequency tuning is not needed between two adjacent hops of transmission with frequency hopping. By way of example and not limitation, the first value range may include {2, 4,10} . (4) A value of L falls within a second value range, when the value of L falls within the second value range, an uplink control channel is transmitted with frequency hopping, and frequency tuning is needed between two adjacent hops of transmission with frequency hopping. By way of example and not limitation, the second value range may include {14} . (5) A value of S falls within a third value range, when the value of S falls within the third value range, an uplink control channel is transmitted without frequency hopping, or the uplink control channel is transmitted with frequency hopping, and frequency tuning is not needed between two adjacent hops of transmission with frequency hopping. By way of example and not limitation, the third value range may include 15 kHz, 30 kHz, 60 kHz, or greater than 60 kHz. (6) A value of S falls within a fourth value range, when the value of S falls within the fourth value range, an uplink control channel can be transmitted with frequency hopping, and frequency tuning is needed between two adjacent hops of transmission with frequency hopping. By way of example and not limitation, the fourth value range may include 15 kHz, 30 kHz, or 60 kHz.

For beneficial effect of the information transmission apparatus provided in the fourth aspect, refer to beneficial effect of the first aspect and possible implementations of the first aspect. Details are not described herein again.

According to a fifth aspect, an information transmission method is provided. The method includes: A network device determines a number L of symbols and/or a subcarrier spacing S that are/is used by a terminal device to send uplink control information. If L and/or S meet/meets at least one of the following conditions: (1) a minimum value of L is greater than or equal to 4; (2) a minimum value of L is determined based on S; (3) a value of L falls within a first value range, an uplink control channel is transmitted without frequency hopping within the first value range, or the uplink control channel is transmitted with frequency hopping within the first value range, and frequency tuning is not needed between two adjacent hops of transmission with frequency hopping; (4) a value of L falls within a second value range, an uplink control channel is transmitted with frequency hopping within the second value range, and frequency tuning is needed between two adjacent hops of transmission with frequency hopping; (5) a value of S falls within a third value range, an uplink control channel is transmitted without frequency hopping within the third value range, or the uplink control channel is transmitted with frequency hopping within the third value range, and frequency tuning is not needed between two adjacent hops of transmission with frequency hopping; or (6) a value of S falls within a fourth value range, an uplink control channel can be transmitted with frequency hopping within the fourth value range, and frequency tuning is needed between two adjacent hops of transmission with frequency hopping, the network device receives the uplink control information sent by the terminal device.

In a possible implementation, if the condition (1) is met, the network device may configure two hops of PUCCH transmission sent by the terminal device to fall outside the second frequency range. For example, when L = 10, the network device may configure the two hops of PUCCH transmission sent by the terminal device to fall outside the second frequency range. If the condition (2) is met, the network device may configure two hops of PUCCH transmission sent by the terminal device to fall outside the second frequency range or within the second frequency range. For example, when S = 15 kHz, the minimum value of L is 10, to be specific, the network device may configure the two hops of PUCCH transmission sent by the terminal device to fall outside the second frequency range. For example, when S = 30 kHz, the minimum value of L is 14, to be specific, the network device may configure the two hops of PUCCH transmission sent by the terminal device to fall outside the second frequency range. For example, when S = 60 kHz, the network device may configure a PUCCH sent by the terminal device to be transmitted without frequency hopping, or the PUCCH to be transmitted with frequency hopping, and configure two adjacent hops of transmission with frequency hopping to fall within the second frequency range. If the condition (3) is met, the network device may configure a PUCCH sent by the terminal device to be transmitted without frequency hopping, or to be transmitted with frequency hopping, and configure two hops to fall within the second frequency range. The first value range may be that L is less than or equal to 4. If the condition (4) is met, the network device may configure two hops of PUCCH transmission sent by the terminal device to fall outside the second frequency range. The second value range may be that L is greater than 4, or L is greater than or equal to 10. If the condition (5) is met, the network device may configure a PUCCH sent by the terminal device to be transmitted without frequency hopping, or to be transmitted with frequency hopping, and configure two hops to fall within the second frequency range. The third value range may be that S is greater than or equal to 60 kHz, or S is greater than 30 kHz. If the condition (6) is met, the network device may configure two hops of PUCCH transmission sent by the terminal device to fall outside the second frequency range. The fourth value range may be that S is less than or equal to 30 kHz.

It should be noted that the conditions (1) to (6) may be combined with each other. For example, the condition (3) may be used together with the condition (5), to be specific, when the value of L falls within the first value range and S falls within the third value range, the PUCCH is transmitted without frequency hopping, or the PUCCH is transmitted with frequency hopping, frequency tuning is not needed between two adjacent hops of transmission with frequency hopping. For example, the condition (4) may be used together with the condition (6), to be specific, when the value of L falls within the second value range and S falls within the fourth value range, the PUCCH can be transmitted with frequency hopping, and frequency tuning is needed between two adjacent hops of transmission with frequency hopping.

In a possible implementation, the network device may send second information to the terminal device. The second information may indicate whether the uplink control information of the terminal device is transmitted with frequency hopping. Optionally, if the second information indicates that the uplink control information of the terminal device is transmitted with frequency hopping, the second information may further indicate whether frequency tuning needs to be performed for transmission with frequency hopping of the uplink control information. In other words, the second information may further indicate that the uplink control information is transmitted with frequency hopping within the second frequency range, or the uplink control information is transmitted with frequency hopping outside the second frequency range.

In a possible implementation, the network device sends fourth information to the terminal device, where the fourth information indicates whether the terminal device performs frequency hopping; and/or the network device sends fifth information to the terminal device, where the fifth information indicates that the terminal device performs frequency hopping within or outside the second frequency range. For example, the fourth information and the fifth information each may be an MIB, an SIB 1, DCI for scheduling a PDSCH carrying the SIB 1, RRC signaling, or DCI.

In a possible implementation, a frequency range in which the uplink control channel is transmitted without frequency hopping, or the uplink control channel is transmitted with frequency hopping and frequency tuning is not needed between two adjacent hops of transmission with frequency hopping may be referred to as a first-type value range. For example, the first-type value range may be: S = 15 kHz and L = 2 or 4, or S = 30 kHz or 60 kHz and L = 2, 4, or 10, or S is greater than 60 kHz. A frequency range in which the uplink control channel is transmitted with frequency hopping and frequency tuning is needed between two adjacent hops of transmission with frequency hopping may be referred to as a second-type value range. For example, the second-type value range may be: S is less than 15 kHz, or S = 15 kHz and L = 10 or 14, or S is greater than 15 kHz and less than 30 kHz, or S = 30 kHz and L = 14, or S is greater than 30 kHz and less than 60 kHz, or S = 60 kHz and L = 14.

By way of example and not limitation, the first value range may include {2,4, 10}. The second value range may include {14}. The third value range may include 15 kHz, 30 kHz, 60 kHz, or greater than 60 kHz. The fourth value range may include 15 kHz, 30 kHz, or 60 kHz.

For beneficial effect of the information transmission method provided in the fourth aspect, refer to beneficial effect of the third aspect and possible implementations of the third aspect. Details are not described herein again.

According to a sixth aspect, an information transmission apparatus is provided. The apparatus includes a processing unit, configured to determine, by using a terminal device, a target offset parameter, an uplink control channel resource index, a physical resource block offset parameter, and a number of initial cyclic shift indexes included in an initial cyclic shift index set, where the processing unit is further configured to determine, by using the terminal device, a resource block index based on the target offset parameter, the uplink control channel resource index, the physical resource block offset parameter, and the number of initial cyclic shift indexes included in the initial cyclic shift index set; and a transceiver unit, configured to send, by using the terminal device on a resource associated with the resource block index, uplink control information to a network device.

With reference to the sixth aspect, in some implementations of the sixth aspect, the uplink control information is transmitted with frequency hopping. The processing unit is configured to determine, by using the terminal device based on the target offset parameter, the uplink control channel resource index, the physical resource block offset parameter, and the number of initial cyclic shift indexes included in the initial cyclic shift index set, a first resource block index corresponding to a $p^{th}$ hop of transmission with frequency hopping of the uplink control information, where p is a positive integer; and/or the processing unit is further configured to determine, by using the terminal device based on the target offset parameter, the uplink control channel resource index, the physical resource block offset parameter, the number of initial cyclic shift indexes included in the initial cyclic shift index set, and a first frequency range, a second resource block index corresponding to a $q^{th}$ hop of transmission with frequency hopping of the uplink control channel data, where q is a positive integer. The resource associated with the resource block index falls within the first frequency range.

With reference to the sixth aspect, in some implementations of the sixth aspect, the target offset parameter includes a first sub-offset parameter and a second sub-offset parameter. The processing unit is further configured to determine, by using the terminal device, the first resource block index based on the first sub-offset parameter; and/or the processing unit is further configured to determine, by using the terminal device, the second resource block index based on the second sub-offset parameter.

With reference to the sixth aspect, in some implementations of the sixth aspect, the processing unit is further configured to determine the first resource block index based on the following correspondence among the target offset parameter, the uplink control channel resource index, the physical resource block offset parameter, and the number of initial cyclic shift indexes included in the initial cyclic shift index set:

$$X_1 = RB_{BWP}^{offset} + \lfloor r_{PUCCH} / N_{CS} \rfloor + D,$$

or

$$X_1 = RB_{BWP}^{offset} + \lfloor r_{PUCCH} / N_{CS} \rfloor + D_1.$$

$X_1$ is the first resource block index, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, $D$ is the target offset parameter, $D_1$ is the first sub-offset parameter used to determine the first resource block index, and $\lfloor r_{PUCCH} / N_{CS} \rfloor$ indicates rounding down a result of $r_{PUCCH} / N_{CS}$.

With reference to the sixth aspect, in some implementations of the sixth aspect, the processing unit is further configured to determine the second resource block index based on the following correspondence among the target offset parameter, the uplink control channel resource index, the physical resource block offset parameter, and the number of initial cyclic shift indexes included in the initial cyclic shift index set:

$$X_2 = N_{size} - 1 - RB_{BWP}^{offset} - \lfloor r_{PUCCH} / N_{CS} \rfloor + D,$$

or

$$X_2 = N_{BWP}^{size} - 1 - RB_{BWP}^{offset} - \lfloor r_{PUCCH} / N_{CS} \rfloor + D,$$

or

$$X_2 = N_{BWP}^{size} - 1 - RB_{BWP}^{offset} - \lfloor r_{PUCCH} / N_{CS} \rfloor + D_2.$$

$X_2$ is the second resource block index, $N_{size}$ is a number of resource blocks included in the first frequency range, $N_{BWP}^{size}$ is a number of resource blocks included in a second frequency range, the second frequency range is less than or equal to a maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, $D$ is the target offset parameter, $D_2$ is the second sub-offset parameter used to determine the second resource block index, and $\lfloor r_{PUCCH} / N_{CS} \rfloor$ indicates rounding down a result of $r_{PUCCH} / N_{CS}$.

With reference to the sixth aspect, in some implementations of the sixth aspect, that the processing unit is configured to determine, by using the terminal device, the target offset parameter includes: The processing unit is configured to determine, by using the terminal device, the target offset parameter based on a first location and a second location. The first location is a location of a yth resource block index in the first frequency range. The second location is a location of a resource block whose resource block index is z and that falls within the second frequency range. y and z are non-negative integers. The first frequency range is greater than the maximum channel bandwidth supported by the terminal device. The second frequency range is less than or equal to the maximum channel bandwidth supported by the terminal device. Alternatively, the transceiver unit is further configured to receive, by using the terminal device, first information from the network device. Alternatively, the processing unit is configured to determine, by using the terminal device, the target offset parameter based on the first information. Alternatively, the processing unit is configured to determine, by using the terminal device, the target offset parameter based on a predefined parameter. Alternatively, the processing unit is configured to determine, by using the terminal device, the target offset parameter according to a predefined rule.

With reference to the sixth aspect, in some implementations of the sixth aspect, the processing unit is further configured to send, by using the terminal device without frequency hopping, the uplink control information on the resource associated with the resource block index.

With reference to the sixth aspect, in some implementations of the sixth aspect, before the processing unit is configured to determine, by using the terminal device, the target offset parameter, the processing unit is further configured to determine, by using the terminal device, that a subcarrier spacing S corresponding to the terminal device and a number L of symbols of an uplink control channel resource meet a first preset condition.

For beneficial effect of the information transmission apparatus provided in the sixth aspect, refer to beneficial effect of the first aspect and the second aspect and possible implementations of the first aspect and the second aspect. Details are not described herein again.

According to a seventh aspect, an information transmission apparatus is provided. The apparatus includes: a processing unit, configured to determine a number L of symbols and/or a subcarrier spacing S that are/is used to send uplink control information, where the processing unit is further configured to determine that L and/or S meet/meets at least one of the following conditions: a minimum value of L is greater than or equal to 4; a minimum value of L is determined based on S; a value of L falls within a first value range, an uplink control channel is transmitted without frequency hopping within the first value range, or the uplink control channel is transmitted with frequency hopping within the first value range, and frequency tuning is not needed between two adjacent hops of transmission with frequency hopping; a value of L falls within a second value range, an uplink control channel is transmitted with frequency hopping within the second value range, and frequency tuning is needed between two adjacent hops of transmission with frequency hopping; a value of S falls within a third value range, an uplink control channel is transmitted without frequency hopping within the third value range, or the uplink control channel is transmitted with frequency hopping within the third value range, and frequency tuning is not needed between two adjacent hops of transmission with frequency hopping; a value of S falls within a fourth value range, an uplink control channel can be transmitted with frequency hopping within the fourth value range, and frequency tuning is needed between two adjacent hops of transmission with frequency hopping; and a transceiver unit, configured to send or receive the uplink control information.

For beneficial effect of the information transmission apparatus provided in the seventh aspect, refer to beneficial effect of the third aspect and the fifth aspect and possible implementations of the third aspect and the fifth aspect. Details are not described herein again.

According to an eighth aspect, an information transmission apparatus is provided. The apparatus includes: a transceiver unit, configured to send, by using a network device, first information to a terminal device. The first information is used by the terminal device to determine a resource block index. The first information further indicates a target offset parameter, an uplink control channel resource index, a physical resource block offset parameter, and a number of initial cyclic shift indexes included in an initial cyclic shift index set. The transceiver unit is further configured to receive, by using the network device on a resource associated with the resource block index, uplink control information sent by the terminal device.

With reference to the eighth aspect, in some implementations of the eighth aspect, the uplink control information is transmitted with frequency hopping. That the first information is used by the terminal device to determine the resource block index includes: The first information is used by the terminal device to determine a first resource block index corresponding to a pth hop of transmission with frequency hopping of the uplink control information, where p is a positive integer; and/or the first information is used by the terminal device to determine a second resource block index corresponding to a qth hop of transmission with frequency hopping of the uplink control information, where q is a positive integer.

With reference to the eighth aspect, in some implementations of the eighth aspect, the target offset parameter includes a first sub-offset parameter and a second sub-offset parameter. The first sub-offset parameter is used to determine the first resource block index. The second sub-offset parameter is used to determine the second resource block index.

With reference to the eighth aspect, in some implementations of the eighth aspect, p = 1 and q = 2; or p =2 and q=1.

With reference to the eighth aspect, in some implementations of the eighth aspect, the first resource block index, the target offset parameter, the uplink control channel resource index, the physical resource block offset parameter, and the number of initial cyclic shift indexes included in the initial cyclic shift index set satisfy the following correspondence:

$$X_1 = RB_{BWP}^{offset} + \lfloor r_{PUCCH} / N_{CS} \rfloor + D,$$

or

$$X_1 = RB_{BWP}^{offset} + \lfloor r_{PUCCH} / N_{CS} \rfloor + D_1.$$

$X_1$ is the first resource block index, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, $D$ is the target offset parameter, $D_1$ is the first sub-offset parameter used to determine the first resource block index, and $\lfloor r_{PUCCH} / N_{CS} \rfloor$ indicates rounding down a result of $r_{PUCCH} / N_{CS}$.

With reference to the eighth aspect, in some implementations of the eighth aspect, the second resource block index, the target offset parameter, the uplink control channel resource index, the physical resource block offset parameter, and the number of initial cyclic shift indexes included in the initial cyclic shift index set satisfy the following correspondence:

$$X_2 = N_{size} - 1 - RB_{BWP}^{offset} - \lfloor r_{PUCCH} / N_{CS} \rfloor + D,$$

or

$$X_2 = N_{BWP}^{size} - 1 - RB_{BWP}^{offset} - \lfloor r_{PUCCH} / N_{CS} \rfloor + D,$$

or

$$X_2 = N_{BWP}^{size} - 1 - RB_{BWP}^{offset} - \lfloor r_{PUCCH} / N_{CS} \rfloor + D_2.$$

$X_2$ is the second resource block index, $N_{size}$ is a number of resource blocks included in a first frequency range, the resource associated with the resource block index falls within the first frequency range, $N_{BWP}^{size}$ is a number of resource blocks included in a second frequency range, the second frequency range is less than or equal to a maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, $D$ is the target offset parameter, $D_2$ is the second sub-offset parameter used to determine the second resource block index, and $\lfloor r_{PUCCH} / N_{CS} \rfloor$ indicates rounding down a result of $r_{PUCCH}/N_{CS}$.

With reference to the eighth aspect, in some implementations of the eighth aspect, that the first information indicates the target offset parameter includes: The first information indicates a first location and a second location. The first location and the second location are used to determine the target offset parameter. The first location is a location of a $y^{th}$ resource block index in the first frequency range. The second location is a location of a resource block whose resource block index is z and that falls within the second frequency range. y and z are non-negative integers. The first frequency range is greater than the maximum channel bandwidth supported by the terminal device. The second frequency range is less than or equal to the maximum channel bandwidth supported by the terminal device. Alternatively, the first information includes the target offset parameter. Alternatively, the first information includes a predefined parameter, and the predefined parameter is used to determine the target offset parameter. Alternatively, the first information includes a predefined rule, and the predefined rule is used to determine the target offset parameter.

With reference to the eighth aspect, in some implementations of the eighth aspect, a value of the target offset parameter is an integer less than 0. Alternatively, a value of the target offset parameter is an integer multiple of K, where K = 2, 3, or 4.

With reference to the eighth aspect, in some implementations of the eighth aspect, the transceiver unit is further configured to receive, by using the network device without frequency hopping on the resource associated with the resource block index, the uplink control information sent by the terminal device.

With reference to the eighth aspect, in some implementations of the eighth aspect, the apparatus further includes a processing unit. Before the transceiver unit is configured to send, by using the network device, the first information to the terminal device, the processing unit is configured to determine, by using the network device, that a subcarrier spacing S corresponding to the terminal device and a number L of symbols of an uplink control channel resource meet a first preset condition.

For beneficial effect of the information transmission apparatus provided in the eighth aspect, refer to beneficial effect of the fourth aspect and possible implementations of the fourth aspect. Details are not described herein again.

According to a ninth aspect, a communication apparatus is provided. The apparatus may be configured to perform an operation of the communication device according to any one of the first aspect and the possible implementations of the first aspect, or configured to perform an operation of the communication device according to any one of the second aspect and the possible implementations of the second aspect, or configured to perform an operation of the communication device according to any one of the third aspect and the possible implementations of the third aspect, or configured to perform an operation of the communication device according to any one of the fourth aspect and the possible implementations of the fourth aspect, or configured to perform an operation of the communication device according to any one of the fifth aspect and the possible implementations of the fifth aspect. Specifically, the apparatus may include a corresponding component (means) configured to perform the steps or functions described in any one of the foregoing aspects. The steps or the functions may be implemented by using software, hardware, or a combination of hardware and software.

According to a tenth aspect, a computer-readable medium is provided. The computer-readable medium stores a computer program (which may also be referred to as code or instructions). When the computer program is run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed, or the method according to any one of the fifth aspect and the possible implementations of the fifth aspect is performed.

According to an eleventh aspect, a chip system is provided, including a memory and a processor. The memory is configured to store a computer program. The processor is configured to invoke the computer program from the memory and run the computer program, so that a communication device on which the chip system is installed performs the method according to any one of the first aspect and the possible implementations of the first aspect, or performs the method according to any one of the second aspect and the possible implementations of the second aspect, or performs the method according to any one of the third aspect and the possible implementations of the third aspect, or performs the method according to any one of the fourth aspect and the possible implementations of the fourth aspect, or performs the method according to any one of the fifth aspect and the possible implementations of the fifth aspect.

According to a twelfth aspect, a chip is provided. The chip includes a processor and a communication interface. The communication interface is configured to communicate with an external component or an internal component. The processor is configured to implement the method according to any one of the first aspect and the possible implementations of the first aspect, or the processor is configured to implement the method according to any one of the second aspect and the possible implementations of the second aspect, or the processor is configured to implement the method according to any one of the third aspect and the possible implementations of the third aspect, or the processor is configured to implement the method according to any one of the fourth aspect and the possible implementations of the fourth aspect, or the processor is configured to implement the method according to any one of the fifth aspect and the possible implementations of the fifth aspect.

In a possible implementation, the chip may further include a memory. The memory stores instructions. The processor is configured to execute the instructions stored in the memory or other instructions. When the instructions are executed, the processor is configured to implement the method according to any one of the first aspect and the possible implementations of the first aspect, or the processor is configured to implement the method according to any one of the second aspect and the possible implementations of the second aspect, or the processor is configured to implement the method according to any one of the third aspect and the possible implementations of the third aspect, or the processor is configured to implement the method according to any one of the fourth aspect and the possible implementations of the fourth aspect, or the processor is configured to implement the method according to any one of the fifth aspect and the possible implementations of the fifth aspect.

According to a thirteenth aspect, a computer program product is provided. The computer program product includes a computer program (which may also be referred to as code or instructions). When the computer program is run, a computer is enabled to perform the method according to any one of the first aspect and the possible implementations of the first aspect, or perform the method according to any one of the second aspect and the possible implementations of the second aspect, or perform the method according to any one of the third aspect and the possible implementations of the third aspect, or perform the method according to any one of the fourth aspect and the possible implementations of the fourth aspect, or perform the method according to any one of the fifth aspect and the possible implementations of the fifth aspect.

According to a fourteenth aspect, a communication device is provided, including a processor and a memory. The memory is configured to store a computer program, and the processor is configured to invoke the computer program from the memory and run the computer program, so that the communication apparatus performs the communication method according to any one of the first aspect to the fifth aspect and the possible implementations of the first aspect to the fifth aspect.

There are one or more processors, and there are one or more memories. The memory may be integrated with the processor, or the memory and the processor are separately disposed.

In a possible design, a communication device is provided, including a communication interface, a processor, and a memory. The processor is configured to control the communication interface to receive and send a signal. The memory is configured to store a computer program. The processor is configured to invoke the computer program from the memory and run the computer program, so that the communication device performs the method according to any one of the first aspect to the fifth aspect and the corresponding possible implementations of the aspects.

According to a fifteenth aspect, a system is provided. The system includes the corresponding terminal device and network device according to the foregoing aspects.

## BRIEF DESCRIPTION OF DRAWINGS

FIG. 1 is a schematic diagram of a system scenario to which an embodiment of this application is applicable;
FIG. 2 is a schematic flowchart of a contention mode-based random access process;
FIG. 3 is a schematic diagram of a physical uplink control channel resource used by a terminal device to feed back a contention resolution message;
FIG. 4 is a diagram of comparison between resource locations of physical uplink control channels corresponding to two terminal devices with different capabilities;
FIG. 5 is a schematic flowchart of an information transmission method according to an embodiment of this application;
FIG. 6 is a schematic flowchart of an information transmission method according to another embodiment of this application;
FIG. 7 is a schematic flowchart of an information transmission method according to another embodiment of this application;
FIG. 8 is a schematic flowchart of an information transmission method according to another embodiment of this application;
FIG. 9 is a schematic block diagram of an information transmission apparatus according to an embodiment of this application;
FIG. 10 is a schematic diagram of a structure of another information transmission apparatus according to an embodiment of this application; and
FIG. 11 is a schematic diagram of a structure of still another information transmission apparatus according to an embodiment of this application.

**DESCRIPTION OF EMBODIMENTS**

The following describes technical solutions of this application with reference to accompanying drawings.

The technical solutions in embodiments of this application may be applied to various communication systems, such as a global system for mobile communication (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunication System, UMTS), a worldwide interoperability for microwave access (Worldwide Interoperability for Microwave Access, WiMAX) communication system, a future 5th generation (5th Generation, 5G) system, or a new radio (New Radio, NR) system.

The technical solutions in embodiments of this application are applicable to a signal transmission scenario, for example, signal transmission between a network device and a terminal device, signal transmission between network devices, signal transmission between terminal devices (for example, signal transmission between a reduced-capability terminal and an eMBB terminal, or signal transmission between reduced-capability terminals), communication of Internet of Vehicles, Internet of Things, industrial Internet and the like, and satellite communication. This is not limited in this application. In embodiments of this application, communication between the terminal device and the network device is used as an example for description.

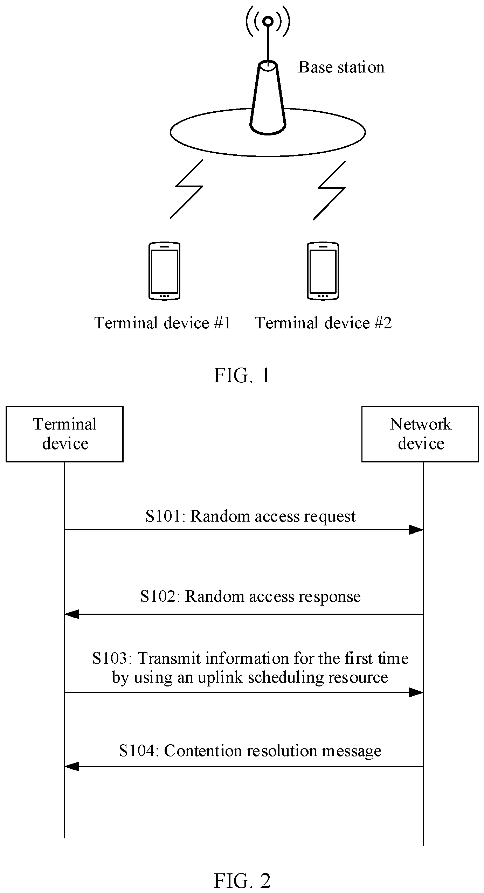

An example of a system architecture in embodiments of this application is first described with reference to FIG. 1. As shown in FIG. 1, the system architecture includes a terminal device and a base station (or referred to as an access network). For example, the terminal devices are a terminal device #1 and a terminal device #2.

Terminal device

The terminal device in embodiments of this application may be user equipment (user equipment, UE), an access terminal, a subscriber unit (subscriber unit), a subscriber station, a mobile station (mobile station), a mobile console, a remote station, a remote terminal, a mobile device, a user terminal (terminal equipment), a terminal, a wireless communication device, a user agent, or a user apparatus. Alternatively, the terminal device may be a cellular phone, a cordless phone, a session initiation protocol (session Initiation protocol, SIP) phone, a wireless local loop (wireless local loop, WLL) station, a personal digital assistant (personal digital assistant, PDA), a handheld device having a wireless communication function, a computing device or another processing device, vehicle-mounted device, or wearable device connected to a wireless modem, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal in satellite communication, a terminal device in a 5G network or a future communication network, or the like. This is not limited in embodiments of this application.

It should be noted that the terminal devices in this application may be classified into a first-type terminal device and a second-type terminal device. The first-type terminal device is, for example, reduced-capability UE (reduced capability UE, REDCAP UE). The second-type terminal device may be legacy UE, for example, eMBB UE.

The first-type terminal device and the second-type terminal device have different features. The features include one or more of the following: a bandwidth, a number of supported or configured resources, a number of transmit antenna ports and/or a number of receive antenna ports, a number of radio frequency channels, a number of hybrid automatic repeat request (hybrid automatic repeat request, HARQ) processes, a supported peak rate, an application scenario, a delay requirement, a processing capability, a protocol version, a duplex mode, and a service.

The following describes the foregoing features in detail by using examples.

Bandwidth, or channel bandwidth, or maximum channel bandwidth supported or configured by the terminal device: The first-type terminal device and the second-type terminal device have different bandwidths. For example, a bandwidth of the first-type terminal device may be 20 MHz, 10 MHz, or 5 MHz, and a bandwidth of the second-type terminal device may be 100 MHz. It may be understood that, with development of communication technologies, a maximum channel bandwidth supported by the first-type terminal device may no longer be 20 MHz, 10 MHz, or 5 MHz, but evolve into a wider or narrower bandwidth, for example, 3 MHz, 25 MHz, or 50 MHz.

Number of supported or configured resources: The number of resources may be a number of resource blocks (resource blocks, RBs), time-frequency resource elements (resource elements, REs), subcarriers, RB groups, resource element group bundle units (resource element group bundle, REG bundle), control channel elements, subframes, radio frames, slots, mini-slots and/or symbols. A number of resources supported or configured by the first-type terminal device is different from a number of resources supported or configured by the second-type terminal device. For example, the number of resources supported by the first-type terminal device is 48 RBs, and the number of resources supported by the second-type terminal device is 96 RBs.

Number of transmit antenna ports and/or number of receive antenna ports: A number of transmit antenna ports and/or a number of receive antenna ports of the first-type terminal device are/is different from those of the second-type terminal device. For example, the number of transmit antenna ports of the first-type terminal device may be 1, and the number of receive antenna ports of the first-type terminal device may be 2. The number of transmit antenna ports of the second-type terminal device may be 2, and the number of receive antenna ports of the second-type terminal device may be 4.

Number of radio frequency channels: A number of radio frequency channels of the first-type terminal device is different from that of the second-type terminal device. For example, the number of radio frequency channels of the first-type terminal device may be 1, and the number of radio frequency channels of the second-type terminal device may be 2.

Number of HARQ processes: A number of HARQ processes supported by the first-type terminal device is different from that supported by the second-type terminal device. For example, the number of HARQ processes of the first-type terminal device may be 8, and the number of HARQ processes of the second-type terminal device may be 16.

Supported peak rate: A maximum peak rate of the first-type terminal device is different from that of the second-type terminal device. For example, the maximum peak rate supported by the first-type terminal device may be 100 Mbps, and the peak rate supported by the second-type terminal device may be 200 Mbps.

Application scenario: The first-type terminal device and the second-type terminal device serve different application scenarios. For example, the first-type terminal device is applied to industrial wireless sensing, video surveillance, wearable devices, and the like, and the second-type terminal device is applied to mobile communication, video, Internet access, and the like.

Delay requirement: The first-type terminal device and the second-type terminal device have different transmission delay requirements. For example, a delay requirement of the first-type terminal device may be 500 milliseconds, and a delay requirement of the second-type terminal device may be 100 milliseconds.

Processing capability: Under different subcarrier spacing (subcarrier spacing, SCS) conditions, the first-type terminal device and the second-type terminal device have different processing speeds for channel or data processing time sequences. For example, the first-type terminal device does not support complex calculation. The complex calculation may include: artificial intelligence (artificial intelligence, AI) and virtual reality (virtual reality, VR) rendering. The second-type terminal device supports complex calculation. Alternatively, it is understood that a processing capability of the first-type terminal device is lower than that of the second-type terminal device.

Protocol version: The first-type terminal device and the second-type terminal device are terminal devices of different protocol versions. For example, a protocol version supported by the first-type terminal device is Release 17 and a protocol version later than Release 17, and a protocol version supported by the second-type terminal device is a protocol version earlier than Release 17, for example, Release 15 or Release 16.

Duplex mode: The duplex mode includes a half-duplex mode and a full-duplex mode. The first-type terminal device and the second-type terminal device use different duplex modes. For example, the first-type terminal device operates in the half-duplex mode, and the second-type terminal device operates in the full-duplex mode.

Service: The service includes but is not limited to an Internet of Things application, for example, video surveillance and a mobile broadband (mobile broadband, MBB). The first-type terminal device and the second-type terminal device support different services. For example, a service supported by the first-type terminal device is the video surveillance, and a service supported by the second-type terminal device is the mobile broadband MBB. This is not limited in this embodiment of this application.

It should be understood that another type of terminal device or a future new type of terminal device that also supports the technical solutions of this application also falls within the protection scope of this application.

The first terminal device or the terminal device #1 in this application may be an example of the first-type terminal device, and the second terminal device or the terminal device #2 may be an example of the second-type terminal device.

It should be further noted that a first frequency range in this application is greater than the maximum channel bandwidth supported by the first-type terminal device, a second frequency range in this application is less than or equal to the maximum channel bandwidth supported by the first-type terminal device, and a third frequency range in this application is less than or equal to a maximum channel bandwidth supported by the second-type terminal device. The first frequency range and the second frequency range correspond to the first-type terminal device, and the third frequency range corresponds to the second-type terminal device. A first frequency domain resource corresponds to a resource that is in the first frequency range and that is used by the first-type terminal device to send uplink control information. A second frequency domain resource corresponds to a resource that is in the second frequency range and that is used by the first-type terminal device to send the uplink control information. A third frequency domain resource corresponds to a resource that is in the third frequency range and that is used by the second-type terminal device to send the uplink control information.

Network device

The network device in embodiments of this application is configured to communicate with a terminal device, may be a radio base station in a network, or may be a network element of a radio access network (radio access network, RAN), and is responsible for all functions related to an air interface. Functions of the base station include: a radio link maintenance function including maintenance of a radio link with a terminal and protocol conversion between radio link data and Internet protocol (internet protocol, IP) data; a radio resource management function including radio link establishment and release, radio resource scheduling and allocation, and the like; and some mobility management functions including terminal configuration for measurement, terminal radio link quality evaluation, determining of inter-cell handover of a terminal, and the like.

The network device may be an evolved NodeB (evolved NodeB, eNB or eNodeB) in an LTE system, a base station (gNodeB, gNB) in a 5G network, or a radio controller in a cloud radio access network (cloud radio Access Network, CRAN) scenario. Alternatively, the network device may be a relay station, an access point, a vehicle-mounted device, a satellite, a wearable device, a transmission point (transmitting and receiving point, TRP), a transmitting point (transmitting point, TP), a mobile switching center, or a device that provides a base station function in device-to-device (Device-to-Device, D2D) communication, vehicle-to-everything (vehicle-to-everything, V2X) communication, machine-to-machine (machine-to-machine, M2M) communication, and Internet of Things (Internet of Things) communication, a base station in a future evolved network such as 6G, or the like. This is not limited in this embodiment of this application.

With continuous development of mobile communication technologies, various terminal devices with different capabilities emerge. The International Telecommunication Union (international telecommunication union, ITU) defines three major application scenarios for a 5G mobile communication system and a future mobile communication system: enhanced mobile broadband (enhanced mobile broadband, eMBB), ultra-reliable and lowlatency communication (ultra reliable and low latency communication, URLLC), and massive machine-type communication (massive machine type communication, mMTC). Typical eMBB services include an ultra-high-definition video, augmented reality (augmented reality, AR), and virtual reality (virtual reality, VR). Typical URLLC services include wireless control in an industrial manufacturing or production procedure, motion control of an unmanned vehicle and an unmanned aircraft, and tactile interaction applications such as remote repair and remote surgery. Typical mMTC services include wearables, sensors, video surveillance, smart grid distribution automation, smart cities, and the like, and these services are mainly characterized by a huge number of connected mMTC terminal devices, a small amount of data transmission, and a low data transmission delay requirement. Generally, these mMTC terminal devices need to satisfy requirements for low costs and long standby time.

In addition, currently, the 3rd Generation Partnership Project (3rd generation partnership project, 3GPP) is studying a reduced-capability terminal device. A technology for implementing capability reduction is to reduce a terminal capability by reducing a maximum channel bandwidth supported by the terminal device.

Based on the foregoing description, it can be easily learned that terminal devices in different application scenarios may have different capabilities, and the terminal devices with different capabilities have different requirements for a mobile communication system. Specifically, maximum channel bandwidths supported by the terminal devices with different capabilities may be different. For example, for a frequency range FR1 of an NR system (namely, a frequency range of 410 MHz to 7125 MHz), a maximum channel bandwidth supported by a normal eMBB terminal device is 100 MHz. For a reduced-capability terminal device, to reduce complexity and costs of the terminal device, a maximum channel bandwidth supported by the terminal device may be 5 MHz, or 10 MHz, or 20 MHz, or 40 MHz.

The foregoing terminal devices with different capabilities may coexist in a same communication system. However, because the maximum channel bandwidths supported by the terminal devices with different capabilities are different, a problem of resource fragmentation may be caused. It may be understood that: A terminal device with a small maximum channel bandwidth may cause a frequency domain resource of a terminal device with a large maximum channel bandwidth to be split into several small frequency domain resources. When the network device allocates a resource to a serving terminal device, the resource can be allocated to the terminal device only on the several scattered frequency domain resources. There is a large limitation on scheduling of the network device, and consequently flexibility of resource allocation is reduced.

Therefore, how to better support coexistence of the terminal devices with different capabilities in the same communication system and avoid a limitation on resource scheduling caused by resource fragmentation becomes an urgent problem to be resolved.

The following further describes the technical problem in this application by using the following as an example: a physical uplink control channel (physical uplink control channel, PUCCH) resource used by the terminal device to send a hybrid automatic repeat request (hybrid automatic repeat request, HARQ) for a contention resolution message (namely, the following Msg4) to the network device in a random access process.

Random access is a necessary process of establishing a radio link between the terminal device and a network device. Data interoperation (normal DL/UL transmission) can be normally performed between the network device and the terminal device only after random access is completed. The terminal device may implement two basic functions through random access: (1) Uplink synchronization is established, to implement uplink synchronization with the network device. (2) A unique terminal identifier, namely, a cell radio network temporary identifier (cell-radio network temporary identifier, C-RNTI) is established, to request the network device to allocate an uplink resource.

The random access process includes a contention-based random access process and a contention free random access process. In the contention-based random access process, the UE randomly selects a random access preamble (preamble) to initiate a random access process to the network device. Therefore, if a plurality of UEs use a same preamble to initiate a random access process at a same moment, a conflict occurs, and access may fail. In the contention free random access process, during access, the UE uses a specific access preamble provided by the network device, and therefore does not conflict with other UE, to ensure an access success rate.

A random access process 100 of the terminal device is first described below with reference to FIG. 2 by using a contention mode-based four-step random access process as an example.

S101: The terminal device initiates a random access request to the network device on a preconfigured random access channel occasion (RACH occasion, RO) resource. The random access request includes a first random access preamble (preamble), or may be a message 1, namely, an Msg1, in the random access process.

It should be noted that before the S101, the random access process further includes: The terminal device receives a broadcast message of the network device, and randomly selects a random access preamble from several random access preambles (preambles) in the broadcast message as the first random access preamble.

It should be understood that a plurality of terminal devices may send random access requests on a same RO resource, and these terminal devices may be distinguished based on different preambles. However, because a number of preambles in the foregoing broadcast message is limited, a plurality of UEs may select a same preamble. This problem may be resolved in step S104.

S102: The network device sends a random access response (random access response, RAR) (which may be referred to as a message 2, namely, an Msg2) to the terminal device.

It should be noted that the random access response includes uplink grant (uplink grant, UL grant) information. The uplink grant information indicates a resource for sending Msg3 by the terminal device.

S103: The terminal device sends, based on a resource indicated by the uplink scheduling information, a message 3 (which may be referred to as an Msg3) to the network device.

S104: The network device sends the contention resolution (contention resolution) message (which may be referred to as a new message 4, namely, an Msg4) to the terminal device.

Because preambles selected by different terminal devices may conflict with each other, a plurality of terminal devices may select a same preamble. The network device indicates, in this step, a terminal device that successfully accesses the network.

After the S104, the terminal device performs HARQ feedback on the received Msg4 on the PUCCH resource.

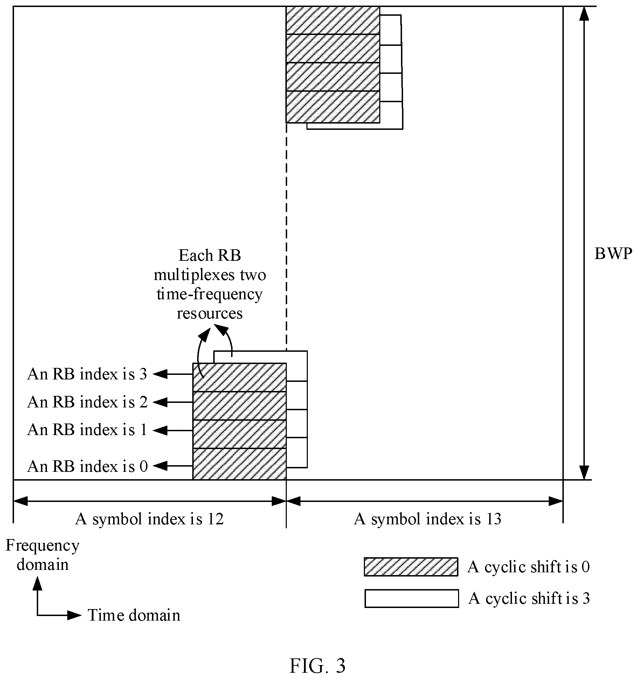

With reference to FIG. 3 and Table 1, the following further describes the PUCCH resource used by the terminal device to feed back the Msg4.

It should be noted that a terminal device in the NR system usually transmits information in a bandwidth part (bandwidth part, BWP) (refer to FIG. 3). When the terminal device needs to transmit information in a frequency hopping manner in a slot, PUCCH resources used for frequency hopping of the terminal device are usually located at two ends of the BWP. Resources corresponding to the PUCCH resources used for frequency hopping are consecutive in time domain, and are nonconsecutive in frequency.

It should be understood that frequency hopping may be performed on the PUCCH resource used by the terminal device to feed back the Msg4. Optional time-frequency resource locations of a first hop and a second hop may be predefined.

The following Table 1 shows possible optional resource locations of the first hop and the second hop of the PUCCH resource. An index in a first column indicates a PUCCH resource set. A number of symbols in a fourth column indicates a number of symbols occupied by the PUCCH resource set in time domain, and may be denoted as L. Aphysical resource block offset in a fifth column indicates a physical resource block offset parameter corresponding to the PUCCH resource set in frequency domain, and may be denoted as $RB_{BWP}^{offset}$ . An initial cyclic shift in a sixth column indicates an initial cyclic shift index set corresponding to the PUCCH resource set in frequency domain. A total number of initial cyclic shift indexes included in the initial cyclic shift index set may be denoted as $N_{CS}$. $N_{BWP}^{size}$ is a number of resource blocks RBs included in the BWP.

**Table 1**

| Index | PUCCH format | Start symbol | Number of symbols | PRB offset | Initial cyclic shift |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{BWP}^{size} / 4 \right\rfloor$ | {0, 3, 6, 9} |

FIG. 3 shows time-frequency distribution of PUCCH resources in a PUCCH resource set whose index is 0 in Table 1 (FIG. 3 shows only eight PUCCH resources, where each PUCCH resource includes an RB corresponding to a first hop and an RB corresponding to a second hop, and the RBs corresponding to the two hops are respectively located at two ends of the BWP).

The following further describes meanings of parameters in Table 1 with reference to FIG. 3 by using a first row (that is, the PUCCH resource set indicated by the index 0) in Table 1.

The first row in Table 1 corresponds to the PUCCH resource set whose index is 0. The PUCCH resource set includes 16 PUCCH resources. A PUCCH format 0 means that a PUCCH format corresponding to the PUCCH resource set is a PUCCH format 0. In time domain, a start symbol 12 means that a start symbol corresponding to the PUCCH resource set is a twelfth symbol. The PUCCH resource set occupies two symbols, which may be understood that the PUCCH resource set occupies the twelfth symbol and a thirteenth symbol (refer to FIG. 3). In frequency domain, a PRB offset 0 means that: an offset of a resource block in which a first PUCCH resource in the PUCCH resource set is located relative to an RB (namely, a resource block whose index is 0 in FIG. 3) at a boundary of the BWP is 0. An initial cyclic shift {0, 3} indicates that the total number of initial cyclic shift indexes included in the initial cyclic shift index set is 2, to be specific, it indicates that an initial cyclic shift 0 and an initial cyclic shift 3 can be respectively used by two PUCCH resources to ensure orthogonality. Different cyclic shifts are used by the two PUCCH resources to prevent interference. The cyclic shift 0 is used by one PUCCH resource, and the cyclic shift 3 is used by the other PUCCH resource. The 16 PUCCH resources are respectively distributed at two ends of the BWP, and eight PUCCH resources are distributed at each end.

It should be noted that the PUCCH resource of the terminal device may be indicated by the network device. For example, the network device may first indicate an index of a PUCCH resource set by using a system information block (system information block, SIB) (for example, SIB 1), for example, indicate the PUCCH resource set whose index is 0 in Table 1, and then further indicate a PUCCH resource in the PUCCH resource set. An index of the PUCCH resource in the PUCCH resource set may be represented as $r_{PUCCH}$. For example, a PUCCH resource in which $r_{PUCCH} = 0$ is indicated in the PUCCH resource set (including the 16 resources) whose index is 0.

In FIG. 3, an index of an RB of a resource that corresponds to the first hop and that is used by the terminal device to feed back the Msg4 and an index of an RB of a resource that corresponds to the second hop and that is used by the terminal device to feed back the Msg4 may be calculated in the following manner.

If a PUCCH resource index $r_{PUCCH}$ is 0 to 7, that is, floor($r_{PUCCH}$/8) = 0, the index (which may be denoted as

$X_1$) of the RB corresponding to the first hop of the PUCCH in a BWP range is:

$$X_1 = RB_{BWP}^{offset} + \left\lfloor r_{PUCCH} / N_{CS} \right\rfloor \quad \text{Formula 1}$$

In this case, the index (which may be denoted as $X_2$) of the RB corresponding to the second hop of the PUCCH is:

$$X_2 = N_{BWP}^{size} - 1 - RB_{BWP}^{offset} - \left\lfloor r_{PUCCH} / N_{CS} \right\rfloor \quad \text{Formula 2}$$

If a PUCCH resource index $r_{PUCCH}$ is 8 to 15, that is, floor($r_{PUCCH}$/8) = 1, the index (which may be denoted as $X_1$) of the RB corresponding to the first hop of the PUCCH is:

$$X_1 = N_{BWP}^{size} - 1 - RB_{BWP}^{offset} - \left\lfloor (r_{PUCCH} - 8) / N_{CS} \right\rfloor \quad \text{Formula 3}$$

In this case, the index (which may be denoted as $X_2$) of the RB corresponding to the second hop of the PUCCH is:

$$X_2 = RB_{BWP}^{offset} + \left\lfloor (r_{PUCCH} - 8) / N_{CS} \right\rfloor \quad \text{Formula 4}$$

$N_{BWP}^{size}$ is the number of resource blocks RBs included in the BWP in which the terminal device operates, $RB_{BWP}^{offset}$ is the physical resource block offset parameter corresponding to the PUCCH resource set in frequency domain, $r_{PUCCH}$ is an index value of a PUCCH resource in the PUCCH resource set, $N_{CS}$ is the total number of initial cyclic shift indexes included in the initial cyclic shift index set, floor($r_{PUCCH}$/8) indicates rounding down a result of $r_{PUCCH}$ 18, and $\left\lfloor (r_{PUCCH} - 8) / N_{CS} \right\rfloor$ indicates rounding down a result of ($r_{PUCCH}$ - 8) / $N_{CS}$.

For example, in FIG. 3 (the index of the corresponding PUCCH resource set is 0), an index of an RB in which a first hop of a PUCCH resource with $r_{PUCCH}$ 0 islocatedis 0 +[0/2] = 0, and an index of an RB in which a second hop of the PUCCH resource with $r_{PUCCH}$ 0 is located is $N_{BWP}^{size} - 1 - 0 - [0/2] = N_{BWP}^{size} - 1$ .

From a perspective of the network device, resources used by the terminal device (which may be referred to as the terminal device #1 below) to send the first hop and the second hop of the PUCCH with frequency hopping cause a frequency resource to be split, and consequently cause a problem of resource fragmentation.

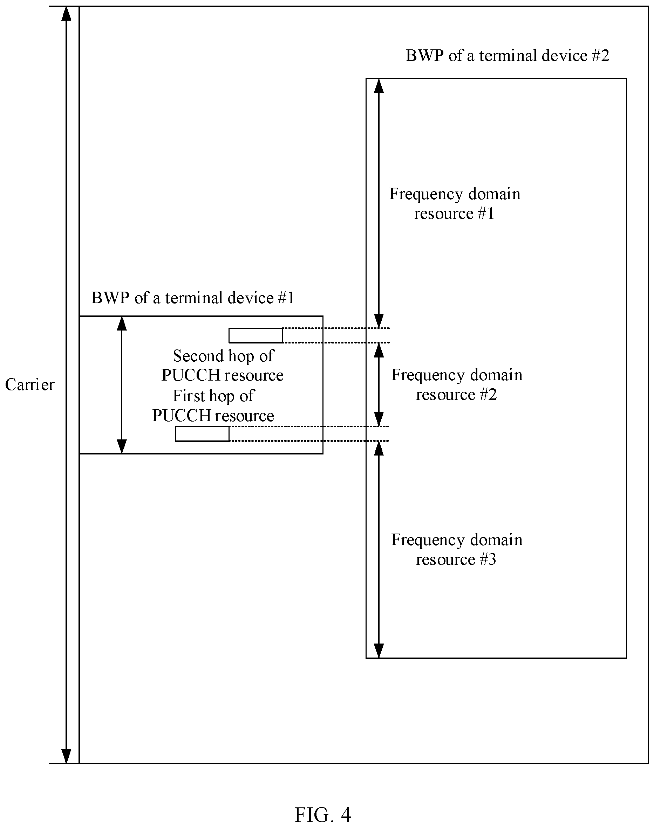

FIG. 4 shows resource locations of two terminals with different capabilities. The terminal device #1 may be a reduced-capability terminal device (reduced capability user equipment, RedCap UE). The terminal device #2 may be an eMBB terminal device. A maximum channel bandwidth supported by the eMBB terminal device is greater than a maximum channel bandwidth supported by the RedCap UE. If the first hop and the second hop of the PUCCH resource used by the RedCap UE for HARQ feedback of the Msg4 fall within a BWP range of the eMBB terminal device, a frequency domain resource that can be used by the eMBB terminal device is split into three segments of resources shown by arrows in FIG. 4, and there is a problem of resource fragmentation. When the network device allocates a resource to the eMBB terminal device, the resource can be allocated to the eMBB terminal device only on the three scattered frequency domain resources (namely, a frequency domain resource #1, a frequency domain resource #2, and a frequency domain resource #3). There is a large limitation on scheduling of the network device, and consequently flexibility of resource allocation is reduced.

It should be understood that, in an initial access process of the RedCap UE, uplink transmission of the RedCap UE needs to be sent within a bandwidth of an initial UL BWP configured for the RedCap UE (or within a range of the maximum channel bandwidth supported by the RedCap UE). The first hop and the second hop of the PUCCH resource used by the corresponding RedCap UE for HARQ feedback of the Msg4 also need to be sent in the initial UL B WP.

It should be further understood that this embodiment of this application is described by using the reduced-capability terminal device and the eMBB terminal device as examples, and this embodiment of this application is further described by using the following as an example: a PUCCH resource with frequency hopping used for HARQ feedback of the Msg4 sent by the network device in the random access process of the terminal device. This should not constitute any limitation on this application herein. Actually, regardless of whether frequency hopping is required or regardless of a specific type of the terminal device, as long as channel bandwidths supported by two terminal devices with different capabilities have a part or all of a same frequency range, a terminal device that supports a small maximum channel bandwidth may cause frequency domain resource fragmentation of a terminal device that supports a large maximum channel bandwidth. The technical problem in this scenario can be resolved by using the technical solutions in this application.

To resolve the foregoing problem, this application provides a communication method, to re-determine a PUCCH resource used by a terminal device #1, to avoid resource fragmentation of a terminal device #2. The re-determined PUCCH resource used by the terminal device # 1 falls within a first frequency range, and the first frequency range is greater than a BWP in which the terminal device #1 operates (or greater than a maximum channel bandwidth supported by the terminal device #1). For example, the re-determined PUCCH resource used by the terminal device #1 may be located at two ends of a carrier, or may be adjacent to a PUCCH resource of the terminal device #2 (which may be understood as being adjacent in frequency to a resource used by the terminal device #2 to send uplink control information, for example, a resource block in which the PUCCH resource of the terminal device #1 is located and a resource block in which the PUCCH resource of the terminal device #2 is located are adjacent resource blocks in frequency).

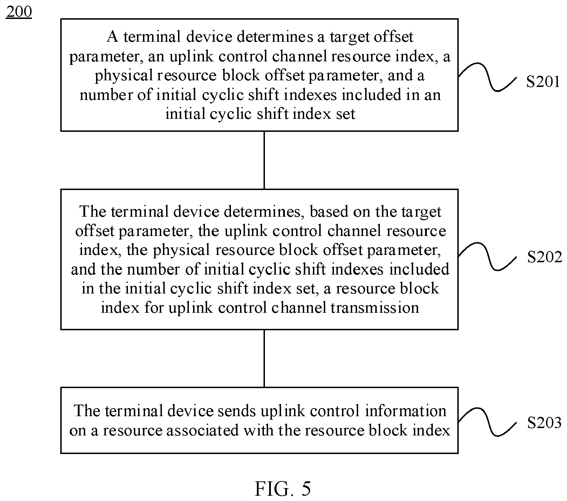

The following describes in detail an information transmission method 200 in this application with reference to FIG. 5. It should be noted that a terminal device in the following method 200 is the foregoing terminal device #1.

S201: The terminal device determines a target offset parameter, an uplink control channel resource index, a physical resource block offset parameter, and a number of initial cyclic shift indexes included in an initial cyclic shift index set.

In a possible implementation, the terminal device may determine, based on first configuration information, one or more of the following parameters: the target offset parameter, the uplink control channel resource index, the physical resource block offset parameter, and the number of initial cyclic shift indexes included in the initial cyclic shift index set. The first configuration information may be sent by a network device to the terminal device.

By way of example and not limitation, manners of determining the target offset parameter include but are not limited to the following several manners: (1) The terminal device determines the target offset parameter based on a first location and a second location, where the first location is a location of a $y^{th}$ resource block index in a first frequency range, the second location is a location of a resource block whose resource block index is z in a second frequency range, y and z are non-negative integers, the first frequency range is greater than a maximum channel bandwidth supported by the terminal device, and the second frequency range is less than or equal to the maximum channel bandwidth supported by the terminal device. Optionally, y and z may be the same, for example, y = z = 0. (2) The terminal device determines the target offset parameter based on first information, where the first information is received by the terminal device from the network device. For example, the first information is a master information block (master information block, MIB), a system information block 1 (system information block 1, SIB 1), a field in the SIB 1, downlink control information for scheduling a PDSCH carrying the SIB 1, or a field in the DCI for scheduling the PDSCH carrying the SIB 1. (3) The target offset parameter is a predefined parameter. For example, the terminal device determines the target offset parameter in a predefined manner. The target offset parameter may be a predefined value. (4) The terminal device (which may be referred to as the terminal device #1) determines the target offset parameter according to a predefined rule, for example, determines the target offset parameter based on a frequency location (an example of the predefined rule) occupied by a PUCCH resource set configured by another terminal device (which may be referred to as the terminal device #2) that has a resource conflict, so that a frequency domain resource of a PUCCH of the terminal device #1 is at a frequency location adjacent to a frequency domain resource of a PUCCH of the terminal device #2. For example, a resource block in which the PUCCH resource of the terminal device #1 is located and a resource block in which the PUCCH resource of the terminal device #2 is located are adjacent resource blocks in frequency.

Optionally, a value of the target offset parameter may be an integer less than 0, or may be an integer multiple of K, where K = 2, 3, or 4.

S202: The terminal device determines, based on the target offset parameter, the uplink control channel resource index, the physical resource block offset parameter, and the number of initial cyclic shift indexes included in the initial cyclic shift index set, a resource block index for uplink control channel transmission.

It should be noted that if uplink control channel transmission is transmission with frequency hopping, the target offset parameter may be used to separately determine a first resource block index corresponding to a $p^{th}$ hop and a second resource block index corresponding to a $q^{th}$ hop of transmission with frequency hopping, where p and q are positive integers. Alternatively, the target offset parameter may be used to separately determine frequency locations corresponding to the $p^{th}$ hop and the $q^{th}$ hop of transmission with frequency hopping.

Optionally, p = 1 and q = 2; or p = 2 and q = 1.

It should be noted that if uplink control channel transmission is transmission with frequency hopping, the target offset parameter may include a first sub-offset parameter and a second sub-offset parameter. The first sub-offset parameter is used to determine the first resource block index. The second sub-offset parameter is used to determine the second resource block index.

In a possible implementation, floor( $r_{PUCCH}$ /8) = 0 is used as an example, where floor($r_{PUCCH}$/8) indicates rounding down a result of $r_{PUCCH}$ 18. The terminal device determines the first resource block index (denoted as $X_1$)

based on the following relationship among the target offset parameter, the uplink control channel resource index, the physical resource block offset parameter, and the number of initial cyclic shift indexes included in the initial cyclic shift index set:

$$X_1 = RB_{BWP}^{offset} + \left\lfloor r_{PUCCH} / N_{CS} \right\rfloor + D \quad \text{Formula 5,}$$

or

$$X_1 = RB_{BWP}^{offset} + \left\lfloor r_{PUCCH} / N_{CS} \right\rfloor + D_1 \quad \text{Formula 6}$$

The terminal device determines the second resource block index (denoted as $X_2$) based on the following relationship among the target offset parameter, the uplink control channel resource index, the physical resource block offset parameter, and the number of initial cyclic shift indexes included in the initial cyclic shift index set:

$$X_2 = N_{\text{size}} - 1 - RB_{BWP}^{offset} - \left\lfloor r_{PUCCH} / N_{CS} \right\rfloor + D \quad \text{Formula 7,}$$

or

$$X_2 = N_{BWP}^{size} - 1 - RB_{BWP}^{offset} - \left\lfloor r_{PUCCH} / N_{CS} \right\rfloor + D \quad \text{Formula 8,}$$

or

$$X_2 = N_{BWP}^{size} - 1 - RB_{BWP}^{offset} - \left\lfloor r_{PUCCH} / N_{CS} \right\rfloor + D_2 \quad \text{Formula 9}$$

$X_1$ is the first resource block index, $X_2$ is the second resource block index, $N_{\text{size}}$ is a number of resource blocks included in the first frequency range, $N_{BWP}^{size}$ is a number of resource blocks included in the second frequency range, the second frequency range is less than or equal to the maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, $D$ is the target offset parameter, $D_1$ is the first sub-offset parameter used to determine the first resource block index, $D_2$ is the second sub-offset parameter used to determine the second resource block index, and $\left\lfloor r_{PUCCH} / N_{CS} \right\rfloor$ indicates rounding down a result of $r_{PUCCH} / N_{CS}$.

In a possible implementation, floor( $r_{PUCCH}$ /8) = 1 is used as an example, where floor($r_{PUCCH}$/8) indicates rounding down a result of $r_{PUCCH}$/8. The terminal device determines the first resource block index (denoted as $X_1$) based on the following relationship among the target offset parameter, the uplink control channel resource index, the physical resource block offset parameter, and the number of initial cyclic shift indexes included in the initial cyclic shift index set:

$$X_1 = RB_{BWP}^{offset} + \left\lfloor (r_{PUCCH} - 8) / N_{CS} \right\rfloor + D \quad \text{Formula 10,}$$

or

$$X_1 = RB_{BWP}^{offset} + \left\lfloor (r_{PUCCH} - 8) / N_{CS} \right\rfloor + D_1 \quad \text{Formula 11}$$

The terminal device determines the second resource block index (denoted as $X_2$) based on the following relationship among the target offset parameter, the uplink control channel resource index, the physical resource block offset parameter, and the number of initial cyclic shift indexes included in the initial cyclic shift index set:

$$X_2 = N_{\text{size}} - 1 - RB_{BWP}^{offset} - \left\lfloor (r_{PUCCH} - 8)/N_{CS} \right\rfloor + D \quad \text{Formula 12,}$$

$$X_2 = N_{BWP}^{size} - 1 - RB_{BWP}^{offset} - \left\lfloor (r_{PUCCH} - 8)/N_{CS} \right\rfloor + D \quad \text{Formula 13,}$$

or

$$X_2 = N_{BWP}^{size} - 1 - RB_{BWP}^{offset} - \left\lfloor (r_{PUCCH} - 8)/N_{CS} \right\rfloor + D_2 \quad \text{Formula 14}$$

$X_1$ is the first resource block index, $X_2$ is the second resource block index, $N_{\text{size}}$ is a number of resource blocks included in the first frequency range, $N_{BWP}^{size}$ is a number of resource blocks included in the second frequency range, the second frequency range is less than or equal to the maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, $D$ is the target offset parameter, $D_1$ is the first sub-offset parameter used to determine the first resource block index, $D_2$

is the second sub-offset parameter used to determine the second resource block index, and $\left\lfloor (r_{PUCCH} - 8)/N_{CS} \right\rfloor$ indicates rounding down a result of $(r_{PUCCH} - 8)/N_{CS}$.

Optionally, before the terminal device determines the target offset parameter, the terminal device may first determine that a subcarrier spacing (which may be denoted as S) corresponding to the first terminal device and a number of symbols (which may be denoted as L) of an uplink control channel resource meet a first preset condition.

By way of example and not limitation, the first preset condition may be one or more of the following conditions:

(1) A minimum value of L is greater than or equal to 4.
(2) A minimum value of L is determined based on S.
(3) A value of L falls within a first value range, an uplink control channel is transmitted without frequency hopping within the first value range, or the uplink control channel is transmitted with frequency hopping within the first value range, and frequency tuning is not needed between two adjacent hops of transmission with frequency hopping.
By way of example and not limitation, the first value range may include {2,4,10}.
(4) A value of L falls within a second value range, an uplink control channel is transmitted with frequency hopping within the second value range, and frequency tuning is needed between two adjacent hops of transmission with frequency hopping.
By way of example and not limitation, the second value range may include {14}.
(5) A value of S falls within a third value range, an uplink control channel is transmitted without frequency hopping within the third value range, or the uplink control channel is transmitted with frequency hopping within the third value range, and frequency tuning is not needed between two adjacent hops of transmission with frequency hopping.
By way of example and not limitation, the third value range may include 15 kHz, 30 kHz, 60 kHz, or greater than 60 kHz.
(6) A value of S falls within a fourth value range, an uplink control channel can be transmitted with frequency hopping within the fourth value range, and frequency tuning is needed between two adjacent hops of transmission with frequency hopping.
By way of example and not limitation, the fourth value range may include 15 kHz, 30 kHz, or 60 kHz.

S203: The terminal device sends uplink control information on a resource associated with the resource block index.

It should be noted that the terminal device may send the uplink control information without frequency hopping on the resource associated with the resource block index, or may send the uplink control information with frequency hopping on the resource associated with the resource block index, or may repeatedly send the uplink control information on the resource associated with the resource block index.

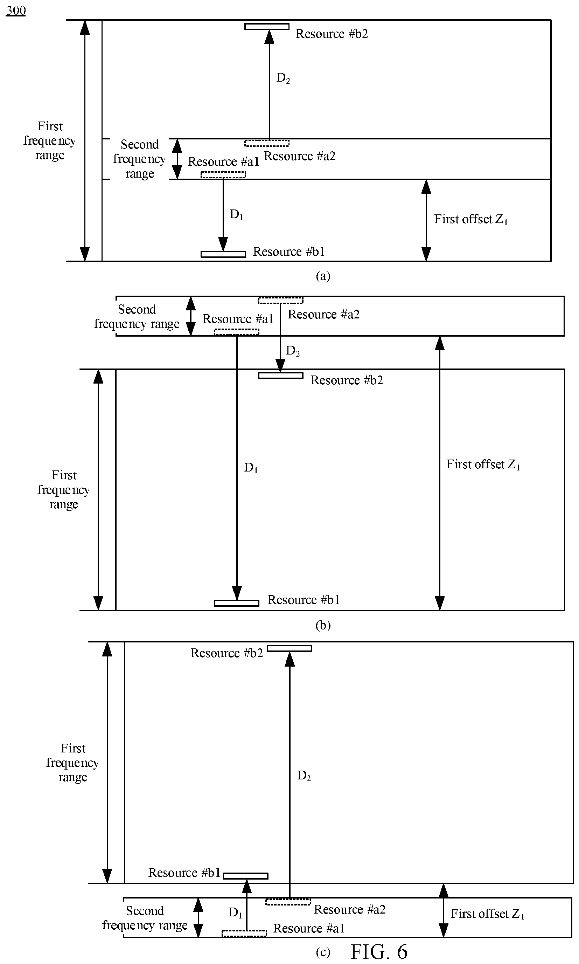

The following further describes an information transmission method 300 in this application with reference to FIG. 6.

The information transmission method may be understood as follows: A resource #a (corresponding to a second frequency domain resource) that is used to send uplink control information and that is determined by the terminal device #1 (for example, redcap UE) based on an uplink control channel resource index, a physical resource block offset parameter, a number of resource blocks included in a second frequency range (the second frequency range is less than or equal to a maximum channel bandwidth supported by a terminal device), and a number of initial cyclic shift indexes included in an initial cyclic shift index set falls within the second frequency range. In other words, the resource #a is located in a BWP of the terminal device #1, or the resource #a falls within a maximum channel bandwidth supported by the terminal device #1. The resource #a causes fragmentation of an available resource (corresponding to a third frequency range) of the terminal device #2. Herein, the resource #a may be determined according to Formula 1 to Formula 4, and details are not described herein again. On this basis, the terminal device #1 first determines a first frequency range and a first offset parameter (which may be denoted as $Z_1$), and then determines, based on the first offset parameter, a number of resource blocks included in the first frequency range (the first frequency range is greater than the maximum channel bandwidth supported by the terminal device), the uplink control channel resource index, the physical resource block offset parameter, and the number of initial cyclic shift indexes included in the initial cyclic shift index set, a resource #b used to send the uplink control information. The resource #b falls within the first frequency range, and the resource #b falls outside the second frequency range. This improves a frequency hopping gain of sending a PUCCH, reduces a limitation on resource allocation for the terminal device #2, reduces resource fragmentation, and improves flexibility of the available resource of the terminal device #2 from a perspective of a network device.

It should be noted that the first offset parameter in this embodiment may be understood as the foregoing target offset parameter.

It should be noted that the first offset parameter may be understood as an offset value between a location (corresponding to a first location) of a $0^{th}$ resource block index (that is, a start RB in the first frequency range) in the first frequency range and a location (corresponding to a second location) of a $0^{th}$ resource block index (that is, a start RB in the second frequency range) in the second frequency range. Optionally, the first offset parameter may be in a unit of RB. The first offset parameter may be a positive value or a negative value, and the positive value and the negative value respectively correspond to different first offset parameter directions. For example, the positive value may indicate an offset toward a direction in which an RB index increases, that is, the start RB in the second frequency range is greater than the start RB in the first frequency range. The negative value may indicate an offset toward a direction in which an RB index decreases, that is, the start RB in the second frequency range is less than the start RB in the first frequency range. 0 may indicate that a location of the start RB in the first frequency range is aligned with a location of the start RB in the second frequency range.

It should be noted that the first offset parameter may alternatively be understood as an offset value between a location (corresponding to a second location) of a $0^{th}$ resource block index (that is, a start RB in the second frequency range) in the second frequency range and a location (corresponding to a first location) of a $0^{th}$ resource block index (that is, a start RB in the first frequency range) in the first frequency range. Optionally, the first offset parameter may be in a unit of RB. The first offset parameter may be a positive value or a negative value, and the positive value and the negative value respectively correspond to different first offset parameter directions. For example, the positive value may indicate an offset toward a direction in which an RB index increases, that is, the start RB in the second frequency range is less than the start RB in the first frequency range. The negative value may indicate an offset toward a direction in which an RB index decreases, that is, the start RB in the second frequency range is greater than the start RB in the first frequency range. 0 may indicate that a location of the start RB in the first frequency range is aligned with a location of the start RB in the second frequency range.

It should be further noted that the first frequency range may be a carrier, or a BWP in which the terminal device #2 operates, or any bandwidth greater than the second frequency range in a carrier range, or any frequency range whose bandwidth is greater than the second frequency range (any BWP whose bandwidth is greater than the second frequency range). This is not limited in this application, provided that it can be ensured that the resource #b falls outside the second frequency range.

In a possible implementation, the resource #b is a resource used by the terminal device #1 to transmit (or send) the uplink control information with frequency hopping. In this case, a resource that corresponds to a first hop and that sends the uplink control information may be denoted as the resource #b1. A resource that corresponds to a second hop and that sends the uplink control information may be denoted as the resource #b2. The resource #b1 and the resource #b2 fall within the first frequency range. For example, the resource #b1 and the resource #b2 are respectively located at two ends of the carrier. Alternatively, the resource #b1 and the resource #b2 are separately adjacent to a PUCCH resource of the terminal device #2. Similarly, for ease of description, the resource #a in a scenario with frequency hopping is also classified into a resource #a1 and a resource #a2.

It should be noted that, to resolve a resource fragment problem in the information transmission method, the network device may indicate the terminal device #1 to determine the foregoing related parameters of the resource #b (or the resource #b1 and the resource #b2). Manners for determining the first offset parameter include but are not limited to the following several manners:

(1) The network device directly configures the first offset parameter $Z_1$ for the terminal device #1.
(2) The network device configures the first frequency range for the terminal device #1, and the terminal device #1 calculates the first offset parameter $Z_1$ based on the start RB (corresponding to the first location) in the first frequency range and the start RB (corresponding to the second location) in the second frequency range.

Optionally, the network device may carry, in an SIB 1 or downlink control information for scheduling a PDSCH carrying the SIB 1, configuration information related to the first offset parameter or the first frequency range in the foregoing manner.

In a possible implementation, a scenario with frequency hopping is used as an example. The terminal device #1 may determine the resource #b1 and the resource #b2 in the following manner: The terminal device #1 first determines locations of the resource #a1 and the resource #a2 that fall within the second frequency range. In this case, refer to Formula 1 to Formula 4. Details are not described herein again. The terminal device #1 then determines an offset parameter $D_1$ (corresponding to a first sub-offset) between the resource #a1 and the resource #b1 and an offset parameter $D_2$ (corresponding to a second sub-offset) between the resource #a2 and the resource #b2 based on the first offset parameter. For example, $D_1$ may be the first offset parameter, and $D_2$ may be determined based on the first offset parameter and the number of RBs included in the first frequency range.

FIG. 6 shows three scenarios (a), (b), and (c) in which the terminal device #1 determines the resource #b1 and the resource #b2 in this application. Each scenario corresponds to a different frequency location relationship between the second frequency range (for example, the BWP) and the first frequency range of the terminal device #1 (for example, RedCap UE). In all the foregoing three scenarios, frequency resource locations corresponding to the resource #b1 and the resource #b2 may be determined in the following manner.

If a PUCCH resource index $r_{PUCCH}$ is 0 to 7, that is, floor($r_{PUCCH}$ /8) = 0, an index $X_1$ (namely, a first resource block index) of an RB corresponding to the resource #b1 in the first frequency range is:

$$\begin{aligned} X_1 &= RB_{BWP}^{offset} + \left\lfloor r_{PUCCH} / N_{CS} \right\rfloor + D_1 \\ &= RB_{BWP}^{offset} + \left\lfloor r_{PUCCH} / N_{CS} \right\rfloor + Z_1 \end{aligned} \qquad \text{Formula 15}$$

In this case, an index (namely, a second resource block index) $X_2$ of an RB corresponding to the resource #b2 in the first frequency range is:

$$\begin{aligned} X_2 &= N_{BWP}^{size} - 1 - RB_{BWP}^{offset} - \left\lfloor r_{PUCCH} / N_{CS} \right\rfloor + D_2 \\ &= N_{BWP}^{size} - 1 - RB_{BWP}^{offset} - \left\lfloor r_{PUCCH} / N_{CS} \right\rfloor + (N_{size} + Z_1 - N_{BWP}^{size}) \quad \text{Formula 16} \\ &= N_{size} - 1 - RB_{BWP}^{offset} - \left\lfloor r_{PUCCH} / N_{CS} \right\rfloor + Z_1 \end{aligned}$$

If a PUCCH resource index $r_{PUCCH}$ is 8 to 15, that is, floor($r_{PUCCH}$ /8) = 1, an index $X_1$ (namely, a first resource block index) of an RB corresponding to the resource #b1 in the first frequency range is:

$$\begin{aligned} X_1 &= N_{BWP}^{size} - 1 - RB_{BWP}^{offset} - \left\lfloor (r_{PUCCH} - 8) / N_{CS} \right\rfloor + D_1 \\ &= N_{BWP}^{size} - 1 - RB_{BWP}^{offset} - \left\lfloor (r_{PUCCH} - 8) / N_{CS} \right\rfloor + (N_{size} + Z_1 - N_{BWP}^{size}) \quad \text{Formula 17} \\ &= N_{size} - 1 - RB_{BWP}^{offset} - \left\lfloor (r_{PUCCH} - 8) / N_{CS} \right\rfloor + Z_1 \end{aligned}$$

In this case, an index (namely, a second resource block index) $X_2$ of an RB corresponding to the resource #b2 in the first frequency range is:

$$\begin{aligned} X_2 &= RB_{BWP}^{offset} + \left\lfloor (r_{PUCCH} - 8) / N_{CS} \right\rfloor + D_2 \\ &= RB_{BWP}^{offset} + \left\lfloor (r_{PUCCH} - 8) / N_{CS} \right\rfloor + Z_1 \end{aligned} \qquad \text{Formula 18}$$

$N_{size}$ is the number of resource blocks included in the first frequency range, $N_{BWP}^{size}$ is the number of resource blocks included in the second frequency range, $RB_{BWP}^{offset}$ is the physical resource block offset parameter, $r_{PUCCH}$ is the uplink control channel resource index, $N_{CS}$ is the number of initial cyclic shift indexes included in the initial cyclic shift

index set, $D_1$ is a first sub-offset parameter used to determine the first resource block index, $D_2$ is a second sub-offset parameter used to determine the second resource block index, $Z_1$ is the first offset parameter, floor($r_{PUCCH}$/8) indicates rounding down a result of $r_{PUCCH}$/8, and $\left\lfloor (r_{PUCCH} - 8) / N_{CS} \right\rfloor$ indicates rounding down a result of ($r_{PUCCH}$ - 8) / $N_{CS}$.

It should be noted that frequency locations of the resource #b1 and the resource #b2 are associated with a total number of RBs in the first frequency range and the first offset parameter.

In a possible implementation, before the terminal device #1 determines the resource #b (or the resource #b1 and the resource #b2), the information transmission method may further include: The network device determines that the resource #a (or the resource #a1 and the resource #a2) corresponding to the terminal device #1 does not meet a preset condition #1. The preset condition #1 is used to determine whether the resource #a (or the resource #a1 and the resource #a2) corresponding to the terminal device #1 causes fragmentation of an available resource of another terminal device (for example, the terminal device #1). For example, the preset condition #1 may be that the resource #a (or the resource #a1 and the resource #a2) corresponding to the terminal device #1 is located in the BWP of the terminal device #2. If the preset condition #1 is not met, it may be understood that the BWPs of the terminal device #1 and the terminal device #2 do not overlap in frequency. In other words, there is no resource fragmentation problem.

In the foregoing information transmission method, the terminal device #1 may determine, based on the first offset parameter and the first frequency range, that the resource #b (or the resource #b1 and the resource #b2) falling outside the second frequency range is used to send the uplink control information. The resource #b (or the resource #b1 and the resource #b2) falls within the first frequency range. The resource #b (or the resource #b1 and the resource #b2) may be located at the two ends of the carrier, or may be adjacent to a resource used by the terminal device #2 to send the uplink control information. This avoids the resource fragmentation problem.

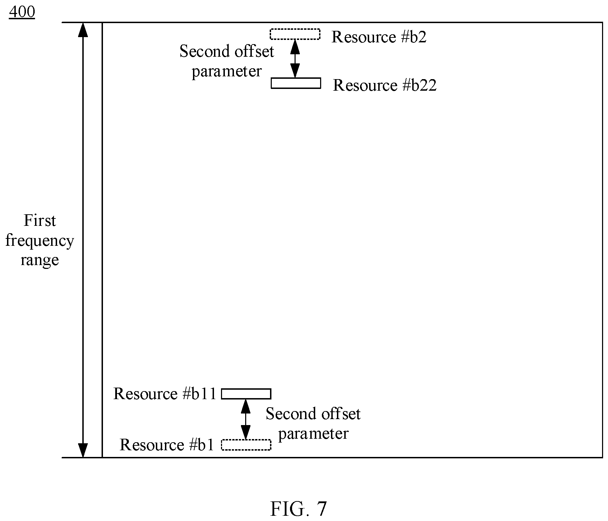

The following further describes an information transmission method 400 in this application with reference to FIG. 7.

The information transmission method may be further understood as follows: The terminal device #1 may not first determine a resource #a (or a resource #a1 and a resource #a2), does not need to determine an offset parameter $D_1$ and an offset parameter $D_2$, but only needs to determine a resource #b based on a first frequency range, an uplink control channel resource index, a physical resource block offset parameter, and a number of initial cyclic shift indexes included in an initial cyclic shift index set. The resource #b falls within the first frequency range, and the resource #b falls outside a second frequency range. This improves a frequency hopping gain of sending a PUCCH, reduces a limitation on resource allocation for the terminal device #2, reduces resource fragmentation, and improves flexibility of an available resource of the terminal device #2 from a perspective of a network device.

In a possible implementation, the terminal device #1 determines, in the following manner, frequency resource locations corresponding to a resource #b1 and a resource #b2.

If a PUCCH resource index $r_{PUCCH}$ is 0 to 7, that is, floor($r_{PUCCH}$/8) = 0, an index $X_1$ of an RB corresponding to the resource #b1 in the first frequency range is:

$$X_1 = RB_{BWP}^{offset} + \left\lfloor r_{PUCCH} / N_{CS} \right\rfloor \quad \text{Formula 19}$$

In this case, an index $X_2$ of an RB corresponding to the resource #b2 in the first frequency range is:

$$X_2 = N_{size} - 1 - RB_{BWP}^{offset} - \left\lfloor r_{PUCCH} / N_{CS} \right\rfloor \quad \text{Formula 20}$$

If a PUCCH resource index $r_{PUCCH}$ is 8 to 15, that is, floor($r_{PUCCH}$/8) = 1, an index $X_1$ of an RB corresponding to the resource #b1 in the first frequency range is:

$$X_1 = N_{size} - 1 - RB_{BWP}^{offset} - \left\lfloor (r_{PUCCH} - 8) / N_{CS} \right\rfloor \quad \text{Formula 21}$$

In this case, an index $X_2$ of an RB in which a second hop of the PUCCH is located is:

$$X_2 = RB_{BWP}^{offset} + \left\lfloor (r_{PUCCH} - 8) / N_{CS} \right\rfloor \quad \text{Formula 22}$$

$N_{size}$ is a number of resource blocks included in the first frequency range, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, floor($r_{PUCCH}$/8) indicates rounding down a result of $r_{PUCCH}$ /8, and

$\left\lfloor (r_{PUCCH} - 8)/N_{CS} \right\rfloor$ indicates rounding down a result of $(r_{PUCCH} - 8)/N_{CS}$.

It should be understood that, in different frequency domain ranges, a same RB index may indicate different frequency domain resources. For example, a resource whose RB index is 0 and that falls within the first frequency range and a resource whose RB index is 0 and that falls with the second frequency range correspond to different frequency domain ranges.

The resource #b (or the resource #b1 and the resource #b2) determined in the foregoing embodiment of this application can avoid a resource fragmentation problem from a perspective of the network device, but the resource #b (or the resource #b1 and the resource #b2) may conflict with a resource (namely, a third frequency domain resource) that is determined by the terminal device #2 and that is used to transmit uplink control information. To further avoid a conflict between frequency domain resources of PUCCHs of the terminal device #1 and the terminal device #2, and to further improve flexibility of frequency locations of a first hop and a second hop corresponding to the frequency domain resource of the PUCCH of the terminal device #1, the network device may further configure an offset parameter (which may be denoted as a second offset parameter N_offset) of the resource #b (or the resource #b1 and the resource #b2) for the terminal device #1. The terminal device #1 may further adjust a frequency location of the PUCCH based on the second offset parameter, to avoid the resource conflict. For example, the PUCCH resource of the terminal device #1 may be allocated, based on the second offset parameter, to a frequency location adjacent to the PUCCH resource of the terminal device #2.

Optionally, the second offset parameter may be in a unit of RB. The second offset parameter may be a positive value or a negative value, and the positive value and the negative value respectively correspond to different second offset parameter directions. For example, the positive value may indicate an offset toward a direction in which an RB index increases, that is, a start RB in the second frequency range is greater than a start RB in the first frequency range. The negative value may indicate an offset toward a direction in which an RB index decreases, that is, a start RB in the second frequency range is less than a start RB in the first frequency range. 0 may indicate that a location of a start RB in the first frequency range is aligned with a location of a start RB in the second frequency range. For example, the positive value may indicate an offset toward a direction in which an RB index increases, that is, a start RB in the second frequency range is less than a start RB in the first frequency range. The negative value may indicate an offset toward a direction in which an RB index decreases, that is, a start RB in the second frequency range is greater than a start RB in the first frequency range. 0 may indicate that a location of a start RB in the first frequency range is aligned with a location of a start RB in the second frequency range.

In this embodiment, the second offset parameter may be understood as a target offset parameter indicating that a first sub-offset parameter is the same as a second sub-offset parameter.

As shown in FIG. 7, a scenario with frequency hopping is used as an example. Locations of the resource #b1 and the resource #b2 may be adjusted based on the second offset parameter (N_offset), and a resource #b1 and a resource #b2 obtained after location adjustment are respectively denoted as a resource #b11 and a resource #b22.

In a possible implementation, the terminal device #1 determines, in the following manner, frequency resource locations corresponding to the resource #b11 and the resource #b22.

If the PUCCH resource index $r_{PUCCH}$ is 0 to 7, that is, floor( $r_{PUCCH}$ /8) = 0, an index $X_1$ of an RB corresponding to the resource #b11 is:

$$X_1 = RB_{BWP}^{offset} + \left\lfloor r_{PUCCH}/N_{CS} \right\rfloor + N\_\text{offset} \quad \text{Formula 23}$$

In this case, an index $X_2$ of an RB corresponding to the resource #b22 is:

$$X_2 = N_{BWP}^{size} - 1 - RB_{BWP}^{offset} - \left\lfloor r_{PUCCH}/N_{CS} \right\rfloor + N\_\text{offset} \quad \text{Formula 24}$$

If the PUCCH resource index $r_{PUCCH}$ is 8 to 15, that is, floor( $r_{PUCCH}$ /8) = 1, an index $X_1$ of an RB corresponding to the resource #b11 is:

$$X_1 = N_{BWP}^{size} - 1 - RB_{BWP}^{offset} - \left\lfloor (r_{PUCCH} - 8)/N_{CS} \right\rfloor + N\_\text{offset} \quad \text{Formula 25}$$

In this case, an index $X_2$ of an RB corresponding to the resource #b22 is:

$$X_2 = RB_{BWP}^{offset} + \left\lfloor (r_{PUCCH} - 8) / N_{CS} \right\rfloor + N\_offset \quad \text{Formula 26}$$

In this implementation, the target offset parameter may be understood as including the second offset parameter.

With reference to the embodiment corresponding to FIG. 6, frequency resource locations corresponding to the resource #b11 and the resource #b22 are determined in another possible manner:

If the PUCCH resource index $r_{PUCCH}$ is 0 to 7, that is, floor($r_{PUCCH}$/8) = 0, an index $X_1$ (namely, a first resource block index) of an RB corresponding to the resource #b11 is:

$$X_1 = RB_{BWP}^{offset} + \left\lfloor r_{PUCCH} / N_{CS} \right\rfloor + Z_1 + N\_offset \quad \text{Formula 27}$$

In this case, an index $X_2$ (namely, a second resource block index) of an RB corresponding to the resource #b22 is:

$$X_2 = N_{size} - 1 - RB_{BWP}^{offset} - \left\lfloor r_{PUCCH} / N_{CS} \right\rfloor + Z_1 + N\_offset \quad \text{Formula 28}$$

If the PUCCH resource index $r_{PUCCH}$ is 8 to 15, that is, floor($r_{PUCCH}$/8) = 1, an index X (namely, a first resource block index) of an RB corresponding to the resource #b11 is:

$$X_1 = N_{size} - 1 - RB_{BWP}^{offset} - \left\lfloor (r_{PUCCH} - 8) / N_{CS} \right\rfloor + Z_1 + N\_offset \quad \text{Formula 29}$$

In this case, an index $X_2$ (namely, a second resource block index) of an RB corresponding to the resource #b22 is:

$$X_2 = RB_{BWP}^{offset} + \left\lfloor (r_{PUCCH} - 8) / N_{CS} \right\rfloor + Z_1 + N\_offset \quad \text{Formula 30}$$

$N\_offset$ is the second offset parameter, $N_{size}$ is the number of resource blocks included in the first frequency range, $N_{BWP}^{size}$ is a number of resource blocks included in the second frequency range, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, $Z_1$ is a first offset parameter, floor($r_{PUCCH}$/8) indicates rounding down a result of $r_{PUCCH}$/8, and $\left\lfloor (r_{PUCCH} - 8) / N_{CS} \right\rfloor$ indicates rounding down a result of ($r_{PUCCH}$ -8)/ $N_{CS}$.

In this implementation, the target offset parameter may be understood as including the first offset parameter and the second offset parameter.

It should be noted that manners which the terminal device #1 determines the second offset parameter may include the following manners:

(1) A terminal device determines the second offset parameter by receiving third information of the network device. For example, the third information may be an SIB 1, or a field in the SIB 1, or DCI for scheduling a PDSCH carrying the SIB 1, or a field in the DCI for scheduling the PDSCH carrying the SIB 1, or a field in uplink control channel configuration information PUCCH-ConfigCommon.

(2) A terminal device determines the second offset parameter in a predefined manner. For example, the second offset parameter may be a predefined value, an integer multiple of 2, an integer multiple of 3, or an integer multiple of 4, and a unit may be RB.

(3) A terminal device determines the second offset parameter according to a predefined rule, for example, determines the second offset parameter based on a frequency location (an example of the predefined rule) that is occupied by a PUCCH resource set and that is allocated to the terminal device #2, so that the frequency domain resource of the PUCCH of the terminal device #1 is at the frequency location adjacent to the frequency domain resource of the PUCCH of the terminal device #2.

**Table 2**

| Index | PUCCH format | Start symbol | Number of symbols | PRB offset | Initial cyclic shift | Step of a second offset parameter (RB) |
|---|---|---|---|---|---|---|
| 0 | 0 | 12 | 2 | 0 | {0, 3} | 4 |
| 1 | 0 | 12 | 2 | 0 | {0, 4, 8} | 3 |
| 2 | 0 | 12 | 2 | 3 | {0, 4, 8} | 3 |
| 3 | 1 | 10 | 4 | 0 | {0, 6} | 4 |
| 4 | 1 | 10 | 4 | 0 | {0, 3, 6, 9} | 2 |
| 5 | 1 | 10 | 4 | 2 | {0, 3, 6, 9} | 2 |
| 6 | 1 | 10 | 4 | 4 | {0, 3, 6, 9} | 2 |
| 7 | 1 | 4 | 10 | 0 | {0, 6} | 4 |
| 8 | 1 | 4 | 10 | 0 | {0, 3, 6, 9} | 2 |
| 9 | 1 | 4 | 10 | 2 | {0, 3, 6, 9} | 2 |
| 10 | 1 | 4 | 10 | 4 | {0, 3, 6, 9} | 2 |
| 11 | 1 | 0 | 14 | 0 | {0, 6} | 4 |
| 12 | 1 | 0 | 14 | 0 | {0, 3, 6, 9} | 2 |
| 13 | 1 | 0 | 14 | 2 | {0, 3, 6, 9} | 2 |
| 14 | 1 | 0 | 14 | 4 | {0, 3, 6, 9} | 2 |
| 15 | 1 | 0 | 14 | $\left\lfloor N_{BWP}^{size} / 4 \right\rfloor$ | {0, 3, 6, 9} | 2 |

In the foregoing information transmission method, the terminal device #1 may determine, based on the first frequency range, that the resource #b (or the resource #b1 and the resource #b2) is used to send the uplink control information. The resource #b (or the resource #b1 and the resource #b2) falls within the first frequency range. The resource #b (or the resource #b1 and the resource #b2) may avoid fragmentation of an available frequency domain resource of the terminal device #2. In the foregoing information transmission method, the terminal device #1 may further determine the second offset parameter, and determine the resource #b11 and the resource #b22 based on the second offset parameter, to avoid the conflict with the frequency resource of the PUCCH of the terminal device #2. For example, a conflict between a frequency resource used by the terminal device #1 to send an Msg4 and a frequency resource used by the terminal device #2 to send the Msg4 can be avoided. Optionally, the second offset parameter may be used to make the frequency resource of the PUCCH of the terminal device #1 and the frequency resource of the PUCCH of the terminal device #2 adjacent in frequency domain.

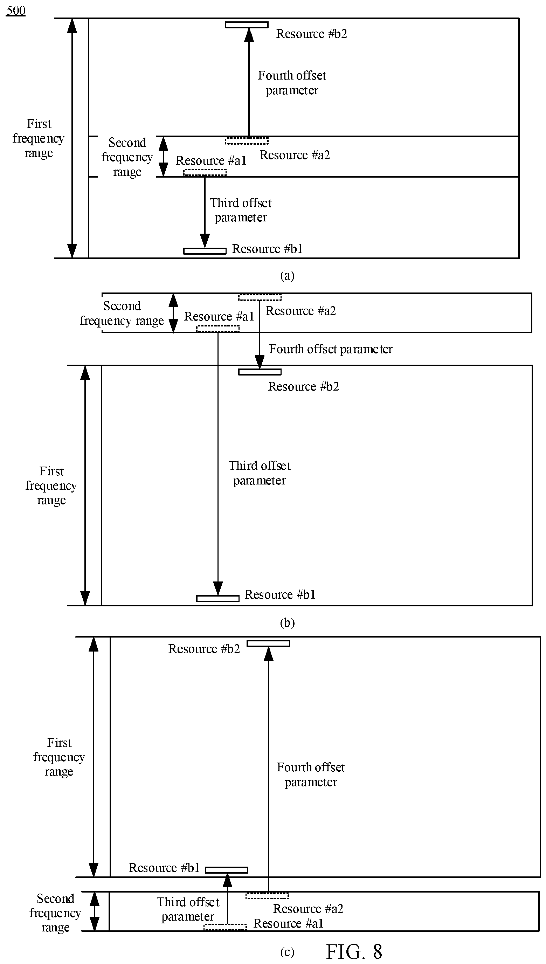

The following further describes an information transmission method 500 in this application with reference to FIG. 8.

In the foregoing embodiments of this application, in the scenario with frequency hopping, the network device configures an offset parameter for one hop of frequency domain resource of the frequency domain resource of the PUCCH of the terminal device #1, and the terminal device #1 determines another hop of frequency domain resource of the frequency domain resource of the PUCCH of the terminal device #1 based on the offset parameter. In another possible implementation, the network device may alternatively respectively configure offset parameters for two hops of frequency domain resources of the PUCCH of the terminal device #1. For example, an offset parameter corresponding to a first hop of frequency domain resource is referred to as a third offset parameter (which may be denoted as RB_offset1), and an offset parameter corresponding to a second hop of frequency domain resource is denoted as a fourth offset parameter (which may be denoted as RB_offset2).

In this embodiment, a target offset parameter includes the third offset parameter (corresponding to a first sub-offset parameter) and the fourth offset parameter (corresponding to a second sub-offset parameter).

As shown in FIG. 8, in this implementation, the terminal device #1 determines locations of a resource #b1 and a resource #b2 based on the third offset parameter and the fourth offset parameter that are configured by the network device. Specifically, a frequency location of the resource #b1 corresponding to a first hop of the PUCCH of the terminal device #1 is determined based on the third offset parameter, and a frequency location of the resource #b2 corresponding to a second hop of the PUCCH of the terminal device #1 is determined based on the fourth offset parameter, to avoid resource fragmentation of the terminal device #2. For example, the resource #b1 and the resource #b2 may fall outside a maximum channel bandwidth range supported by the terminal device #2, or the resource #b1 and the resource #b2 may be located at two ends of the maximum channel bandwidth range supported by the terminal device #2.

In a possible implementation, the terminal device #1 determines, in the following manner, frequency resource locations corresponding to the resource #b1 and the resource #b2.

If a PUCCH resource index $r_{PUCCH}$ is 0 to 7, that is, floor($r_{PUCCH}$ /8) = 0, an index $X_1$ of an RB corresponding to the resource #b1 in a first frequency range is:

$$X_1 = RB_{BWP}^{offset} + \lfloor r_{PUCCH} / N_{CS} \rfloor + N\_\text{offset1} \quad \text{Formula 31}$$

In this case, an index $X_2$ of an RB corresponding to the resource #b2 in the first frequency range is:

$$X_2 = N_{BWP}^{size} - 1 - RB_{BWP}^{offset} - \lfloor r_{PUCCH} / N_{CS} \rfloor + N\_\text{offset2} \quad \text{Formula 32}$$

If a PUCCH resource index $r_{PUCCH}$ is 8 to 15, that is, floor($r_{PUCCH}$ /8) = 1, an index $X_1$ of an RB corresponding to the resource #b1 in a first frequency range is:

$$X_1 = N_{BWP}^{size} - 1 - RB_{BWP}^{offset} - (\lfloor r_{PUCCH} - 8) / N_{CS} \rfloor + N\_\text{offset1} \quad \text{Formula 33}$$

In this case, an index $X_2$ of an RB in which the second hop of the PUCCH is located is:

$$X_2 = RB_{BWP}^{offset} + \lfloor (r_{PUCCH} - 8) / N_{CS} \rfloor + N\_\text{offset2} \quad \text{Formula 34}$$

$N\_\text{offset1}$ is the third offset parameter, $N\_\text{offset2}$ is the fourth offset parameter, $N_{BWP}^{size}$ is a number of resource blocks included in a second frequency range, $RB_{BWP}^{offset}$ is a physical resource block offset parameter, $r_{PUCCH}$ is the uplink control channel resource index, $N_{cs}$ is a number of initial cyclic shift indexes included in an initial cyclic shift index set, floor($r_{PUCCH}$ /8) indicates rounding down a result of $r_{PUCCH}$ /8, and $\lfloor (r_{PUCCH} - 8) / N_{CS} \rfloor$ indicates rounding down a result of ($r_{PUCCH}$ - 8) / $N_{CS}$.

It should be noted that the third offset parameter and the fourth offset parameter may be positive values or negative values. The positive value and the negative value respectively correspond to different frequency domain movement directions. For example, the positive value may indicate an offset toward a direction in which an RB index increases, and a negative value may indicate an offset toward a direction in which an RB index decreases. Optionally, the third offset parameter and the fourth offset parameter may be in a unit of RB.

It should be further noted that ranges of the third offset parameter and the fourth offset parameter are related to the first frequency range. For example, if the first frequency range is a carrier, that units of the third offset parameter and the fourth offset parameter are RBs is used as an example. The ranges of the third offset parameter and the fourth offset parameter are integers whose values are 0 to 274.

In a possible implementation, configuration of the third offset parameter and the fourth offset parameter is associated with uplink control channel configuration information PUCCH-ConfigCommon. Each PUCCH resource set corresponds to configuration of a group of third offset parameters and fourth offset parameters. A possible structure includes at least the following content:

| PUCCH-ConfigCommon ::= | SEQUENCE { |
| --- | --- |
| pucch-ResourceCommon | INTEGER (0..15) |
| pucch-GroupHopping | ENUMERATED{neither,enable,disable} |
| hoppingId | INTEGER (0..1023) |
| p0-nominal | INTEGER (-202..24) |
| N_offset1 | INTEGER (0...274) |
| N_offset2 | INTEGER (0…274) |
| ... | |
| } | |

In a possible implementation, configuration of the third offset parameter and the fourth offset parameter is associated with configuration of a PUCCH resource set. Each resource set corresponds to configuration of a group of third offset parameters and fourth offset parameters. Possible association is as follows:

In the foregoing information transmission method, the network device may indicate the third offset parameter and the fourth offset parameter. The network device may flexibly adjust the frequency locations (namely, the resource #b1 and the resource #b2) of the first hop and the second hop of the PUCCH of the terminal device #1 based on the third offset parameter and the fourth offset parameter. Correspondingly, the terminal device #1 may respectively determine frequency domain locations of the resource #b1 and the resource #b2 in the scenario with frequency hopping based on the third offset parameter and the fourth offset parameter, to avoid fragmentation of an available frequency domain resource of the terminal device #2.

To resolve a resource fragment problem, in this application, the first hop of frequency domain resource and/or the second hop of frequency domain resource of the PUCCH resource of the terminal device #1 fall/falls outside a maximum channel bandwidth supported by the terminal device #1 (that is, outside a BWP). Therefore, the terminal device #1 needs to perform frequency tuning (retuning) to send the first hop of the PUCCH and/or the second hop of the PUCCH. It may be understood that an interval of at least retuning time (for example, the retuning time is 140 microseconds) is needed between the first hop of frequency domain resource and the second hop of frequency domain resource of the PUCCH resource of the terminal device #1. As a result, a plurality of symbols of the first hop of PUCCH resource and/or the second hop of PUCCH resource may need to be occupied for frequency tuning, and transmission performance of the terminal device #1 deteriorates. In this case, orthogonality of the PUCCH resource is further damaged, and interference to another terminal device may be caused.

The following further describes the information transmission method in this application for the foregoing problem of whether frequency tuning is performed between the first hop and the second hop of PUCCH transmission.

In a possible implementation, the terminal device #1 supports frequency hopping outside a BWP in which the terminal device #1 operates only when a subcarrier spacing (subcarrier spacing, SCS) (which may be denoted as S) and a PUCCH length (which may be denoted as L) meet a preset condition #2. In other words, the terminal device #1 performs only frequency hopping within the BWP in which the terminal device #1 operates.

It should be noted that whether the subcarrier spacing S and the PUCCH length L meet the preset condition #2 may be determined by the network device, or may be determined by the terminal device (for example, the terminal device #1). This is not limited in this application.

By way of example and not limitation, the preset condition #2 may be that L and/or S meet/meets at least one of the following conditions:

(1) A minimum value of L is greater than or equal to 4.
(2) A minimum value of L is determined based on S.
(3) A value of L falls within a first value range, the PUCCH is transmitted without frequency hopping, or the PUCCH is transmitted with frequency hopping, and frequency tuning is not needed between two adjacent hops of transmission with frequency hopping.
(4) A value of L falls within a second value range, the PUCCH is transmitted with frequency hopping, and frequency tuning is needed between two adjacent hops of transmission with frequency hopping.

(5) A value of S falls within a third value range, the PUCCH is transmitted without frequency hopping, or the PUCCH is transmitted with frequency hopping, and frequency tuning is not needed between two adjacent hops of transmission with frequency hopping.

(6) A value of S falls within a fourth value range, the PUCCH can be transmitted with frequency hopping, and frequency tuning is needed between two adjacent hops of transmission with frequency hopping.

If the condition (1) is met, two hops of PUCCH transmission sent by the terminal device fall outside the second frequency range. For example, when L = 10, the two hops of PUCCH transmission sent by the terminal device fall outside the second frequency range.

If the condition (2) is met, two hops of PUCCH transmission sent by the terminal device fall outside the second frequency range or within the second frequency range. For example, when S = 15 kHz, a minimum value of L is 10, to be specific, the two hops of PUCCH transmission sent by the terminal device fall outside the second frequency range. For example, when S = 30 kHz, a minimum value of L is 14, to be specific, the two hops of PUCCH transmission sent by the terminal device fall outside the second frequency range. For example, when S = 60 kHz, the PUCCH sent by the terminal device is transmitted without frequency hopping, or the PUCCH is transmitted with frequency hopping, and two adjacent hops of transmission with frequency hopping fall within the second frequency range.

If the condition (3) is met, the PUCCH sent by the terminal device is transmitted without frequency hopping, or is transmitted with frequency hopping, and two hops fall within the second frequency range. The first value range may be that L is less than or equal to 4.

If the condition (4) is met, two hops of PUCCH transmission sent by the terminal device fall outside the second frequency range. The second value range may be that L is greater than 4, or L is greater than or equal to 10.

If the condition (5) is met, a PUCCH sent by the terminal device is transmitted without frequency hopping, or is transmitted with frequency hopping, and two hops fall within the second frequency range. The third value range may be that S is greater than or equal to 60 kHz, or S is greater than 30 kHz.

If the condition (6) is met, two hops of PUCCH transmission sent by the terminal device fall outside the second frequency range. The fourth value range may be that S is less than or equal to 30 kHz.

The conditions (1) to (6) may be combined with each other. For example, the condition (3) may be used together with the condition (5), to be specific, when the value of L falls within the first value range and S falls within the third value range, the PUCCH is transmitted without frequency hopping, or the PUCCH is transmitted with frequency hopping, frequency tuning is not needed between two adjacent hops of transmission with frequency hopping. For example, the condition (4) may be used together with the condition (6), to be specific, when the value of L falls within the second value range and S falls within the fourth value range, the PUCCH can be transmitted with frequency hopping, and frequency tuning is needed between two adjacent hops of transmission with frequency hopping.

In a possible implementation, the network device may send second information to the terminal device. The second information may indicate whether uplink control information of the terminal device is transmitted with frequency hopping. Optionally, if the second information indicates that the uplink control information of the terminal device is transmitted with frequency hopping, the second information may further indicate whether frequency tuning needs to be performed for transmission with frequency hopping of the uplink control information. In other words, the second information may further indicate that the uplink control information is transmitted with frequency hopping within the second frequency range, or the uplink control information is transmitted with frequency hopping outside the second frequency range.

In a possible implementation, the terminal device #1 supports frequency hopping outside an initial uplink BWP of the terminal device #1 only when a subcarrier spacing (subcarrier spacing, SCS) (which may be denoted as S) and a PUCCH length (which may be denoted as L) meet a preset condition #2 (namely, a first preset condition). In other words, the terminal device #1 does not perform frequency hopping or performs only frequency hopping within the initial uplink BWP of the terminal device #1.

By way of example and not limitation, the preset condition #2 may be that (1) SCS = 15 kHz, and a number of symbols of the PUCCH is 2 or 4, or may be that (2) SCS = 30 kHz or 60 kHz, and a number of symbols of the PUCCH is 2, 4, or 10, or may be that (3) the SCS is greater than 60 kHz.

If the foregoing implementation is used, PUCCH resource sets corresponding to some indexes in an existing PUCCH resource set configuration table (for example, Table 1) are unavailable for the terminal device #1. For example, PUCCH resource sets corresponding to indexes 0 to 6 in Table 1 cannot be used as frequency hopping resources of the PUCCH. For the terminal device #1, different time domain configuration may be used for resources in the PUCCH resource sets corresponding to these indexes.

Table 3 shows possible reconfiguration of Table 1. Reconfiguration of rows in which numbers of symbols of the PUCCH are 2 and 4 in Table 1 may be as follows: in a first PUCCH resource set, corresponding indexes in Table 3 are 0, 1, and 2, the PUCCH of the terminal device #1 is transmitted within a first time interval, and the first hop and the second hop of the PUCCH may fall outside the BWP; and in a second PUCCH resource set, corresponding indexes in Table 3 are 3, 4, 5, and 6, the PUCCH is transmitted within a second time interval, and the first hop and the second hop of the PUCCH may fall outside the BWP. Duration of the first time interval is different from duration of the second time interval. For example, the first time interval may be 1.5 slots or a number of symbols corresponding to the 1.5 slots, and the second time interval may be two slots or a number of symbols corresponding to the two slots. The first time interval and the second time interval may not be reflected in the table, that is, are determined in a predefined manner. For example, L = 10 corresponds to the first time interval, and L = 14 corresponds to the second time interval. The first time interval and the second time interval can ensure that there is sufficient time between the first hop and the second hop for frequency tuning. The network device may indicate, based on fourth information, whether the terminal device performs frequency hopping, and/or indicate, based on fifth information, whether the terminal device performs frequency hopping within or outside the BWP. For example, the fourth information and the fifth information each may be an MIB, an SIB 1, DCI for scheduling a PDSCH carrying the SIB 1, RRC signaling, or DCI.

In an implementation, the network device may indicate, based on $X^{th}$ information (1 bit or a plurality of bits), that the terminal device applies Table 1 or Table 3. The $X^{th}$ information may be an MIB, an SIB 1, DCI for scheduling a PDSCH carrying the SIB 1, RRC signaling, or DCI.

**Table 3**

| Index | PUCCH format | Start symbol | Number of symbols | PRB offset | Initial cyclic shift |
|---|---|---|---|---|---|
| 0 | 0 | 4 | 10, and within a first time interval | 0 | {0, 3} |
| 1 | 0 | 4 | 10, and within a first time interval | 0 | {0, 4, 8} |
| 2 | 0 | 4 | 10, and within a first time interval | 3 | {0, 4, 8} |
| 3 | 1 | 0 | 14, and within a second time interval | 0 | {0, 6} |
| 4 | 1 | 0 | 14, and within a second time interval | 0 | {0, 3, 6, 9} |
| 5 | 1 | 0 | 14, and within a second time interval | 2 | {0, 3, 6, 9} |
| 6 | 1 | 0 | 14, and within a second time interval | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{BWP}^{size} / 4 \right\rfloor$ | {0, 3, 6, 9} |

In the foregoing embodiment, the terminal device #1 performs frequency hopping outside the initial uplink BWP of the terminal device #1 only when the subcarrier spacing and the PUCCH length meet the preset condition #2. When the subcarrier spacing and the PUCCH length do not meet the preset condition #2, the terminal device #1 does not perform frequency hopping outside the initial uplink BWP of the terminal device #1, or the terminal device #1 performs only frequency hopping within the initial uplink BWP of the terminal device #1. This reduces impact of re-adjustment time on performance of a short PUCCH corresponding to the terminal device #1.

It should be noted that in the foregoing embodiments of this application, in the scenario with frequency hopping, both the first hop (corresponding to the resource #b1, the resource b#11, or the first sub-frequency domain resource) and the second hop (corresponding to the resource #b2, the resource b#22, or the second sub-frequency domain resource) may fall outside the second frequency range. Alternatively, the first hop may fall within the second frequency range, and the second hop may fall outside the second frequency range. Alternatively, the first hop may fall outside the second frequency range, and the second hop may fall within the second frequency range. Specific locations of the first hop and the second hop are not limited in this application, provided that a limitation on resource scheduling of a network side can be reduced and flexibility of resource configuration can be improved.

It should be further noted that an example in which an RB is a unit of the PUCCH resource is used for description in this embodiment of this application, and should not constitute a limitation on this application. Actually, an RE, a subcarrier, or the like may alternatively be used as a unit of the PUCCH resource. This is not limited in this application.

It should be understood that the frequency domain resource and the frequency resource in the foregoing embodiments have a same meaning in this application.

It should be further noted that the terminal device in an initial access state is used as an example for description in embodiments of this application, and should not constitute a limitation on this application. Actually, embodiments of this application are not only applicable to PUCCH resource allocation of the terminal device in the initial access state, but also applicable to PUCCH resource allocation of the terminal device in a connected state.

It should be understood that specific examples in embodiments of this application are merely intended to help a person skilled in the art better understand embodiments of this application, but are not intended to limit the scope of embodiments of this application.

It should be further understood that a value of a sequence number of each of the foregoing processes does not mean an order of an execution sequence. The execution sequence of each process should be determined based on a function and internal logic of each process, and should not be construed as any limitation on the implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further noted that in embodiments of this application, "preset", "preconfiguration", or the like may be implemented by pre-storing corresponding code or a table in a device (for example, a network device), or in another manner that may be used to indicate related information. A specific implementation of the "preset", the "preconfiguration" or the like is not limited in this application. For example, the specific implementation is a preset rule or a preset constant in embodiments of this application.

It may be understood that, in the foregoing embodiments of this application, the methods implemented by a communication device may alternatively be implemented by a component (for example, a chip or a circuit) that can be disposed inside the communication device.

The foregoing describes in detail the information transmission methods provided in embodiments of this application with reference to FIG. 5 and FIG. 8. The foregoing methods are mainly described from a perspective of interaction between the terminal device and the network device. It may be understood that, to implement the foregoing functions, the terminal device and the network device include corresponding hardware structures and/or software modules for performing the functions. A person skilled in the art may be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

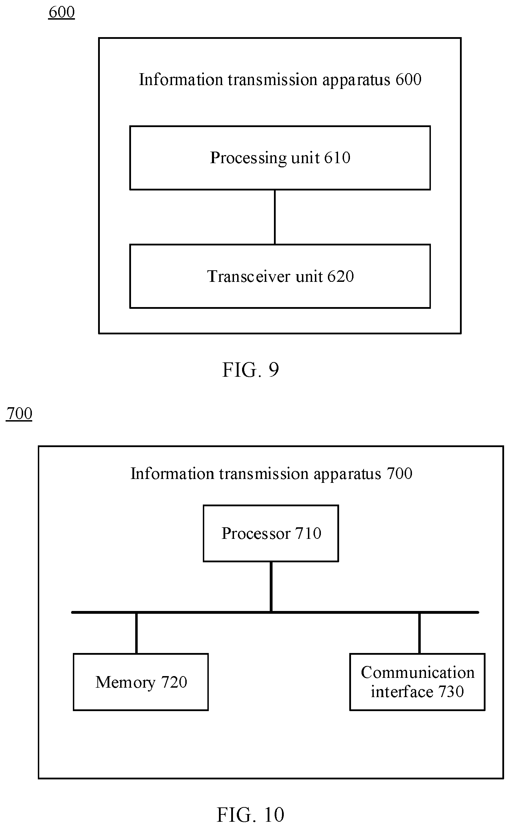

Based on a same technical concept, this application further provides a corresponding communication apparatus. The communication apparatus provided in this application may include modules or units that are in one-to-one correspondence with the methods/operations/steps/actions in the foregoing method embodiments. The unit may be implemented by a hardware circuit, software, or a combination of a hardware circuit and software. The following describes communication apparatuses provided in this application with reference to FIG. 9 to FIG. 11. It should be understood that descriptions of apparatus embodiments correspond to the descriptions of the method embodiments. Therefore, for content that is not described in detail, refer to the foregoing method embodiments. For brevity, some content is not described again.

In embodiments of this application, division into functional modules may be performed on a transmit end device or a receive end device based on the foregoing method examples. For example, various functional modules may be divided based on corresponding functions, or two or more functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used. An example in which each functional module is obtained through division based on each corresponding function is used below for description.

FIG. 9 is a schematic diagram of a structure of an information transmission apparatus 600. The communication apparatus includes a processing unit 610 and a transceiver unit 620.

The information transmission apparatus 600 may be applied to a network device, or may be applied to a terminal device, or may be a chip configured to implement functions of the network device or the terminal device in the foregoing method embodiments. This is not limited in this application.

It should be understood that the communication apparatus 600 may be a device corresponding to each of the method 200 to the method 500 in embodiments of this application. The communication apparatus 600 may include units configured to perform any one of the information transmission methods in FIG. 5 to FIG. 8. In addition, the units in the communication apparatus 600 and the foregoing other operations and/or functions respectively implement corresponding procedures of the method 200 to the method 500 in FIG. 5 to FIG. 8.

In a possible design, the communication apparatus 600 may implement any function of the terminal device and/or the network device in the embodiment shown in any one of FIG. 5 to FIG. 8.

For example, the processing unit 610 is configured to determine, by using the terminal device, a target offset parameter, an uplink control channel resource index, a physical resource block offset parameter, and a number of initial cyclic shift indexes included in an initial cyclic shift index set.

The processing unit 610 is further configured to determine, by using the terminal device, a resource block index based on the target offset parameter, the uplink control channel resource index, the physical resource block offset parameter, and the number of initial cyclic shift indexes included in the initial cyclic shift index set.

The processing unit 610 is further configured to determine, by using the terminal device based on the target offset parameter, the uplink control channel resource index, the physical resource block offset parameter, and the number of initial cyclic shift indexes included in the initial cyclic shift index set, a first resource block index corresponding to a $p^{th}$ hop of transmission with frequency hopping of uplink control information, where p is a positive integer.

The processing unit 610 is further configured to determine, by using the terminal device based on the target offset parameter, the uplink control channel resource index, the physical resource block offset parameter, the number of initial cyclic shift indexes included in the initial cyclic shift index set, and a first frequency range, a second resource block index corresponding to a $q^{th}$ hop of transmission with frequency hopping of uplink control channel data, where q is a positive integer. A resource associated with the resource block index falls within the first frequency range.

In a possible implementation, the target offset parameter includes a first sub-offset parameter and a second sub-offset parameter.

The processing unit 610 is further configured to determine, by using the terminal device, the first resource block index based on the first sub-offset parameter.

The processing unit 610 is further configured to determine, by using the terminal device, the second resource block index based on the second sub-offset parameter.

The processing unit 610 is further configured to determine the first resource block index based on the following correspondence among the target offset parameter, the uplink control channel resource index, the physical resource block offset parameter, and the number of initial cyclic shift indexes included in the initial cyclic shift index set:

$$X_1 = RB_{BWP}^{offset} + \lfloor r_{PUCCH} / N_{CS} \rfloor + D,$$

or

$$X_1 = RB_{BWP}^{offset} + \lfloor r_{PUCCH} / N_{CS} \rfloor + D_1.$$

$X_1$ is the first resource block index, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, $D$ is the target offset parameter, $D_1$ is the first sub-offset parameter used to determine the first resource block index, and $\lfloor r_{PUCCH} / N_{CS} \rfloor$ indicates rounding down a result of $r_{PUCCH} / N_{CS}$.

The processing unit 610 is further configured to determine the second resource block index based on the following correspondence among the target offset parameter, the uplink control channel resource index, the physical resource block offset parameter, and the number of initial cyclic shift indexes included in the initial cyclic shift index set:

$$X_2 = N_{size} - 1 - RB_{BWP}^{offset} - \lfloor r_{PUCCH} / N_{CS} \rfloor + D,$$

or

$$X_2 = N_{BWP}^{size} - 1 - RB_{BWP}^{offset} - \lfloor r_{PUCCH} / N_{CS} \rfloor + D,$$

or

$$X_2 = N_{BWP}^{size} - 1 - RB_{BWP}^{offset} - \lfloor r_{PUCCH} / N_{CS} \rfloor + D_2.$$

$X_2$ is the second resource block index, $N_{size}$ is a number of resource blocks included in the first frequency range, $N_{BWP}^{size}$ is a number of resource blocks included in a second frequency range, the second frequency range is less than or equal to a maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes included in the initial cyclic shift index set, $D$ is the target offset parameter, $D_2$ is the second sub-offset parameter used to determine the second resource block index, and $\lfloor r_{PUCCH} / N_{CS} \rfloor$ indicates rounding down a result of $r_{PUCCH}$ / $N_{CS}$.

The processing unit 610 is further configured to determine, by using the terminal device, the target offset parameter based on a first location and a second location. The first location is a location of a yth resource block index in the first frequency range. The second location is a location of a resource block whose resource block index is z and that falls within the second frequency range. y and z are non-negative integers. The first frequency range is greater than the maximum channel bandwidth supported by the terminal device. The second frequency range is less than or equal to the maximum channel bandwidth supported by the terminal device.

The processing unit 610 is further configured to determine, by using the terminal device, the target offset parameter based on first information.

The processing unit 610 is further configured to determine, by using the terminal device, the target offset parameter based on a predefined parameter.

The processing unit 610 is further configured to determine, by using the terminal device, the target offset parameter according to a predefined rule.

The processing unit 610 is further configured to send, by using the terminal device without frequency hopping, the uplink control information on the resource associated with the resource block index.

The processing unit 610 is further configured to determine, by using the terminal device, that a subcarrier spacing S corresponding to the terminal device and a number L of symbols of an uplink control channel resource meet a first preset condition.

The transceiver unit 620 is configured to send, by using the terminal device on the resource associated with the resource block index, the uplink control information to the network device.

The transceiver unit 620 is further configured to receive, by using the terminal device, the first information from the network device.

The transceiver unit 620 is further configured to receive, by using the terminal device, first configuration information from the network device. The first configuration information indicates a first terminal device to send the uplink control information by using at least one first frequency domain resource. The first frequency domain resource falls within the first frequency range.

The transceiver unit 620 is further configured to receive, by using the terminal device, second configuration information from the network device. The second configuration information indicates a second frequency range allocated by the network device to the first terminal device. The second frequency range includes at least one second frequency domain resource. The second frequency domain resource is used by the first terminal device to send the uplink control information. The second frequency domain resource further falls within a third frequency domain range allocated by the network device to a second terminal device. It should be noted that the first frequency domain resource falls outside the third frequency domain range. Alternatively, the first frequency domain resource is located at an edge part of the third frequency domain range.

For another example, the processing unit 610 is configured to determine a number L of symbols and/or a subcarrier spacing S that are/is used to send uplink control information.

The processing unit 610 is further configured to determine that L and/or S meet/meets at least one of the following conditions: A minimum value of L is greater than or equal to 4. A minimum value of L is determined based on S. A value of L falls within a first value range, an uplink control channel is transmitted without frequency hopping within the first value range, or the uplink control channel is transmitted with frequency hopping within the first value range, and frequency tuning is not needed between two adjacent hops of transmission with frequency hopping. A value of L falls within a second value range, an uplink control channel is transmitted with frequency hopping within the second value range, and frequency tuning is needed between two adjacent hops of transmission with frequency hopping. A value of S falls within a third value range, an uplink control channel is transmitted without frequency hopping within the third value range, or the uplink control channel is transmitted with frequency hopping within the third value range, and frequency tuning is not needed between two adjacent hops of transmission with frequency hopping. A value of S falls within a fourth value range, an uplink control channel can be transmitted with frequency hopping within the fourth value range, and frequency tuning is needed between two adjacent hops of transmission with frequency hopping.

The transceiver unit 620 is configured to send or receive the uplink control information.

The transceiver unit 620 is further configured to send or receive first information.

The transceiver unit 620 is further configured to send or receive first configuration information.

The transceiver unit 620 is further configured to send or receive second configuration information.

For another example, the transceiver unit 620 is configured to send, by using the network device, first information to the terminal device. The first information is used by the terminal device to determine a resource block index. The first information further indicates a target offset parameter, an uplink control channel resource index, a physical resource block offset parameter, and a number of initial cyclic shift indexes included in an initial cyclic shift index set.

The transceiver unit 620 is further configured to receive, by using the network device on a resource associated with the resource block index, uplink control information sent by the terminal device.

In a possible implementation, the target offset parameter includes a first sub-offset parameter and a second sub-offset parameter. The resource block index includes a first resource block index and a second resource block index. The first sub-offset parameter is used to determine the first resource block index. The second sub-offset parameter is used to determine the second resource block index.

It should be noted that, that the first information indicates the target offset parameter includes: The first information indicates a first location and a second location. The first location and the second location are used to determine the target offset parameter. The first location is a location of a $y^{th}$ resource block index in a first frequency range. The second location is a location of a resource block whose resource block index is z and that falls within a second frequency range. y and z are non-negative integers. The first frequency range is greater than a maximum channel bandwidth supported by the terminal device. The second frequency range is less than or equal to the maximum channel bandwidth supported by the terminal device. Alternatively, the first information includes the target offset parameter. Alternatively, the first information includes a predefined parameter, and the predefined parameter is used to determine the target offset parameter. Alternatively, the first information includes a predefined rule, and the predefined rule is used to determine the target offset parameter. Optionally, a value of the target offset parameter is an integer less than 0. Alternatively, a value of the target offset parameter is an integer multiple of K, where K = 2, 3, or 4.

The transceiver unit 620 is further configured to receive, by using the network device without frequency hopping on the resource associated with the resource block index, the uplink control information sent by the terminal device.

The processing unit 610 is configured to determine, by using the network device, that a subcarrier spacing S corresponding to the terminal device and a number L of symbols of an uplink control channel resource meet a first preset condition.

FIG. 10 is a structural block diagram of an information transmission apparatus 700 according to an embodiment of this application. The information transmission apparatus 700 shown in FIG. 10 includes a processor 710, a memory 720, and a communication interface 730. The processor 710 is coupled to a memory, and is configured to execute instructions stored in the memory, to control the communication interface 730 to send a signal and/or receive a signal.

It should be understood that the processor 710 and the memory 720 may be integrated into one processing apparatus. The processor 710 is configured to execute program code stored in the memory 720 to implement the foregoing functions. During specific implementation, the memory 720 may alternatively be integrated into the processor 710, or may be independent of the processor 710.

The information transmission apparatus 700 may be applied to a network device, or may be applied to a terminal device, or may be a chip configured to implement functions of the network device or the terminal device in the foregoing method embodiments. This is not limited in this application.

Specifically, the communication apparatus 700 may correspond to the terminal device or the network device corresponding to the communication methods in FIG. 5 to FIG. 8 in embodiments of this application. The communication apparatus 700 may include units configured to perform the communication methods in FIG. 5 to FIG. 8. In addition, the units in the communication apparatus 700 and the foregoing other operations and/or functions are respectively used to perform corresponding procedures of the method 200 to the method 500. It should be understood that a specific process in which the units perform the foregoing corresponding steps is described in detail in the foregoing method embodiments, and for brevity, details are not described herein.

When the communication apparatus 700 is a chip, the chip includes a transceiver unit and a processing unit. The transceiver unit may be an input/output circuit or a communication interface. The processing unit may be a processor, a microprocessor, or an integrated circuit that is integrated on the chip.

An embodiment of this application further provides a processing apparatus, including a processor and an interface. The processor may be configured to perform any method in the foregoing method embodiments.

It should be understood that the processing apparatus may be a chip. For example, the processing apparatus may be a field programmable gate array (field programmable gate array, FPGA), an application-specific integrated chip (application specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, the steps in the foregoing methods may be completed by using a hardware integrated logical circuit in the processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be completed by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memories in the systems and methods described in this specification include but are not limited to these memories and any memory of another proper type.

According to the methods provided in embodiments of this application, this application further provides a computer program product. The computer program product includes computer program code. When the computer program code is run on a computer, the computer is enabled to perform the method in either of the embodiments shown in FIG. 5 and FIG. 8.

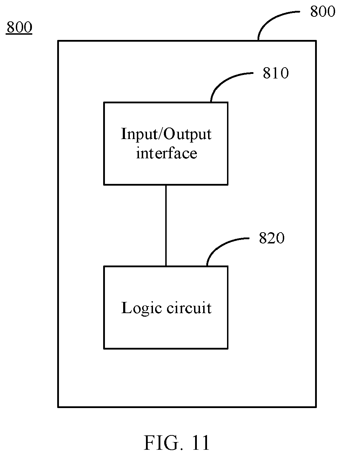

As shown in FIG. 11, an embodiment of this application further provides an apparatus 800. The apparatus 800 may be configured to implement functions of the communication apparatus in the foregoing methods. The apparatus 800 may be a communication apparatus or a chip in the communication apparatus. The communication apparatus includes:

at least one input/output interface 810 and a logic circuit 820, where the input/output interface 810 may be an input/output circuit, or may be referred to as a communication interface. The logic circuit 820 may be a signal processor, a chip, or another integrated circuit that can implement the methods in this application.

The at least one input/output interface 810 is configured to input or output information. For example, when the apparatus is a communication apparatus corresponding to a terminal device or is used in the communication apparatus corresponding to the terminal device, the input/output interface 810 is configured to obtain first information, first configuration information, or second configuration information, and the input/output interface 810 is further configured to send uplink control information.

The logic circuit 820 is configured to perform a part or all of the steps in any one of the methods provided in embodiments of this application. The logic circuit may implement the functions implemented by the processing unit 610 in the communication apparatus 600 and the processor 710 in the communication apparatus 700. For example, when the apparatus is the communication apparatus or is applied to the communication apparatus, the apparatus is configured to perform the steps performed by the communication apparatus in the possible implementations in the foregoing method embodiments. For example, the logic circuit 820 is configured to determine, with reference to various possible implementations in the foregoing method embodiments, a target offset parameter, an uplink control channel resource index, a physical resource block offset parameter, and a number of initial cyclic shift indexes included in an initial cyclic shift index set. For another example, the logic circuit 820 is configured to determine, with reference to various possible implementations in the foregoing method embodiments based on the target offset parameter, the uplink control channel resource index, the physical resource block offset parameter, and the number of initial cyclic shift indexes included in the initial cyclic shift index set, a resource block index for uplink control channel transmission.

When the communication apparatus is a chip applied to the communication apparatus, the chip implements functions of the communication apparatus in the foregoing method embodiments. The chip receives information from another module (for example, a radio frequency module or an antenna) in the communication apparatus. Alternatively, the chip sends information to another module (for example, a radio frequency module or an antenna) in the communication apparatus.

According to the communication method provided in embodiments of this application, this application further provides a computer program product. The computer program product includes a computer program or instructions. When the computer program or the instructions is/are run on a computer, any communication method in either of the embodiments shown in FIG. 5 and FIG. 8 is performed.

According to the methods provided in embodiments of this application, this application further provides a computer-readable medium. The computer-readable medium stores program code. When the program code is run on a computer, the computer is enabled to perform the method in either of the embodiments shown in FIG. 5 and FIG. 8.

According to the methods provided in embodiments of this application, this application further provides a system. The system includes the foregoing apparatus or device.

All or a part of the foregoing embodiments may be implemented by software, hardware, firmware, or any combination thereof. When software is used to implement embodiments, all or a part of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid state disc, SSD)), or the like.

The network device and the terminal device in the foregoing apparatus embodiments correspond to the network device or the terminal device in the method embodiments. A corresponding module or unit performs a corresponding step. For example, a communication unit (or a communication interface) performs a receiving step or a sending step in the method embodiments, and the processing unit 610 (or a processor) may perform a step other than the sending step and the receiving step. For a function of a specific unit, refer to a corresponding method embodiment. There may be one or more processors.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in the figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be further understood that numbers "first", "second", "#a", "#b", "#1", "#2", and the like are introduced in embodiments of this application only to distinguish between different objects, for example, distinguish between different "configuration information", "terminal devices", "preset conditions", "offset parameters", or the like. Understanding of a specific object and a correspondence between different objects should be determined based on functions and internal logic of the objects, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, that is, may be located in one location, or may be distributed on a plurality of network units. Some or all of the units may be selected based on an actual requirement to achieve the objectives of the solutions of embodiments.

In addition, functional units in embodiments of this application may be integrated into one processing unit 610, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:

determining, by a terminal device, a target offset parameter, an uplink control channel resource index, a physical resource block offset parameter, and a number of initial cyclic shift indexes comprised in an initial cyclic shift index set;

determining, by the terminal device, a resource block index based on the target offset parameter, the uplink control channel resource index, the physical resource block offset parameter, and the number of initial cyclic shift indexes comprised in the initial cyclic shift index set; and

sending, by the terminal device on a resource associated with the resource block index, uplink control information to a network device.

2. The method according to claim 1, wherein the uplink control information is transmitted with frequency hopping; and the determining, by the terminal device, a resource block index comprises:

determining, by the terminal device based on the target offset parameter, the uplink control channel resource index, the physical resource block offset parameter, and the number of initial cyclic shift indexes comprised in the initial cyclic shift index set, a first resource block index corresponding to a $p^{th}$ hop of transmission with frequency hopping of the uplink control information, wherein p is a positive integer; and/or

determining, by the terminal device based on the target offset parameter, the uplink control channel resource index, the physical resource block offset parameter, the number of initial cyclic shift indexes comprised in the initial cyclic shift index set, and a first frequency range, a second resource block index corresponding to a $q^{th}$ hop of transmission with frequency hopping of the uplink control channel data, wherein q is a positive integer, and the resource associated with the resource block index falls within the first frequency range.

3. The method according to claim 2, wherein the target offset parameter comprises a first sub-offset parameter and a second sub-offset parameter, wherein the first sub-offset parameter is used to determine the first resource block index, and the second sub-offset parameter is used to determine the second resource block index.

4. The method according to claim 2 or 3, wherein

p = 1, and q = 2; or
p = 2, and q = 1.

5. The method according to any one of claims 2 to 4, wherein
the first resource block index, the target offset parameter, the uplink control channel resource index, the physical resource block offset parameter, and the number of initial cyclic shift indexes comprised in the initial cyclic shift index set satisfy the following correspondence:

$$X_1 = RB_{BWP}^{offset} + \left\lfloor r_{PUCCH} / N_{CS} \right\rfloor + D,$$

or

$$X_1 = RB_{BWP}^{offset} + \left\lfloor r_{PUCCH} / N_{CS} \right\rfloor + D_1,$$

wherein

$X_1$ is the first resource block index, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the target offset parameter, $D_1$ is the first sub-offset parameter used to determine the first resource block index, and $\left\lfloor r_{PUCCH} / N_{CS} \right\rfloor$ indicates rounding down a result of $r_{PUCCH} / N_{CS}$.

6. The method according to any one of claims 2 to 4, wherein
the second resource block index, the target offset parameter, the uplink control channel resource index, the physical resource block offset parameter, and the number of initial cyclic shift indexes comprised in the initial cyclic shift index set satisfy the following correspondence:

$$X_2 = N_{\text{size}} - 1 - RB_{BWP}^{offset} - \left\lfloor r_{PUCCH} / N_{CS} \right\rfloor + D,$$

or

$$X_2 = N_{BWP}^{size} - 1 - RB_{BWP}^{offset} - \left\lfloor r_{PUCCH} / N_{CS} \right\rfloor + D,$$

or

$$X_2 = N_{BWP}^{size} - 1 - RB_{BWP}^{offset} - \left\lfloor r_{PUCCH} / N_{CS} \right\rfloor + D_2,$$

wherein

$X_2$ is the second resource block index, $N_{\text{size}}$ is a number of resource blocks comprised in the first frequency range, $N_{BWP}^{size}$ is a number of resource blocks comprised in a second frequency range, the second frequency range is less than or equal to a maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the target offset parameter, $D_2$ is the second sub-offset parameter used to determine the second resource block index, and $\left\lfloor r_{PUCCH} / N_{CS} \right\rfloor$ indicates rounding down a result of $r_{PUCCH} / N_{CS}$.

7. The method according to any one of claims 1 to 6, wherein the determining, by a terminal device, a target offset parameter comprises:

   determining, by the terminal device, the target offset parameter based on a first location and a second location, wherein the first location is a location of a yth resource block index in the first frequency range, the second location is a location of a resource block whose resource block index is z and that falls within the second frequency range, y and z are non-negative integers, the first frequency range is greater than the maximum channel bandwidth supported by the terminal device, and the second frequency range is less than or equal to the maximum channel bandwidth supported by the terminal device; or
   determining, by the terminal device, the target offset parameter based on first information, wherein the first information is received by the terminal device from the network device, or
   the target offset parameter is a predefined parameter; or
   determining, by the terminal device, the target offset parameter according to a predefined rule.

8. The method according to any one of claims 1 to 7, wherein

   a value of the target offset parameter is an integer less than 0; or
   a value of the target offset parameter is an integer multiple of K, wherein K = 2, 3, or 4.

9. The method according to claim 1, wherein
   sending, by the terminal device without frequency hopping, the uplink control information on the resource associated with the resource block index.

10. The method according to any one of claims 1 to 9, wherein before the determining, by a terminal device, a target offset parameter, the method further comprises:
    determining, by the terminal device, that a subcarrier spacing S corresponding to the terminal device and a number L of symbols of an uplink control channel resource meet a first preset condition.

11. An information transmission method, comprising:

    determining, by a terminal device, a number L of symbols and/or a subcarrier spacing S that are/is used to send uplink control information; and

if L and/or S meet/meets at least one of the following conditions:

a minimum value of L is greater than or equal to 4;
a minimum value of L is determined based on S;
a value of L falls within a first value range, an uplink control channel is transmitted without frequency hopping, or the uplink control channel is transmitted with frequency hopping, and frequency tuning is not needed between two adjacent hops of transmission with frequency hopping;
a value of L falls within a second value range, an uplink control channel is transmitted with frequency hopping, and frequency tuning is needed between two adjacent hops of transmission with frequency hopping;
a value of S falls within a third value range, an uplink control channel is transmitted without frequency hopping, or the uplink control channel is transmitted with frequency hopping, and frequency tuning is not needed between two adjacent hops of transmission with frequency hopping; or
a value of S falls within a fourth value range, an uplink control channel can be transmitted with frequency hopping, and frequency tuning is needed between two adjacent hops of transmission with frequency hopping, transmitting, by the terminal device, the uplink control information.

12. An information transmission method, comprising:

sending, by a network device, first information to a terminal device, wherein the first information is used by the terminal device to determine a resource block index, and the first information further indicates a target offset parameter, an uplink control channel resource index, a physical resource block offset parameter, and a number of initial cyclic shift indexes comprised in an initial cyclic shift index set; and
receiving, by the network device on a resource associated with the resource block index, uplink control information sent by the terminal device.

13. The method according to claim 12, wherein the uplink control information is transmitted with frequency hopping; and that the first information is used by the terminal device to determine the resource block index comprises:

the first information is used by the terminal device to determine a first resource block index corresponding to a $p^{th}$ hop of transmission with frequency hopping of the uplink control information, wherein p is a positive integer; and/or
the first information is used by the terminal device to determine a second resource block index corresponding to a $q^{th}$ hop of transmission with frequency hopping of the uplink control information, wherein q is a positive integer.

14. The method according to claim 13, wherein the target offset parameter comprises a first sub-offset parameter and a second sub-offset parameter, wherein the first sub-offset parameter is used to determine the first resource block index, and the second sub-offset parameter is used to determine the second resource block index.

15. The method according to claim 13 or 14, wherein

p = 1, and q = 2; or
p = 2, and q = 1.

16. The method according to any one of claims 13 to 15, wherein the first resource block index, the target offset parameter, the uplink control channel resource index, the physical resource block offset parameter, and the number of initial cyclic shift indexes comprised in the initial cyclic shift index set satisfy the following correspondence:

$$X_1 = RB_{BWP}^{offset} + \lfloor r_{PUCCH} / N_{CS} \rfloor + D,$$

or

$$X_1 = RB_{BWP}^{offset} + \lfloor r_{PUCCH} / N_{CS} \rfloor + D_1,$$

wherein

$X_1$ is the first resource block index, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the target offset parameter, $D_1$ is the first sub-offset parameter used to determine the first resource block index, and $\lfloor r_{PUCCH} / N_{CS} \rfloor$ indicates rounding down a result of $r_{PUCCH} / N_{CS}$.

17. The method according to any one of claims 13 to 15, wherein
the second resource block index, the target offset parameter, the uplink control channel resource index, the physical resource block offset parameter, and the number of initial cyclic shift indexes comprised in the initial cyclic shift index set satisfy the following correspondence:

$$X_2 = N_{\text{size}} - 1 - RB_{BWP}^{offset} - \lfloor r_{PUCCH} / N_{CS} \rfloor + D,$$

or

$$X_2 = N_{BWP}^{size} - 1 - RB_{BWP}^{offset} - \lfloor r_{PUCCH} / N_{CS} \rfloor + D,$$

or

$$X_2 = N_{BWP}^{size} - 1 - RB_{BWP}^{offset} - \lfloor r_{PUCCH} / N_{CS} \rfloor + D_2,$$

wherein
$X_2$ is the second resource block index, $N_{\text{size}}$ is a number of resource blocks comprised in a first frequency range, the resource associated with the resource block index falls within the first frequency range, $N_{BWP}^{size}$ is a number of resource blocks comprised in a second frequency range, the second frequency range is less than or equal to a maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the target offset parameter, $D_2$ is the second sub-offset parameter used to determine the second resource block index, and $\lfloor r_{PUCCH} / N_{CS} \rfloor$ indicates rounding down a result of $r_{PUCCH} / N_{CS}$.

18. The method according to any one of claims 12 to 17, wherein that the first information indicates the target offset parameter comprises:

the first information indicates a first location and a second location, the first location and the second location are used to determine the target offset parameter, the first location is a location of a $y^{th}$ resource block index in the first frequency range, the second location is a location of a resource block whose resource block index is z and that falls within the second frequency range, y and z are non-negative integers, the first frequency range is greater than the maximum channel bandwidth supported by the terminal device, and the second frequency range is less than or equal to the maximum channel bandwidth supported by the terminal device; or
the first information comprises the target offset parameter; or
the first information comprises a predefined parameter, and the predefined parameter is used to determine the target offset parameter; or
the first information comprises a predefined rule, and the predefined rule is used to determine the target offset parameter.

19. The method according to any one of claims 12 to 18, wherein

a value of the target offset parameter is an integer less than 0; or

a value of the target offset parameter is an integer multiple of K, wherein K = 2, 3, or 4.

20. The method according to claim 12, wherein
receiving, by the network device without frequency hopping on the resource associated with the resource block index, the uplink control information sent by the terminal device.

21. The method according to any one of claims 12 to 20, wherein before the sending, by a network device, first information to a terminal device, the method further comprises:
determining, by the network device, that a subcarrier spacing S corresponding to the terminal device and a number L of symbols of an uplink control channel resource meet a first preset condition.

22. An information transmission method, comprising:

determining, by a network device, a number L of symbols and/or a subcarrier spacing S that are/is used by a terminal device to send uplink control information; and
if L and/or S meet/meets at least one of the following conditions:

a minimum value of L is greater than or equal to 4;
a minimum value of L is determined based on S;
a value of L falls within a first value range, an uplink control channel is transmitted without frequency hopping, or the uplink control channel is transmitted with frequency hopping, and frequency tuning is not needed between two adjacent hops of transmission with frequency hopping;
a value of L falls within a second value range, an uplink control channel is transmitted with frequency hopping, and frequency tuning is needed between two adjacent hops of transmission with frequency hopping;
a value of S falls within a third value range, an uplink control channel is transmitted without frequency hopping, or the uplink control channel is transmitted with frequency hopping, and frequency tuning is not needed between two adjacent hops of transmission with frequency hopping; or
a value of S falls within a fourth value range, an uplink control channel can be transmitted with frequency hopping, and frequency tuning is needed between two adjacent hops of transmission with frequency hopping,
receiving, by the network device, the uplink control information sent by the terminal device.

23. An information transmission apparatus, comprising:

a processing unit, configured to determine, by using a terminal device, a target offset parameter, an uplink control channel resource index, a physical resource block offset parameter, and a number of initial cyclic shift indexes comprised in an initial cyclic shift index set, wherein
the processing unit is further configured to determine, by using the terminal device, a resource block index based on the target offset parameter, the uplink control channel resource index, the physical resource block offset parameter, and the number of initial cyclic shift indexes comprised in the initial cyclic shift index set; and
a transceiver unit, configured to send, by using the terminal device on a resource associated with the resource block index, uplink control information to a network device.

24. The apparatus according to claim 23, wherein the uplink control information is transmitted with frequency hopping, and

the processing unit is further configured to determine, by using the terminal device based on the target offset parameter, the uplink control channel resource index, the physical resource block offset parameter, and the number of initial cyclic shift indexes comprised in the initial cyclic shift index set, a first resource block index corresponding to a $p^{th}$ hop of transmission with frequency hopping of the uplink control information, wherein p is a positive integer; and/or
the processing unit is further configured to determine, by using the terminal device based on the target offset parameter, the uplink control channel resource index, the physical resource block offset parameter, the number of initial cyclic shift indexes comprised in the initial cyclic shift index set, and a first frequency range, a second resource block index corresponding to a $q^{th}$ hop of transmission with frequency hopping of the uplink control channel data, wherein q is a positive integer, and the resource associated with the resource block index falls within the first frequency range.

25. The apparatus according to claim 24, wherein the target offset parameter comprises a first sub-offset parameter and a second sub-offset parameter; and

the processing unit is further configured to determine, by using the terminal device, the first resource block index based on the first sub-offset parameter; and/or

the processing unit is further configured to determine, by using the terminal device, the second resource block index based on the second sub-offset parameter.

26. The apparatus according to claim 24 or 25, wherein
the processing unit is further configured to determine the first resource block index based on the following correspondence among the target offset parameter, the uplink control channel resource index, the physical resource block offset parameter, and the number of initial cyclic shift indexes comprised in the initial cyclic shift index set:

$$X_1 = RB_{BWP}^{offset} + \lfloor r_{PUCCH} / N_{CS} \rfloor + D,$$

or

$$X_1 = RB_{BWP}^{offset} + \lfloor r_{PUCCH} / N_{CS} \rfloor + D_1,$$

wherein

$X_1$ is the first resource block index, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the target offset parameter, $D_1$ is the first sub-offset parameter used to determine the first resource block index, and $\lfloor r_{PUCCH} / N_{CS} \rfloor$ indicates rounding down a result of $r_{PUCCH} / N_{CS}$.

27. The apparatus according to claim 24 or 25, wherein
the processing unit is further configured to determine the second resource block index based on the following correspondence among the target offset parameter, the uplink control channel resource index, the physical resource block offset parameter, and the number of initial cyclic shift indexes comprised in the initial cyclic shift index set:

$$X_2 = N_{size} - 1 - RB_{BWP}^{offset} - \lfloor r_{PUCCH} / N_{CS} \rfloor + D,$$

or

$$X_2 = N_{BWP}^{size} - 1 - RB_{BWP}^{offset} - \lfloor r_{PUCCH} / N_{CS} \rfloor + D,$$

or

$$X_2 = N_{BWP}^{size} - 1 - RB_{BWP}^{offset} - \lfloor r_{PUCCH} / N_{CS} \rfloor + D_2,$$

wherein

$X_2$ is the second resource block index, $N_{size}$ is a number of resource blocks comprised in the first frequency range, $N_{BWP}^{size}$ is a number of resource blocks comprised in a second frequency range, the second frequency range is less than or equal to a maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the target offset parameter, $D_2$ is the second sub-offset parameter used to determine the second resource block index, and $\lfloor r_{PUCCH} / N_{CS} \rfloor$ indicates rounding down a result of $r_{PUCCH} / N_{CS}$.

**28.** The apparatus according to any one of claims 23 to 27, wherein that the processing unit is configured to determine, by using the terminal device, the target offset parameter comprises:

the processing unit is configured to determine, by using the terminal device, the target offset parameter based on a first location and a second location, wherein the first location is a location of a $y^{th}$ resource block index in the first frequency range, the second location is a location of a resource block whose resource block index is z and that falls within the second frequency range, y and z are non-negative integers, the first frequency range is greater than the maximum channel bandwidth supported by the terminal device, and the second frequency range is less than or equal to the maximum channel bandwidth supported by the terminal device; or

the transceiver unit is further configured to receive, by using the terminal device, first information from the network device; and

the processing unit is configured to determine, by using the terminal device, the target offset parameter based on the first information; or

the processing unit is configured to determine, by using the terminal device, the target offset parameter based on a predefined parameter; or

the processing unit is configured to determine, by using the terminal device, the target offset parameter according to a predefined rule.

**29.** The apparatus according to claim 23, wherein

the processing unit is further configured to send, by using the terminal device without frequency hopping, the uplink control information on the resource associated with the resource block index.

**30.** The apparatus according to any one of claims 23 to 29, wherein before the processing unit is configured to determine, by using the terminal device, the target offset parameter,

the processing unit is further configured to determine, by using the terminal device, that a subcarrier spacing S corresponding to the terminal device and a number L of symbols of an uplink control channel resource meet a first preset condition.

**31.** An information transmission apparatus, comprising:

a processing unit, configured to determine, by using a terminal device, a number L of symbols and/or a subcarrier spacing S that are/is used to send uplink control information, wherein

the processing unit is further configured to determine that L and/or S meet/meets at least one of the following conditions:

a minimum value of L is greater than or equal to 4;

a minimum value of L is determined based on S;

a value of L falls within a first value range, an uplink control channel is transmitted without frequency hopping, or the uplink control channel is transmitted with frequency hopping, and frequency tuning is not needed between two adjacent hops of transmission with frequency hopping;

a value of L falls within a second value range, an uplink control channel is transmitted with frequency hopping, and frequency tuning is needed between two adjacent hops of transmission with frequency hopping;

a value of S falls within a third value range, an uplink control channel is transmitted without frequency hopping, or the uplink control channel is transmitted with frequency hopping, and frequency tuning is not needed between two adjacent hops of transmission with frequency hopping; or

a value of S falls within a fourth value range, an uplink control channel can be transmitted with frequency hopping, and frequency tuning is needed between two adjacent hops of transmission with frequency hopping; and

a transceiver unit, configured to transmit, by using the terminal device, the uplink control information.

**32.** An information transmission apparatus, comprising:

a transceiver unit, configured to send, by using a network device, first information to a terminal device, wherein the first information is used by the terminal device to determine a resource block index, and the first information further indicates a target offset parameter, an uplink control channel resource index, a physical resource block offset parameter, and a number of initial cyclic shift indexes comprised in an initial cyclic shift index set; and the transceiver unit is further configured to receive, by using the network device on a resource associated with the resource block index, uplink control information sent by the terminal device.

33. The apparatus according to claim 32, wherein the uplink control information is transmitted with frequency hopping; and that the first information is used by the terminal device to determine the resource block index comprises:

the first information is used by the terminal device to determine a first resource block index corresponding to a p$^{th}$ hop of transmission with frequency hopping of the uplink control information, wherein p is a positive integer; and/or
the first information is used by the terminal device to determine a second resource block index corresponding to a q$^{th}$ hop of transmission with frequency hopping of the uplink control information, wherein q is a positive integer.

34. The apparatus according to claim 33, wherein the target offset parameter comprises a first sub-offset parameter and a second sub-offset parameter, wherein the first sub-offset parameter is used to determine the first resource block index, and the second sub-offset parameter is used to determine the second resource block index.

35. The apparatus according to claim 33 or 34, wherein

p = 1, and q = 2; or
p = 2, and q = 1.

36. The apparatus according to any one of claims 33 to 35, wherein
the first resource block index, the target offset parameter, the uplink control channel resource index, the physical resource block offset parameter, and the number of initial cyclic shift indexes comprised in the initial cyclic shift index set satisfy the following correspondence:

$$X_1 = RB_{BWP}^{offset} + \left\lfloor r_{PUCCH} / N_{CS} \right\rfloor + D,$$

or

$$X_1 = RB_{BWP}^{offset} + \left\lfloor r_{PUCCH} / N_{CS} \right\rfloor + D_1,$$

wherein

$X_1$ is the first resource block index, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the target offset parameter, $D_1$ is the first sub-offset parameter used to determine the first resource block index, and $\left\lfloor r_{PUCCH} / N_{CS} \right\rfloor$ indicates rounding down a result of $r_{PUCCH} / N_{CS}$.

37. The apparatus according to any one of claims 33 to 35, wherein
the second resource block index, the target offset parameter, the uplink control channel resource index, the physical resource block offset parameter, and the number of initial cyclic shift indexes comprised in the initial cyclic shift index set satisfy the following correspondence:

$$X_2 = N_{size} - 1 - RB_{BWP}^{offset} - \left\lfloor r_{PUCCH} / N_{CS} \right\rfloor + D,$$

or

$$X_2 = N_{BWP}^{size} - 1 - RB_{BWP}^{offset} - \left\lfloor r_{PUCCH} / N_{CS} \right\rfloor + D,$$

or

$$X_2 = N_{BWP}^{size} - 1 - RB_{BWP}^{offset} - \left\lfloor r_{PUCCH} / N_{CS} \right\rfloor + D_2,$$

wherein

$X_2$ is the second resource block index, $N_{size}$ is a number of resource blocks comprised in a first frequency range, the resource associated with the resource block index falls within the first frequency range, $N_{BWP}^{size}$ is a number of resource blocks comprised in a second frequency range, the second frequency range is less than or equal to a maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the target offset parameter, $D_2$ is the second sub-offset parameter used to determine the second resource block index, and $\lfloor r_{PUCCH} / N_{CS} \rfloor$ indicates rounding down a result of $r_{PUCCH} / N_{CS}$.

38. The apparatus according to any one of claims 32 to 37, wherein that the first information indicates the target offset parameter comprises:

the first information indicates a first location and a second location, the first location and the second location are used to determine the target offset parameter, the first location is a location of a $y^{th}$ resource block index in the first frequency range, the second location is a location of a resource block whose resource block index is z and that falls within the second frequency range, y and z are non-negative integers, the first frequency range is greater than the maximum channel bandwidth supported by the terminal device, and the second frequency range is less than or equal to the maximum channel bandwidth supported by the terminal device; or
the first information comprises the target offset parameter; or
the first information comprises a predefined parameter, and the predefined parameter is used to determine the target offset parameter; or
the first information comprises a predefined rule, and the predefined rule is used to determine the target offset parameter.

39. The apparatus according to any one of claims 32 to 38, wherein

a value of the target offset parameter is an integer less than 0; or
a value of the target offset parameter is an integer multiple of K, wherein K = 2, 3, or 4.

40. The apparatus according to claim 32, wherein
the transceiver unit is further configured to receive, by using the network device without frequency hopping on the resource associated with the resource block index, the uplink control information sent by the terminal device.

41. The apparatus according to any one of claims 32 to 40, wherein the apparatus further comprises a processing unit, wherein

before the transceiver unit is configured to send, by using the network device, the first information to the terminal device,
the processing unit is configured to determine, by using the network device, that a subcarrier spacing S corresponding to the terminal device and a number L of symbols of an uplink control channel resource meet a first preset condition.

42. An information transmission apparatus, comprising:

a processing unit, configured to determine, by using a network device, a number L of symbols and/or a subcarrier spacing S that are/is used by a terminal device to send uplink control information, wherein
the processing unit is further configured to determine, by using the network device, that L and/or S meet/meets at least one of the following conditions:

a minimum value of L is greater than or equal to 4;
a minimum value of L is determined based on S;
a value of L falls within a first value range, an uplink control channel is transmitted without frequency hopping, or the uplink control channel is transmitted with frequency hopping, and frequency tuning is not needed between two adjacent hops of transmission with frequency hopping;

a value of L falls within a second value range, an uplink control channel is transmitted with frequency hopping, and frequency tuning is needed between two adjacent hops of transmission with frequency hopping; a value of S falls within a third value range, an uplink control channel is transmitted without frequency hopping, or the uplink control channel is transmitted with frequency hopping, and frequency tuning is not needed between two adjacent hops of transmission with frequency hopping; or a value of S falls within a fourth value range, an uplink control channel can be transmitted with frequency hopping, and frequency tuning is needed between two adjacent hops of transmission with frequency hopping; and

a transceiver unit, configured to receive, by using the network device, the uplink control information sent by the terminal device.

43. A computer-readable storage medium, wherein the computer-readable storage medium stores a computer program, and when the computer program is run, an apparatus is enabled to perform the method according to any one of claims 1 to 10, or

an apparatus is enabled to perform the method according to claim 11, or
an apparatus is enabled to perform the method according to any one of claims 12 to 21, or
an apparatus is enabled to perform the method according to claim 22.

44. A computer program product, comprising a computer program, wherein when the computer program is run on a computer, the method according to any one of claims 1 to 10 is performed, or the method according to claim 11 is performed, or the method according to any one of claims 12 to 21 is performed, or the method according to claim 22 is performed.

45. A communication apparatus, comprising:

a memory, configured to store a computer program; and
a processor, configured to execute the computer program stored in the memory, so that the communication apparatus performs the method according to any one of claims 1 to 10, or
the communication apparatus performs the method according to claim 11, or
the communication apparatus performs the method according to any one of claims 12 to 21, or
the communication apparatus performs the communication method according to claim 22.

**Amended claims under Art. 19.1 PCT**

1. An information transmission method, comprising:

determining, by a terminal device, a first offset parameter, an uplink control channel resource index, a physical resource block offset parameter, and a number of initial cyclic shift indexes comprised in an initial cyclic shift index set;
determining, by the terminal device, a physical resource block index based on the first offset parameter, the uplink control channel resource index, the physical resource block offset parameter, and the number of initial cyclic shift indexes comprised in the initial cyclic shift index set; and
sending, by the terminal device on a resource associated with the physical resource block index, uplink control information to a network device.

2. The method according to claim 1, wherein the uplink control information is transmitted with frequency hopping; and the determining, by the terminal device, a physical resource block index comprises:

determining, by the terminal device based on the first offset parameter, the uplink control channel resource index, the physical resource block offset parameter, and the number of initial cyclic shift indexes comprised in the initial cyclic shift index set, a first physical resource block index corresponding to a $p^{th}$ hop of transmission with frequency hopping of the uplink control information, wherein p is a positive integer; and/or
determining, by the terminal device based on the first offset parameter, the uplink control channel resource index, the physical resource block offset parameter, the number of initial cyclic shift indexes comprised in the initial cyclic shift index set, and a first frequency range, a second physical resource block index corresponding to a $q^{th}$ hop of transmission with frequency hopping of the uplink control channel data, wherein q is a positive integer, and the resource associated with the physical resource block index falls within the first frequency range.

3. The method according to claim 2, wherein the first offset parameter comprises a first sub-offset parameter and a second sub-offset parameter, wherein the first sub-offset parameter is used to determine the first physical resource block index, and the second sub-offset parameter is used to determine the second physical resource block index.

4. The method according to claim 2 or 3, wherein

   p = 1, and q = 2; or
   p = 2, and q = 1.

5. The method according to claim 1, wherein
   the physical resource block index, the first offset parameter, the uplink control channel resource index, the physical resource block offset parameter, and the number of initial cyclic shift indexes comprised in the initial cyclic shift index set satisfy the following correspondence:

$$X_1 = RB_{BWP}^{offset} + \left\lfloor r_{PUCCH} / N_{CS} \right\rfloor + D$$

, wherein $X_1$ is the physical resource block index, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the first offset parameter, and $\left\lfloor r_{PUCCH} / N_{CS} \right\rfloor$ indicates rounding down a result of $r_{PUCCH} / N_{CS}$.

6. The method according to claim 1, wherein
   the physical resource block index, the first offset parameter, the uplink control channel resource index, the physical resource block offset parameter, and the number of initial cyclic shift indexes comprised in the initial cyclic shift index set satisfy the following correspondence:

$$X_2 = N_{BWP}^{size} - 1 - RB_{BWP}^{offset} - \left\lfloor r_{PUCCH} / N_{CS} \right\rfloor + D,$$

wherein

$X_2$ is the physical resource block index, $N_{BWP}^{size}$ is a number of resource blocks comprised in a second frequency range, the second frequency range is less than or equal to a maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the first offset parameter, and $\left\lfloor r_{PUCCH} / N_{CS} \right\rfloor$ indicates rounding down a result of $r_{PUCCH} / N_{CS}$.

7. The method according to any one of claims 1 to 6, wherein the determining, by a terminal device, a first offset parameter comprises:

   determining, by the terminal device, the first offset parameter based on a first location and a second location, wherein the first location is a location of a $y^{th}$ physical resource block index in the first frequency range, the second location is a location of a resource block whose physical resource block index is z and that falls within the second frequency range, y and z are non-negative integers, the first frequency range is greater than the maximum channel bandwidth supported by the terminal device, and the second frequency range is less than or equal to the maximum channel bandwidth supported by the terminal device; or
   determining, by the terminal device, the first offset parameter based on first information, wherein the first information is received by the terminal device from the network device, or
   the first offset parameter is a predefined parameter; or
   determining, by the terminal device, the first offset parameter according to a predefined rule.

8. The method according to any one of claims 1 to 7, wherein

a value of the first offset parameter is an integer less than 0; or

a value of the first offset parameter is an integer multiple of K, wherein K = 2 or 3.

9. The method according to claim 1, wherein

sending, by the terminal device without frequency hopping, the uplink control information on the resource associated with the physical resource block index.

10. The method according to any one of claims 1 to 9, wherein before the determining, by a terminal device, a first offset parameter, the method further comprises:

determining, by the terminal device, that a subcarrier spacing S corresponding to the terminal device and a number L of symbols of an uplink control channel resource meet a first preset condition.

11. An information transmission method, comprising:

determining, by a terminal device, a number L of symbols and/or a subcarrier spacing S that are/is used to send uplink control information; and

if L and/or S meet/meets at least one of the following conditions:

a minimum value of L is greater than or equal to 4;

a minimum value of L is determined based on S;

a value of L falls within a first value range, an uplink control channel is transmitted without frequency hopping, or the uplink control channel is transmitted with frequency hopping, and frequency tuning is not needed between two adjacent hops of transmission with frequency hopping;

a value of L falls within a second value range, an uplink control channel is transmitted with frequency hopping, and frequency tuning is needed between two adjacent hops of transmission with frequency hopping;

a value of S falls within a third value range, an uplink control channel is transmitted without frequency hopping, or the uplink control channel is transmitted with frequency hopping, and frequency tuning is not needed between two adjacent hops of transmission with frequency hopping; or

a value of S falls within a fourth value range, an uplink control channel can be transmitted with frequency hopping, and frequency tuning is needed between two adjacent hops of transmission with frequency hopping; and

transmitting, by the terminal device, the uplink control information.

12. An information transmission method, comprising:

sending, by a network device, first information to a terminal device, wherein the first information is used by the terminal device to determine a physical resource block index, and the first information further indicates a first offset parameter, an uplink control channel resource index, a physical resource block offset parameter, and a number of initial cyclic shift indexes comprised in an initial cyclic shift index set; and

receiving, by the network device on a resource associated with the physical resource block index, uplink control information sent by the terminal device.

13. The method according to claim 12, wherein the uplink control information is transmitted with frequency hopping; and that the first information is used by the terminal device to determine the physical resource block index comprises:

the first information is used by the terminal device to determine a first physical resource block index corresponding to a $p^{th}$ hop of transmission with frequency hopping of the uplink control information, wherein p is a positive integer; and/or

the first information is used by the terminal device to determine a second physical resource block index corresponding to a $q^{th}$ hop of transmission with frequency hopping of the uplink control information, wherein q is a positive integer.

14. The method according to claim 13, wherein the first offset parameter comprises a first sub-offset parameter and a second sub-offset parameter, wherein the first sub-offset parameter is used to determine the first physical resource block index, and the second sub-offset parameter is used to determine the second physical resource block index.

15. The method according to claim 13 or 14, wherein

p = 1, and q = 2; or
p = 2, and q = 1.

16. The method according to claim 12, wherein

the physical resource block index, the first offset parameter, the uplink control channel resource index, the physical resource block offset parameter, and the number of initial cyclic shift indexes comprised in the initial cyclic shift index set satisfy the following correspondence:

$$X_1 = RB_{BWP}^{offset} + \lfloor r_{PUCCH} / N_{CS} \rfloor + D$$

, wherein X is the physical resource block index, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, D is the first offset parameter, and $\lfloor r_{PUCCH} / N_{CS} \rfloor$ indicates rounding down a result of $r_{PUCCH} / N_{CS}$.

17. The method according to claim 12, wherein

the physical resource block index, the first offset parameter, the uplink control channel resource index, the physical resource block offset parameter, and the number of initial cyclic shift indexes comprised in the initial cyclic shift index set satisfy the following correspondence:

$$X_2 = N_{BWP}^{size} - 1 - RB_{BWP}^{offset} - \lfloor r_{PUCCH} / N_{CS} \rfloor + D,$$

wherein
$X_2$ is the physical resource block index, the resource associated with the physical resource block index falls within a first frequency range, $N_{BWP}^{size}$ is a number of resource blocks comprised in a second frequency range, the second frequency range is less than or equal to a maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, D is the first offset parameter, and $\lfloor r_{PUCCH} / N_{CS} \rfloor$ indicates rounding down a result of $r_{PUCCH} / N_{CS}$.

18. The method according to any one of claims 12 to 17, wherein that the first information indicates the first offset parameter comprises:

the first information indicates a first location and a second location, the first location and the second location are used to determine the first offset parameter, the first location is a location of a y$^{th}$ physical resource block index in the first frequency range, the second location is a location of a resource block whose physical resource block index is z and that falls within the second frequency range, y and z are non-negative integers, the first frequency range is greater than the maximum channel bandwidth supported by the terminal device, and the second frequency range is less than or equal to the maximum channel bandwidth supported by the terminal device; or
the first information comprises the first offset parameter; or
the first information comprises a predefined parameter, and the predefined parameter is used to determine the first offset parameter; or
the first information comprises a predefined rule, and the predefined rule is used to determine the first offset parameter.

19. The method according to any one of claims 12 to 18, wherein

a value of the first offset parameter is an integer less than 0; or
a value of the first offset parameter is an integer multiple of K, wherein K = 2 or 3.

20. The method according to claim 12, wherein

receiving, by the network device without frequency hopping on the resource associated with the physical resource block index, the uplink control information sent by the terminal device.

21. The method according to any one of claims 12 to 20, wherein before the sending, by a network device, first information to a terminal device, the method further comprises:
determining, by the network device, that a subcarrier spacing S corresponding to the terminal device and a number L of symbols of an uplink control channel resource meet a first preset condition.

22. An information transmission method, comprising:

determining, by a network device, a number L of symbols and/or a subcarrier spacing S that are/is used by a terminal device to send uplink control information; and
if L and/or S meet/meets at least one of the following conditions:

a minimum value of L is greater than or equal to 4;
a minimum value of L is determined based on S;
a value of L falls within a first value range, an uplink control channel is transmitted without frequency hopping, or the uplink control channel is transmitted with frequency hopping, and frequency tuning is not needed between two adjacent hops of transmission with frequency hopping;
a value of L falls within a second value range, an uplink control channel is transmitted with frequency hopping, and frequency tuning is needed between two adjacent hops of transmission with frequency hopping;
a value of S falls within a third value range, an uplink control channel is transmitted without frequency hopping, or the uplink control channel is transmitted with frequency hopping, and frequency tuning is not needed between two adjacent hops of transmission with frequency hopping; or
a value of S falls within a fourth value range, an uplink control channel can be transmitted with frequency hopping, and frequency tuning is needed between two adjacent hops of transmission with frequency hopping; and
receiving, by the network device, the uplink control information sent by the terminal device.

23. An information transmission apparatus, comprising:

a processing unit, configured to determine, by using a terminal device, a first offset parameter, an uplink control channel resource index, a physical resource block offset parameter, and a number of initial cyclic shift indexes comprised in an initial cyclic shift index set, wherein
the processing unit is further configured to determine, by using the terminal device, a physical resource block index based on the first offset parameter, the uplink control channel resource index, the physical resource block offset parameter, and the number of initial cyclic shift indexes comprised in the initial cyclic shift index set; and
a transceiver unit, configured to send, by using the terminal device on a resource associated with the physical resource block index, uplink control information to a network device.

24. The apparatus according to claim 23, wherein the uplink control information is transmitted with frequency hopping, and

the processing unit is further configured to determine, by using the terminal device based on the first offset parameter, the uplink control channel resource index, the physical resource block offset parameter, and the number of initial cyclic shift indexes comprised in the initial cyclic shift index set, a first physical resource block index corresponding to a $p^{th}$ hop of transmission with frequency hopping of the uplink control information, wherein p is a positive integer; and/or
the processing unit is further configured to determine, by using the terminal device based on the first offset parameter, the uplink control channel resource index, the physical resource block offset parameter, the number of initial cyclic shift indexes comprised in the initial cyclic shift index set, and a first frequency range, a second physical resource block index corresponding to a $q^{th}$ hop of transmission with frequency hopping of the uplink control channel data, wherein q is a positive integer, and the resource associated with the physical resource block index falls within the first frequency range.

25. The apparatus according to claim 24, wherein the first offset parameter comprises a first sub-offset parameter and a second sub-offset parameter; and

the processing unit is further configured to determine, by using the terminal device, the first physical resource block index based on the first sub-offset parameter; and/or

the processing unit is further configured to determine, by using the terminal device, the second physical resource block index based on the second sub-offset parameter.

26. The apparatus according to claim 23, wherein
   the processing unit is further configured to determine the physical resource block index based on the following correspondence among the first offset parameter, the uplink control channel resource index, the physical resource block offset parameter, and the number of initial cyclic shift indexes comprised in the initial cyclic shift index set:

$$X_1 = RB_{BWP}^{offset} + \lfloor r_{PUCCH} / N_{CS} \rfloor + D,$$

wherein

$X_1$ is the physical resource block index, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the first offset parameter, and $\lfloor r_{PUCCH} / N_{CS} \rfloor$ indicates rounding down a result of $r_{PUCCH} / N_{CS}$.

27. The apparatus according to claim 23, wherein
   the processing unit is further configured to determine the physical resource block index based on the following correspondence among the first offset parameter, the uplink control channel resource index, the physical resource block offset parameter, and the number of initial cyclic shift indexes comprised in the initial cyclic shift index set:

$$X_2 = N_{BWP}^{size} - 1 - RB_{BWP}^{offset} - \lfloor r_{PUCCH} / N_{CS} \rfloor + D,$$

wherein

$X_2$ is the physical resource block index, $N_{BWP}^{size}$ is a number of resource blocks comprised in a second frequency range, the second frequency range is less than or equal to a maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the first offset parameter, and $\lfloor r_{PUCCH} / N_{CS} \rfloor$ indicates rounding down a result of $r_{PUCCH} / N_{CS}$.

28. The apparatus according to any one of claims 23 to 27, wherein that the processing unit is configured to determine, by using the terminal device, the first offset parameter comprises:

   the processing unit is configured to determine, by using the terminal device, the first offset parameter based on a first location and a second location, wherein the first location is a location of a $y^{th}$ physical resource block index in the first frequency range, the second location is a location of a resource block whose physical resource block index is z and that falls within the second frequency range, y and z are non-negative integers, the first frequency range is greater than the maximum channel bandwidth supported by the terminal device, and the second frequency range is less than or equal to the maximum channel bandwidth supported by the terminal device; or
   the transceiver unit is further configured to receive, by using the terminal device, first information from the network device; and
   the processing unit is configured to determine, by using the terminal device, the first offset parameter based on the first information; or
   the processing unit is configured to determine, by using the terminal device, the first offset parameter based on a predefined parameter; or
   the processing unit is configured to determine, by using the terminal device, the first offset parameter according to a predefined rule.

29. The apparatus according to claim 23, wherein

the processing unit is further configured to send, by using the terminal device without frequency hopping, the uplink control information on the resource associated with the physical resource block index.

30. The apparatus according to any one of claims 23 to 29, wherein before the processing unit is configured to determine, by using the terminal device, the first offset parameter,
the processing unit is further configured to determine, by using the terminal device, that a subcarrier spacing S corresponding to the terminal device and a number L of symbols of an uplink control channel resource meet a first preset condition.

31. An information transmission apparatus, comprising:

a processing unit, configured to determine, by using a terminal device, a number L of symbols and/or a subcarrier spacing S that are/is used to send uplink control information, wherein
the processing unit is further configured to determine that L and/or S meet/meets at least one of the following conditions:

a minimum value of L is greater than or equal to 4;
a minimum value of L is determined based on S;
a value of L falls within a first value range, an uplink control channel is transmitted without frequency hopping, or the uplink control channel is transmitted with frequency hopping, and frequency tuning is not needed between two adjacent hops of transmission with frequency hopping;
a value of L falls within a second value range, an uplink control channel is transmitted with frequency hopping, and frequency tuning is needed between two adjacent hops of transmission with frequency hopping;
a value of S falls within a third value range, an uplink control channel is transmitted without frequency hopping, or the uplink control channel is transmitted with frequency hopping, and frequency tuning is not needed between two adjacent hops of transmission with frequency hopping; or
a value of S falls within a fourth value range, an uplink control channel can be transmitted with frequency hopping, and frequency tuning is needed between two adjacent hops of transmission with frequency hopping; and
a transceiver unit, configured to transmit, by using the terminal device, the uplink control information.

32. An information transmission apparatus, comprising:

a transceiver unit, configured to send, by using a network device, first information to a terminal device, wherein the first information is used by the terminal device to determine a physical resource block index, and the first information further indicates a first offset parameter, an uplink control channel resource index, a physical resource block offset parameter, and a number of initial cyclic shift indexes comprised in an initial cyclic shift index set; and
the transceiver unit is further configured to receive, by using the network device on a resource associated with the physical resource block index, uplink control information sent by the terminal device.

33. The apparatus according to claim 32, wherein the uplink control information is transmitted with frequency hopping; and that the first information is used by the terminal device to determine the physical resource block index comprises:

the first information is used by the terminal device to determine a first physical resource block index corresponding to a $p^{th}$ hop of transmission with frequency hopping of the uplink control information, wherein p is a positive integer; and/or
the first information is used by the terminal device to determine a second physical resource block index corresponding to a $q^{th}$ hop of transmission with frequency hopping of the uplink control information, wherein q is a positive integer.

34. The apparatus according to claim 33, wherein the first offset parameter comprises a first sub-offset parameter and a second sub-offset parameter, wherein the first sub-offset parameter is used to determine the first physical resource block index, and the second sub-offset parameter is used to determine the second physical resource block index.

35. The apparatus according to claim 33 or 34, wherein

p = 1, and q = 2; or
p = 2, and q = 1.

36. The apparatus according to claim 32, wherein
the physical resource block index, the first offset parameter, the uplink control channel resource index, the physical resource block offset parameter, and the number of initial cyclic shift indexes comprised in the initial cyclic shift index set satisfy the following correspondence: $X_1 = RB_{BWP}^{offset} + \lfloor r_{PUCCH} / N_{CS} \rfloor + D$

, wherein $X_1$ is the physical resource block index, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the first offset parameter, and $\lfloor r_{PUCCH} / N_{CS} \rfloor$ indicates rounding down a result of $r_{PUCCH} / N_{CS}$.

37. The apparatus according to claim 32, wherein
the physical resource block index, the first offset parameter, the uplink control channel resource index, the physical resource block offset parameter, and the number of initial cyclic shift indexes comprised in the initial cyclic shift index set satisfy the following correspondence:

$X_2 = N_{BWP}^{size} - 1 - RB_{BWP}^{offset} - \lfloor r_{PUCCH} / N_{CS} \rfloor + D$ , wherein $X_2$ is the physical resource block index, the resource associated with the physical resource block index falls within a first frequency range, $N_{BWP}^{size}$ is a number of resource blocks comprised in a second frequency range, the second frequency range is less than or equal to a maximum channel bandwidth supported by the terminal device, $RB_{BWP}^{offset}$ is the physical resource block offset parameter, $r_{PUCCH}$ is the uplink control channel resource index, $N_{CS}$ is the number of initial cyclic shift indexes comprised in the initial cyclic shift index set, $D$ is the first offset parameter, and $\lfloor r_{PUCCH} / N_{CS} \rfloor$ indicates rounding down a result of $r_{PUCCH} / N_{CS}$.

38. The apparatus according to any one of claims 32 to 37, wherein that the first information indicates the first offset parameter comprises:

the first information indicates a first location and a second location, the first location and the second location are used to determine the first offset parameter, the first location is a location of a $y^{th}$ physical resource block index in the first frequency range, the second location is a location of a resource block whose physical resource block index is z and that falls within the second frequency range, y and z are non-negative integers, the first frequency range is greater than the maximum channel bandwidth supported by the terminal device, and the second frequency range is less than or equal to the maximum channel bandwidth supported by the terminal device; or
the first information comprises the first offset parameter; or
the first information comprises a predefined parameter, and the predefined parameter is used to determine the first offset parameter; or
the first information comprises a predefined rule, and the predefined rule is used to determine the first offset parameter.

39. The apparatus according to any one of claims 32 to 38, wherein

a value of the first offset parameter is an integer less than 0; or
a value of the first offset parameter is an integer multiple of K, wherein K = 2 or 3.

40. The apparatus according to claim 32, wherein
the transceiver unit is further configured to receive, by using the network device without frequency hopping on the resource associated with the physical resource block index, the uplink control information sent by the terminal device.

41. The apparatus according to any one of claims 32 to 40, wherein the apparatus further comprises a processing unit, wherein

before the transceiver unit is configured to send, by using the network device, the first information to the terminal device,

the processing unit is configured to determine, by using the network device, that a subcarrier spacing S corresponding to the terminal device and a number L of symbols of an uplink control channel resource meet a first preset condition.

42. An information transmission apparatus, comprising:

a processing unit, configured to determine, by using a network device, a number L of symbols and/or a subcarrier spacing S that are/is used by a terminal device to send uplink control information, wherein the processing unit is further configured to determine, by using the network device, that L and/or S meet/meets at least one of the following conditions:

a minimum value of L is greater than or equal to 4;
a minimum value of L is determined based on S;
a value of L falls within a first value range, an uplink control channel is transmitted without frequency hopping, or the uplink control channel is transmitted with frequency hopping, and frequency tuning is not needed between two adjacent hops of transmission with frequency hopping;
a value of L falls within a second value range, an uplink control channel is transmitted with frequency hopping, and frequency tuning is needed between two adjacent hops of transmission with frequency hopping;
a value of S falls within a third value range, an uplink control channel is transmitted without frequency hopping, or the uplink control channel is transmitted with frequency hopping, and frequency tuning is not needed between two adjacent hops of transmission with frequency hopping; or
a value of S falls within a fourth value range, an uplink control channel can be transmitted with frequency hopping, and frequency tuning is needed between two adjacent hops of transmission with frequency hopping; and

a transceiver unit, configured to receive, by using the network device, the uplink control information sent by the terminal device.

43. A computer-readable storage medium, wherein the computer-readable storage medium stores a computer program, and when the computer program is run, an apparatus is enabled to perform the method according to any one of claims 1 to 10, or

an apparatus is enabled to perform the method according to claim 11, or
an apparatus is enabled to perform the method according to any one of claims 12 to 21, or
an apparatus is enabled to perform the method according to claim 22.

44. A computer program product, comprising a computer program, wherein when the computer program is run on a computer, the method according to any one of claims 1 to 10 is performed, or the method according to claim 11 is performed, or the method according to any one of claims 12 to 21 is performed, or the method according to claim 22 is performed.

45. A communication apparatus, comprising:

a memory, configured to store a computer program; and
a processor, configured to execute the computer program stored in the memory, so that the communication apparatus performs the method according to any one of claims 1 to 10, or
the communication apparatus performs the method according to claim 11, or
the communication apparatus performs the method according to any one of claims 12 to 21, or
the communication apparatus performs the communication method according to claim 22.

FIG. 1

FIG. 2

FIG. 3

BWP of a terminal device #2

Frequency domain resource #1

BWP of a terminal device #1

Second hop of PUCCH resource
First hop of PUCCH resource

Frequency domain resource #2

Carrier

Frequency domain resource #3

FIG. 4

200

| A terminal device determines a target offset parameter, an uplink control channel resource index, a physical resource block offset parameter, and a number of initial cyclic shift indexes included in an initial cyclic shift index set | S201 |

| The terminal device determines, based on the target offset parameter, the uplink control channel resource index, the physical resource block offset parameter, and the number of initial cyclic shift indexes included in the initial cyclic shift index set, a resource block index for uplink control channel transmission | S202 |

| The terminal device sends uplink control information on a resource associated with the resource block index | S203 |

FIG. 5

300

Resource #b2

$D_2$

First
frequency
range

Second
frequency
range

Resource #a2

Resource #a1

$D_1$

First offset $Z_1$

Resource #b1

(a)

Second
frequency range

Resource #a2

Resource #a1

$D_2$

Resource #b2

First
frequency
range

$D_1$

First offset $Z_1$

Resource #b1

(b)

Resource #b2

First
frequency
range

$D_2$

Resource #b1

Second
frequency range

$D_1$

Resource #a2

Resource #a1

First offset $Z_1$

(c)　FIG. 6

400

First
frequency
range

Second offset
parameter

Resource #b2

Resource #b22

Resource #b11

Second offset
parameter

Resource #b1

FIG. 7

500

Resource #b2

Fourth offset
parameter

First
frequency
range

Second
frequency
range

Resource #a1    Resource #a2

Third offset
parameter

Resource #b1

(a)

Second
frequency range

Resource #a1    Resource #a2

Fourth offset parameter

Resource #b2

First
frequency
range

Third offset
parameter

Resource #b1

(b)

Resource #b2

First
frequency
range

Fourth offset
parameter

Resource #b1

Second
frequency
range

Third offset
parameter

Resource #a2
Resource #a1

(c)    FIG. 8

600

Information transmission apparatus 600

Processing unit 610

Transceiver unit 620

FIG. 9

700

Information transmission apparatus 700

Processor 710

Memory 720

Communication interface 730

FIG. 10

800

800

810

Input/Output
interface

820

Logic circuit

FIG. 11

## INTERNATIONAL SEARCH REPORT

<table>
<tr><td colspan="2"></td><td>International application No.<br><br>**PCT/CN2022/089614**</td></tr>
</table>

<table>
<tr><td colspan="3">**A.**     **CLASSIFICATION OF SUBJECT MATTER**<br>     H04W 72/04(2009.01)i<br><br>According to International Patent Classification (IPC) or to both national classification and IPC</td></tr>
<tr><td colspan="3">**B.**      **FIELDS SEARCHED**</td></tr>
<tr><td colspan="3">Minimum documentation searched (classification system followed by classification symbols)<br>     H04W72/-</td></tr>
<tr><td colspan="3">Documentation searched other than minimum documentation to the extent that such documents are included in the fields searched<br><br></td></tr>
<tr><td colspan="3">Electronic data base consulted during the international search (name of data base and, where practicable, search terms used)<br>     CNABS; CNTXT; VEN; USTXT; EPTXT; WOTXT; DWPI; 3GPP; CNKI; IEEE: 上行控制信息, 物理资源块, 索引, 碎片, 偏移, 循环移位, 资源, 调度, 符号, 数量, 个数, 频率调谐, 重新调节, 跳频, NR, PUCCH, DCI, UCI, HARQ, PRB, BWP, frequency, tun+, hop+, UE, symbol?, number, set, offset, initial, CS, index+, subcarrier spacing, numerology</td></tr>
</table>

**C.**      **DOCUMENTS CONSIDERED TO BE RELEVANT**

| Category* | Citation of document, with indication, where appropriate, of the relevant passages | Relevant to claim No. |
|---|---|---|
| X | CN 110999098 A (QUALCOMM INC.) 10 April 2020 (2020-04-10)<br>description, paragraphs 0008, 0061, and 0062 | 11, 22, 31, 42-45 |
| Y | CN 110999098 A (QUALCOMM INC.) 10 April 2020 (2020-04-10)<br>description, paragraphs 0008, 0061, and 0062 | 11, 22, 31, 42-45 |
| Y | VIVO. "Design of long-PUCCH for UCI of up to 2 bits"<br>*3GPP TSG RAN WG1 Meeting NR#3, R1-1715638,* 21 September 2017 (2017-09-21),<br>text, sections 2 and 3 | 11, 22, 31, 42-45 |
| Y | US 2021029731 A1 (INTEL CORPORATION) 28 January 2021 (2021-01-28)<br>description, paragraphs 0026-0039, 0059, and 0084-0085 | 1-10, 12-21, 23-30, 32-41, 43-45 |
| Y | CN 112205047 A (NTT DOCOMO, INC.) 08 January 2021 (2021-01-08)<br>claims 1 and 5, and description, paragraphs 0008-0016, 0058, and 0166 | 1-10, 12-21, 23-30, 32-41, 43-45 |
| A | CN 108400850 A (HUAWEI TECHNOLOGIES CO., LTD.) 14 August 2018 (2018-08-14)<br>entire document | 1-45 |
| A | CN 108924932 A (HUAWEI TECHNOLOGIES CO., LTD.) 30 November 2018 (2018-11-30)<br>entire document | 1-45 |

☑ Further documents are listed in the continuation of Box C.      ☑ See patent family annex.

| | |
|---|---|
| \*    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br><br>**08 July 2022** | Date of mailing of the international search report<br><br>**27 July 2022** |
|---|---|
| Name and mailing address of the ISA/CN<br><br>**China National Intellectual Property Administration (ISA/CN)**<br>**No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/089614** |

**C. DOCUMENTS CONSIDERED TO BE RELEVANT**

| Category* | Citation of document, with indication, where appropriate, of the relevant passages | Relevant to claim No. |
|---|---|---|
| A | CN 111357358 A (NEC CORP.) 30 June 2020 (2020-06-30)<br>entire document | 1-45 |
| A | US 2021105764 A1 (QUALCOMM INC.) 08 April 2021 (2021-04-08)<br>entire document | 1-45 |

Form PCT/ISA/210 (second sheet) (January 2015)

**INTERNATIONAL SEARCH REPORT**

| International application No. |
| --- |
| **PCT/CN2022/089614** |

| Box No. III | Observations where unity of invention is lacking (Continuation of item 3 of first sheet) |
| --- | --- |

This International Searching Authority found multiple inventions in this international application, as follows:

[1] Independent claims 1, 12, 23, and 32, and independent claims 43-45 comprising the above claims respectively relate to an information transmission method and apparatus, a readable storage medium, a computer program product, and a communication apparatus. The method comprises: a terminal device determines a resource block index according to a target offset parameter, an uplink control channel resource index, a physical resource block offset parameter, and the number of initial cyclic shift indexes comprised in an initial cyclic shift index set.

[2] Independent claims 11, 22, 31, and 42, and independent claims 43-45 comprising the above claims respectively relate to an information transmission method and apparatus, a readable storage medium, a computer program product, and a communication apparatus. The method comprises: a terminal device determines the number of symbols L and/or a subcarrier interval S used for sending uplink control information, and transmits the uplink control information on the basis that the L and/or the S satisfies a corresponding condition.

[3] Although the described two groups of claims both comprise the technical features of a "terminal device", and/or a "network device", an "uplink control channel", "transmitting uplink control information", and/or a "processing unit", and a "transceiver unit", the described same technical features are all common means in the art. Therefore, the described two groups of claims do not share a same or corresponding special technical feature, do not comply with the requirement of unity of invention, and do not comply with PCT Rule 13.1.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

## INTERNATIONAL SEARCH REPORT
### Information on patent family members

| International application No. |
| --- |
| **PCT/CN2022/089614** |

| Patent document cited in search report | | | Publication date (day/month/year) | Patent family member(s) | | | Publication date (day/month/year) |
| --- | --- | --- | --- | --- | --- | --- | --- |
| CN | 110999098 | A | 10 April 2020 | US | 2019045498 | A1 | 07 February 2019 |
| | | | | WO | 2019023456 | A1 | 31 January 2019 |
| | | | | BR | 112020001682 | A2 | 21 July 2020 |
| | | | | KR | 20200034721 | A | 31 March 2020 |
| | | | | TW | 201911786 | A | 16 March 2019 |
| | | | | EP | 3659264 | A1 | 03 June 2020 |
| | | | | IN | 201947052871 | A | 31 January 2020 |
| | | | | SG | 11201911982 | A1 | 27 February 2020 |
| | | | | JP | 2020529155 | W | 01 October 2020 |
| | | | | US | 11057871 | B2 | 06 July 2021 |
| | | | | KR | 102342653 | B1 | 22 December 2021 |
| US | 2021029731 | A1 | 28 January 2021 | None | | | |
| CN | 112205047 | A | 08 January 2021 | WO | 2019187149 | A1 | 03 October 2019 |
| | | | | IN | 202037043317 | A | 04 December 2020 |
| | | | | KR | 20200139179 | A | 11 December 2020 |
| | | | | BR | 112020020124 | A2 | 26 January 2021 |
| | | | | US | 2021028907 | A1 | 28 January 2021 |
| | | | | EP | 3780795 | A1 | 17 February 2021 |
| | | | | EP | 3780795 | A4 | 24 November 2021 |
| | | | | RU | 2765426 | C1 | 31 January 2022 |
| | | | | JPWO | 2019187149 | A1 | 25 March 2021 |
| CN | 108400850 | A | 14 August 2018 | US | 2019357187 | A1 | 21 November 2019 |
| | | | | EP | 3562082 | A1 | 30 October 2019 |
| | | | | WO | 2018141177 | A1 | 09 August 2018 |
| | | | | IN | 201947029530 | A | 02 August 2019 |
| | | | | EP | 3562082 | A4 | 11 December 2019 |
| | | | | CN | 108400850 | B | 11 January 2022 |
| | | | | EP | 3562082 | B1 | 09 February 2022 |
| CN | 108924932 | A | 30 November 2018 | WO | 2019091135 | A1 | 16 May 2019 |
| | | | | CN | 109041229 | A | 18 December 2018 |
| | | | | CN | 108882376 | A | 23 November 2018 |
| CN | 111357358 | A | 30 June 2020 | WO | 2019098019 | A1 | 23 May 2019 |
| | | | | EP | 3711410 | A1 | 23 September 2020 |
| | | | | JP | 2021503240 | A | 04 February 2021 |
| | | | | GB | 201800393 | D0 | 21 February 2018 |
| | | | | GB | 201718999 | D0 | 03 January 2018 |
| | | | | US | 2020280985 | A1 | 03 September 2020 |
| US | 2021105764 | A1 | 08 April 2021 | WO | 2021067605 | A1 | 08 April 2021 |
| | | | | TW | 202123752 | A | 16 June 2021 |

Form PCT/ISA/210 (patent family annex) (January 2015)

**EP 4 175 386 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110507949